(19) Europäisches Patentamt
European Patent Office
Office européen des brevets

(11) EP 4 509 584 B1

(12) **EUROPEAN PATENT SPECIFICATION**

(45) Date of publication and mention of the grant of the patent:
**11.02.2026 Bulletin 2026/07**

(21) Application number: **24189351.0**

(22) Date of filing: **18.07.2024**

(51) International Patent Classification (IPC):
***C10M 133/38*** (2006.01) ***C10M 149/22*** (2006.01)

(52) Cooperative Patent Classification (CPC):
**C10M 167/00;** C10M 2203/1006; C10M 2203/102; C10M 2207/026; C10M 2207/046; C10M 2207/262; C10M 2209/084; C10M 2215/064; C10M 2215/223; C10M 2215/28; C10M 2217/046; C10M 2219/068; C10M 2223/045; C10N 2010/04; C10N 2020/02;
(Cont.)

(54) **FLAT OIL VISCOSITY LUBRICANT COMPOSITIONS**

SCHMIERMITTELZUSAMMENSETZUNGEN MIT FLACHER ÖLVISKOSITÄT

COMPOSITIONS LUBRIFIANTES À VISCOSITÉ D’HUILE PLATE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **20.07.2023 US 202363514687 P**

(43) Date of publication of application:
**19.02.2025 Bulletin 2025/08**

(73) Proprietor: **Infineum International Limited**
**Abingdon, Oxfordshire OX13 6BB (GB)**

(72) Inventors:
- **Rainsford, Andrew**
  **Abingdon, OX13 6BD (GB)**
- **Inagaki, Youhei**
  **Tokyo, 143-0006 (JP)**
- **NGUYEN, Nga**
  **Linden, 07036 (US)**
- **Male, Nigel Anthony**
  **Abingdon, OX13 6BD (GB)**
- **Xu, Jun**
  **Linden, 07036 (US)**
- **Shen, Xiaobo**
  **Linden, 07036 (US)**
- **Kouno, Kunihiro**
  **Kanto, 143-0006 (JP)**
- **Galbraith, Ewan**
  **Linden, 07036 (US)**
- **Featherstone, Thomas**
  **Abingdon, OX13 6BD (GB)**
- **Wright, Peter**
  **Abingdon, OX13 6BD (GB)**
- **Kodaka, Akihiro**
  **Kanta, 143-0006 (JP)**

(74) Representative: **Hart, Richard Joseph et al**
**PO Box 1, Milton Hill**
**Abingdon, Oxfordshire OX13 6BB (GB)**

(56) References cited:
**US-A1- 2018 119 048** **US-B2- 8 426 608**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
C10N 2020/04; C10N 2030/02; C10N 2030/06;
C10N 2030/54; C10N 2030/68; C10N 2040/25

## Description

## FIELD OF THE INVENTION

This disclosure relates to the use of a combination of comb copolymer viscosity modifier, capped lower molecular weight dispersants, and a combination of calcium and magnesium detergents as additives in lubricant compositions having flat viscosity properties in engine crankcase applications, especially in compression ignited engine and or spark ignited applications.

## BACKGROUND OF THE INVENTION

The present invention relates to lubricating oil compositions which exhibit improved viscosity characteristics. More specifically, the present invention relates to driveline and automotive crankcase lubricating oil compositions for use in gasoline (spark-ignited) and diesel (compression-ignited, spark assisted compression-ignited) internal combustion engines, such compositions being referred to as crankcase lubricants; and to the use of additives in such lubricating oil compositions for improving the fuel economy performance of an engine lubricated with the lubricating oil composition.

The emphasis on fuel economy has been increasing in recent years. One approach to improve the fuel economy of vehicles is to design new lower viscosity lubricant oils that reduce friction in the engine. In an attempt to improve fuel economy and optimally reduce $CO_2$ emissions, the use and stipulation of low viscosity grades by Original Equipment Manufacturers (OEM) is becoming increasingly widespread. One of the challenges for the provision of engine and/or drive train transmission oils having reduced SAE viscosity grades is maintaining the engine lubrication benefits in higher temperature use ranges. Lubricating oils tend to thin and loose Kinematic viscosity as the engine temperature rises. This is undesirable as thinning oils, among other things, provide less lubricating and protective effects in an engine designed for the thicker lubricating oil. Achieving the balance of fuel efficiency and reliability is challenging with existing low viscosity engine oils such as SAE 0W-8 grades. For example, the lower viscosity (at high temperatures) increases the amount of oil leakage in various parts of the lubrication system, resulting in lower oil pressure, and the engine hardware needs to be adapted to compensate for the leakage, which reduces the fuel economy effect.

One approach to improve the fuel economy of vehicles is to design new lubricant oils that reduce friction while maintaining "flat" viscosity over the full engine temperature use range. Such oils desirably provide good soot handling and / or provide enhanced wear protection, whilst providing desired fuel economy benefits. There is a need to provide new engine oils having lower viscosity grades that meet these requirements.

"Flat Viscosity Oils" are engine oils where the viscosity change with increasing temperature is substantially lower than that of conventional oils. Flat viscosity oils have less change across the temperature use range and thus still perform their intended lubricating function over a larger range of engine operation. A proposed method to obtain flat oils is to increase the contribution of low viscosity base oils and add high viscosity index viscosity modifier, which enables the reduction of kinematic viscosity in the low to medium temperature range while enhancing the thickening effect at the high temperature regime.

Flat viscosity engine oils will need to have improved fuel efficiency (by further reducing the viscosity in the low to medium temperature range (approximately 20 to 70 °C) and reliability (by maintaining the viscosity in the high temperature range within the range of conventional standards). See also "Research on Ultra-High Viscosity Index Engine Oil Part 1-"Flat Viscosity' Concept and Contribution to Carbon Neutrality" Yamamori, K. et al. SAE Technical Paper 2022-01-0525, 2022, doi:10.4271/2022-01-0525; and "Research on Ultra-High Viscosity Index Engine Oil: Part 2 - Influence of Engine Oil Evaporation Characteristics on Oil Consumption of Internal Combustion Engines" Koyama, T. et al. SAE Technical Paper 2022-01-0524, 2022, doi: 10.4271/2022-01-0524.

Major engine manufacturers are targeting to replace their current factory fill and genuine oil for SAE 0W-8, 0W-12, 0W-16 (and potentially 0W-20) with flat viscosity engine oils by 2025. Thus, new lower SAE viscosity grade lubricating oils having a flat oil character are desired as soon as possible.

US 2021/0189281, US 2021/0179961, US 2021/0179960, US 11,384,311, US 2021/0179965, and US 11,365,273 disclose various comb copolymer viscosity modifiers and uses thereof in lubricant oil compositions.

JP2023/004932A discloses a lubricant blend containing poly methacrylate comb copolymer, GTL basestock, detergent, dispersant, antioxidant, having an HTHS150 of 2.25 to 2.54 MPa·s, a $KV_{80}$ of 8.5 to 9.5 cSt, a $KV_{60}$ of 13.0 to 14.2 cSt, and having NOACK evaporation of 15 to 25% by weight of the composition.

JP2022/120328A discloses a lubricant blend containing comb copolymer, ester basestock, having a NOACK evaporation amount of 15% to less than 25% by mass.

JP2022/022996A discloses a lubricant blend containing comb copolymer, basestock, having a NOACK evaporation amount of 15% to less than 25% by mass and a $KV_{100}$ of 6.1 to 9.3 cSt.

JP2022/022491A discloses a lubricant blend containing comb copolymer, basestock, having a NOACK evaporation amount of 25% to less than 40% by mass and a $KV_{100}$ of 2.5 to 3.5 cSt.

WO2022210065A1 discloses a lubricant blend containing comb copolymer, basestock, oxygenated synthetic oil.
WO2022201845A1 discloses a lubricant blend containing magnesium detergent and optionally borated calcium detergent present in specific ratios.

Dispersants capped with organic carbonate or similar capping agents (epoxides, lactones, hydroxyaliphatic carboxylic acids) are common technologies, for example see US publication US 2010/0160192 which describes succinimide dispersants that are subjected to a two-step post-treatment; the succinimide is first reacted with a phthalic anhydride or a naphthalic anhydride to produce an initial post-treated succinimide, which is then reacted with a cyclic carbonate to form a final post-treated succinimide in which at least one basic nitrogen remains.

Likewise, US Patent No. 8,901,050 describes a method for improving copper corrosion performance of a lubricating oil composition by using a dispersant mixture including a borated bis succinimide, an ethylene carbonate post-treated bis succinimide, and a polysuccinimide copolymer-based dispersant, together with a silane-based corrosion inhibitor.

US Patent No. 10,407,640 is directed to a marine diesel cylinder lubricating oil composition comprising (a) a major amount of a Group II base stock oil of lubricating viscosity, and (b) a non-borated, post-treated polybutene bis-succinimide dispersant present in an amount of from about 1.5 to about 8.0 wt. %, on an active basis, based on the total weight of the marine diesel cylinder lubricating oil composition, wherein the polybutene substituent is derived from a polybutene group having a number average molecular weight of from about 1500 to about 2500, the marine diesel cylinder lubricating oil composition has a TBN of about 5 to about 20, and further wherein the non-borated, post treated polybutene bis-succinimide is a cyclic carbonate (e.g., ethylene carbonate) post-treated polybutene bis-succinimide dispersant.

Other references of interest include: J. Bartz, Additive für Schmierstoffe [Additives for Lubricants], Expert-Verlag, Renningen-Malmsheim 1994, pages 197-252); U.S. Patent 3,702,300; US Patent No. 8,324,139; US Patent No. 8,455,568; US Patent No. 8,901,050; US Patent No. 8,927,469; US Patent No. 10,179,886; US Patent No. 8,927,469; US Patent No. 10,407,640; US Patent No. 10,174,272;; US Patent No. 8,927,469; US Patent No. 10,179,886; and US Patent No. 11,390,825; US Patent Publications US 2010/0160192; and US 2018/0334635; European Patent Office publications EP 0 969 077; EP 0 637 332, EP 0 937 769, and EP 0 979 834. US-A-2018/119048 relates to a method for improving fuel efficiency and friction properties, while maintaining or improving deposit control, in an engine lubricated with a lubricant composition.

It has now surprisingly been found by the present inventors that certain comb copolymers used in combination with capped dispersants can be used in a lubricant composition, such as in internal combustion engines, to provide desirable flat viscosity oil characteristics in addition to improved fuel economy and or wear properties.

The present disclosure also provides a use of capped low viscosity dispersant in combination with comb copolymer viscosity modifier according to the present disclosure to provide fuel efficient lubricant compositions having flat oil viscosity characteristics according to the present disclosure.

## SUMMARY OF THE INVENTION

This invention relates to a lubricating oil composition as defined in the appended claims.
This disclosure relates to a lubricating oil composition comprising or resulting from the admixing of:

(i) at least 50 mass%, based upon the weight of the lubricating oil composition, of base oil,
(ii) at least one capped dispersant having number average molecular weight (Mn) of less than 1600 g/mol, preferably where the capped dispersant is represented by the following formula:

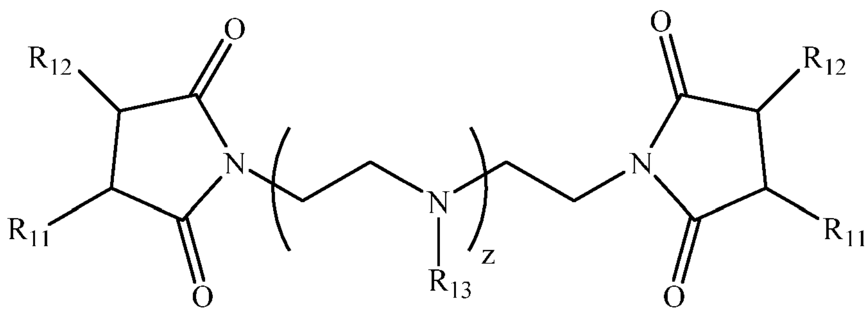

wherein each $R_{11}$ and $R_{12}$ may individually be hydrogen or a hydrocarbyl group, provided that $R_{11}$ and $R_{12}$ connected to the same succinimide ring are not both hydrogen; z may be an integer from 0 to 10; and each $R_{13}$ may individually be an acetyl group, or wherein two proximate $R_{13}$ groups connected to different nitrogen atoms may connect together;
(iii ) at least one magnesium containing detergent,

(iv) at least one calcium containing detergent,
(v) at least one copolymer viscosity modifier that, when combined with group III base oil having a kinematic viscosity ($Kv_{100}$, ASTM D445) of about 4 cSt and a viscosity index (VI, ASTM D2270) of about 120, so as to obtain a $KV_{100}$ of about 8 cSt, has:

1) a ratio of relative KV140/relative KV20 of 1.9 or more (such as 2.1 or more);
2) a ratio of relative KV100/relative KV70 or 1.30 or more (such as 1.35 or more); and
3) a viscosity index (ASTM 2270D) of 320 or more (such as 340 or more).

This invention further relates to a lubricating oil composition comprising or resulting from the admixing of:

(i) at least 50 mass%, based upon the weight of the lubricating oil composition, of base oil,
(ii) at least one capped dispersant having number average molecular weight (Mn) of less than 1600 g/mol, preferably where the capped dispersant is represented by the following formula:

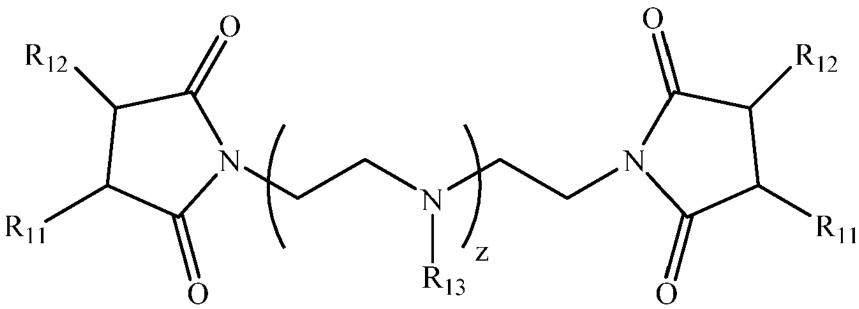

wherein each $R_{11}$ and $R_{12}$ may individually be hydrogen or a hydrocarbyl group, provided that $R_{11}$ and $R_{12}$ connected to the same succinimide ring are not both hydrogen; z may be an integer from 0 to 10, such as from 1 to 8; and each $R_{13}$ may individually be an acetyl group, or wherein two proximate $R_{13}$ groups connected to different nitrogen atoms may connect together, e.g., using an ethylene bridge to form a piperazinyl group;
(iii) at least one magnesium containing detergent,
(iv) at least one calcium containing detergent,
(v) at least one comb copolymer viscosity modifier comprising the reaction product of at least the following monomers:

(a) a hydrogenated polybutadiene-based (alk)acrylate ester macromonomer;
(b) a $C_3$-$C_8$ alkyl (alk)acrylate ester monomer;
(c) a $C_{12}$-$C_{24}$ alkyl (alk)acrylate ester monomer; and
(d) a $C_1$-$C_{18}$ alkyl-endcapped or $C_6$-$C_{20}$ aryl-, aralkyl-, or alkaryl- endcapped $C_2$-$C_6$ oxyalkyl or $C_2$-$C_6$ oligo(alkylene glycol)-based (alk)acrylate ester monomer and/or hydroxyalkyl or H-endcapped oligo(alkylene glycol)-based (alk)acrylate monomer having the following structure (II):

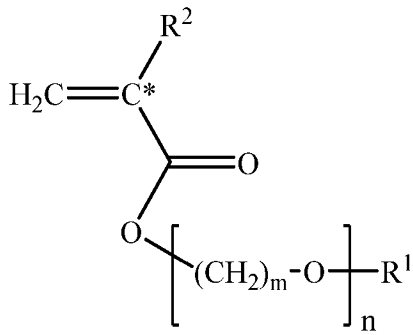
(II)

in which $R^2$ represents hydrogen or $C_1$-$C_2$ alkyl, m is from 2 to 6, such that $-(CH_2)_m-$ represents a linear, branched, and/or cyclic alkyl group between oxygens, n is from 1 to 10, and $R^1$ represents H, a $C_1$-$C_{18}$ linear, branched, and/or cyclic alkyl endcap or a $C_6$-$C_{20}$ aryl, aralkyl, or alkaryl endcap,
wherein the combination of (c) and (d) collectively comprise more than 20.0 wt% of repeat units of the comb copolymer viscosity modifier, based upon the weight of all the repeat units in the copolymer;

vi) optionally, a metal alkylthiophosphate where the alky group is derived from at least one secondary alcohols (such as zinc dialkyl dithio phosphate, where the alkyl groups are at least partially (such fully) derived from secondary alcohols or mixtures of primary and secondary alochols, such as compounds represent by the formula $Zn[SP(S)(OR_1)(OR_2)]_2$ where $R_1$ and $R_2$ are $C_1$-$C_{18}$ alkyl groups, preferably at least one, such both, $R_1$ and $R_2$ are secondary $C_2$-$C_{12}$ alkyl groups);

wherein the lubricating oil composition preferably has:

a) a volatility, as measured by the Noack test (ASTM D5800, procedure B), of less than or equal to 30 mass % (such as less than or equal to 25 mass %, such as less than or equal to 20 mass %, such as less than or equal to 16 mass %, such as 15 to mass 25%, such as 15 to 30 mass%, such as 19 to 28 mass%) based on the total mass of the lubricating composition; and or
b) a ratio of calcium from the detergents to magnesium from the detergents of 10:1 to 2:1, (such as 10:1 to 3:1, such as 8:1 to 4:1, such as about 6:1 to about 5:1); and or
c) a total soap content of less than 30 mmol (such as less than 25 mmol, such as less than 20 mmol, such as less than 16 mmol, such as less than 10 mmol, such as less than 8 mmol, such as less than 7 mmol, such from 0.5 to 10 mmol, such as from 1 to 8 mmol, such as 2 to 7 mmol).

According to another aspect of the present disclosure, there is provided the use of the lubricating oil composition described above for providing flat oil viscosity properties to a lower viscosity (such as SAE 0W-20, 0W-16, 0W-12, 0W-8) lubricating oil composition.

According to another aspectof the present disclosure, there is provided a lubricating oil composition comprising a first PIBSA-PAM dispersant composition derived from a first polyamine and a first PIB having a number average molecular weight of 1200 to 1400 g/mol (such as 1250 to 1350 g/mol, such as about 1300 g/mol), having a viscosity (Pa.s) of at least about 30 % less (such as 35% less) at a shear rate of 100 $sec^{-1}$ and a viscosity (Pa.s) of at least about 55% less (such as at least 65% less) at a shear rate of 10 $sec^{-1}$ **(Haake Carbon Black Test** - 9 wt% carbon black, 1 to $10s^{-1}$ and 10 to 1000 $s^{-1}$ shear rate ranges) than the same lubricating oil composition except that the first PIBSA-PAM composition is replaced by a physical mixture of two distinct PIBSA-PAM dispersants based on second and third polyamines that are identical to each other and to the first polyamine and on second and third PIB polymers having number average molecular weights of 800 to 1000 g/mol and 2100 to 2400 g/mol, respectively, wherein the amounts of the two distinct PIBSA-PAM dispersants are selected such that the number average molecular weight of the weighted average of the number average molecular weights of the combined second and third PIBs is approximately equal to the number average molecular weight of the first PIB. The second and third PIB's may show a unimodal or multi-modal (such as bi-modal) distribution of PIB species (such as in a gel permeation chromatograph).

According to another aspect of the present disclosure, there is provided a capped (such as an ethylene carbonate capped) dispersant having a number average molecular weight (Mn), and or derived from a polymer (such as polyisobutylene) having an Mn, of less than 1600 g/mol or less, such as from 800 to 1500, such as from 900 to 1450 g/mol, such as from 1000 to 1400 g/mol, such as from 1100 to 1400 g/mol, such as from 1200 to 1400 g/mol, such as about 1300 g/mol). The capped dispersant may be ethylene carbonate capped 1200 to 1400 g/mol PIBSA-PAM, such as Mn 1300 Mn PIBSA-PAM. The capped dispersant may be an ethylene carbonate capped PIBSA PAM composition derived from a polyamine and a PIB having a number average molecular weight of 1200 to 1400 g/mol (such as 1250 to 1350 g/mol, such as about 1300 g/mol).

According to another aspect of the present disclosure, there is provided a polymethacrylate comb copolymer viscosity modifier made by polymerization of comprising at least the following monomers:

(a) a hydrogenated polybutadiene-based (alk)acrylate ester macromonomer;
(b) a $C_3$-$C_8$ alkyl (alk)acrylate ester monomer (such as butyl methacrylate);
(c) a $C_{12}$-$C_{24}$ alkyl (alk)acrylate ester monomer (such as lauryl methacrylate);
and
(d) a $C_6$-$C_{20}$ aryl-, aralkyl-, or alkaryl- endcapped $C_2$-$C_6$ oxyalkyl or $C_2$-$C_6$ oligo(alkylene glycol)-based (alk)acrylate ester monomer having the following structure (II):

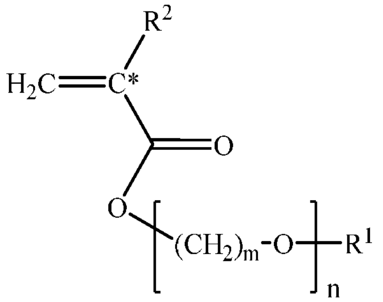

(II)

in which $R^2$ represents hydrogen or $C_1$-$C_2$ alkyl, m is from 2 to 6, such that $-(CH_2)_m-$ represents a linear, branched, and/or cyclic alkyl group between oxygens, n is from 1 to 10, and $R^1$ represents a $C_6$-$C_{20}$ aryl, aralkyl, or alkaryl endcap,

wherein:

1) the (c) $C_{12}$-$C_{24}$ alkyl (alk)acrylate ester monomer repeat units are present at 16 to less than 21 wt% (such as 16.5 to less than 20.0 wt%, such as 17 to less than 19.5 wt%), based upon the weight of all the repeat units in the copolymer,
2) the (d) $C_6$-$C_{20}$ aryl-, aralkyl-, or alkaryl- endcapped $C_2$-$C_6$ oxyalkyl or $C_2$-$C_6$ oligo(alkylene glycol)-based (alk) acrylate ester monomer repeat units are present at 3 to 7 wt%, based upon the weight of all the repeat units in the copolymer, and
3) the combination of (c) and (d) collectively comprise more than 20.0 wt% of repeat units of the comb copolymer viscosity modifier, based upon the weight of all the repeat units in the copolymer.

According to another aspect of the present disclosure, there is provided a polymethacrylate comb copolymer viscosity modifier having:

1) a ratio of relative KV140/relative KV20 of 1.9 or more (such as 2.1 or more);
2) a ratio of relative KV100/relative KV70 or 1.30 or more (such as 1.35 or more); and
3) a viscosity index (ASTM D 2270) of 320 or more (such as 340 or more).

Typically, the group III base oil having a VI of 120 and $Kv_{100}$ of 4 cSt also has a $Kv_{140}$ of 2 cSt, a $Kv_{20}$ of 44 cSt, and a $Kv_{70}$ of 19 cSt (all kinematic viscosities determined according to ASTM D445).

According to another aspect of the present invention, there is provided a concentrate comprising:

(i) less than 50 mass%, based upon the weight of the lubricating oil composition, of base oil,
(ii) at least one capped dispersant having number average molecular weight (Mn) of less than 1600 g/mol, preferably where the capped dispersant is represented by the following formula:

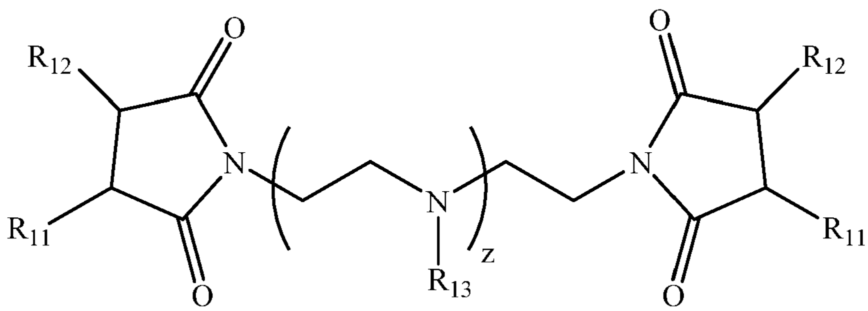

wherein each $R_{11}$ and $R_{12}$ may individually be hydrogen or a hydrocarbyl group, provided that $R_{11}$ and $R_{12}$ connected to the same succinimide ring are not both hydrogen; z may be an integer from 0 to 10, such as from 1 to 8; and each $R_{13}$ may individually be an acetyl group, or wherein two proximate $R_{13}$ groups connected to different nitrogen atoms may connect together, e.g., using an ethylene bridge to form a piperazinyl group;
(iii ) at least one magnesium containing detergent and at least one calcium containing detergent where the calcium from detergent to magnesium from detergent ratio is 10:1 to 2:1, (such as 10:1 to 3:1, such as 8:1 to 4:1, such as about 6:1 to about 5:1); and

(iv) at least one comb copolymer viscosity modifier comprising the reaction product of at least the following monomers:

(a) a hydrogenated polybutadiene-based (alk)acrylate ester macromonomer;
(b) a $C_3$-$C_8$ alkyl (alk)acrylate ester monomer;
(c) a $C_{12}$-$C_{24}$ alkyl (alk)acrylate ester monomer;
(d) a $C_1$-$C_{18}$ alkyl-endcapped or $C_6$-$C_{20}$ aryl-, aralkyl-, or alkaryl- endcapped $C_2$-$C_6$ oxyalkyl or $C_2$-$C_6$ oligo(alkylene glycol)-based (alk)acrylate ester monomer and/or hydroxyalkyl or H-endcapped oligo(alkylene glycol)-based (alk)acrylate monomer having the following structure (II):

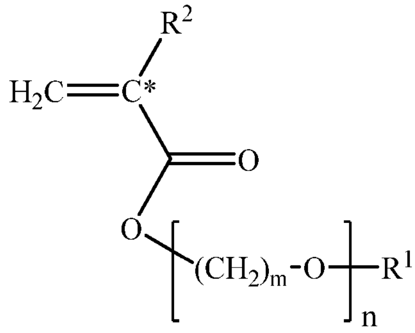
(II)

in which $R^2$ represents hydrogen or $C_1$-$C_2$ alkyl, m is from 2 to 6, such that $-(CH_2)_m-$ represents a linear, branched, and/or cyclic alkyl group between oxygens, n is from 1 to 10, and $R^1$ represents H, a $C_1$-$C_{18}$ linear, branched, and/or cyclic alkyl endcap or a $C_6$-$C_{20}$ aryl, aralkyl, or alkaryl endcap,
wherein the combination of (c) and (d) collectively comprise more than 20.0 wt% of repeat units of the comb copolymer viscosity modifier, based upon the weight of all the repeat units in the copolymer;

(v) optionally, a metal alkylthiophosphate where the alky group is derived from at least one secondary alcohols (such as zinc dialkyl dithio phosphate, where the alkyl groups are at least partially (such fully) derived from secondary alcohols or mixtures of primary and secondary alochols, such as compounds represent by the formula $Zn[SP(S)(OR_1)(OR_2)]_2$ where $R_1$ and $R_2$ are $C_1$-$C_{18}$ alkyl groups, preferably at least one, such both, $R_1$ and $R_2$ are secondary $C_2$-$C_{12}$ alkyl groups);
(vi) optionally, a molybendum containing compound (such as dimeric or trimeric MoDTC), and
(vii) optionally, an antioxidant (such as an aminic antioxidant).

According to yet a further aspect, there is provided the use of the lubricating oil composition described above for providing increased fuel economy e.g., more than a 10 % (such as 15% or more, such as 20% or more) difference in FEI (fuel economy improvement) as compared to the Toyota 0W-8 GLV-1 lubricating oil comprising introducing a lubricating oil composition as described herein into an internal combustion engine, and operating said engine.

## BRIEF DESCRIPTION OF THE DRAWINGS

Figure 1 (Fig. 1) is graph of the data in Table 2.
Figure 2 (Fig. 2) is a graph of the data in Table 9.
Figure 3 (Fig. 3) is a graph of the relative viscosity data in Table X.
Figure 4 (Fig. 4) is a graph of Kv40 vs. m%N for selected PIBSA-PAM's in Table A.
Figure 5 (Fig. 5) is a graph of the soot handling properties of selected blends from Table A2.

## DEFINITIONS

For purposes of this specification and all claims to this invention, the following words and expressions, if and when used, have the meanings ascribed below.
For purposes herein, the new numbering scheme for the Periodic Table of the Elements is used as set out in CHEMICAL AND ENGINEERING NEWS, 63(5), 27 (1985), *i.e.,* **Alkali metals** are group 1 metals (*e.g.,* Li, Na, K, etc.) and **Alkaline earth metals** are group 2 metals (*e.g.,* Mg, Ca, Ba, etc.).
The term **"comprising"** or any cognate word specifies the presence of stated features, steps, or integers or

components, but does not preclude the presence or addition of one or more other features, steps, integers, components or groups thereof.

The expressions **"consists of"** or **"consists essentially of"** or cognates may be embraced within "comprises" or cognates, wherein "consists essentially of" permits inclusion of substances not materially affecting the characteristics of the composition to which it applies.

The term **"LOC"** means lubricating oil composition.

The term **"major amount"** means more than 50 mass % of a composition, such as more than 60 mass % of a composition, such as more than 70 mass % of a composition, such as from 80 to 99.009 mass % of a composition, such as from 80 to 99.9 from 80 to 99.009 mass % of a composition, of a composition based upon the mass of the composition.

The term **"minor amount"** means 50 mass % or less of a composition; such as 40 mass % or less of a composition; such as 30 mass % or less of a composition, such as from 20 to 0.001 mass %, such as from 20 to 0.1 mass %, based upon the mass of the composition.

The term **"mass** %" means mass percent of a component, based upon the mass of the composition as measured in grams, unless otherwise indicated, and is alternately referred to as weight percent ("weight %", "wt %", "wt. %" or "% w/w").

The term **"active ingredient"** (also referred to as "a.i." or "A.I.") refers to additive material that is neither diluent nor solvent. Unless otherwise indicated, amounts herein are described as active ingredient.

The terms **"oil-soluble"** and **"oil-dispersible,"** or cognate terms, used herein do not necessarily indicate that the compounds or additives are soluble, dissolvable, miscible, or are capable of being suspended in the oil in all proportions. These do mean, however, that they are, for example, soluble or stably dispersible in oil to an extent sufficient to exert their intended effect in the environment in which the oil is employed. Moreover, the additional incorporation of other additives may also permit incorporation of higher levels of a particular additive, if desired.

The terms **"group"** and **"radical"** are used interchangeably herein.

The term **"hydrocarbon"** means a compound of hydrogen and carbon atoms. A "heteroatom" is an atom other than carbon or hydrogen. When referred to as "hydrocarbons," particularly as "refined hydrocarbons," the hydrocarbons may also contain one or more heteroatoms or heteroatom-containing groups (such as halo, especially chloro and fluoro, amino, alkoxyl, mercapto, alkylmercapto, nitro, nitroso, sulfoxy, etc.) in minor amounts (*e.g.*, where the heteroatom(s) do not substantially alter the hydrocarbon properties of the hydrocarbon compound).

The term **"hydrocarbyl"** means a radical that contains hydrogen and carbon atoms. Preferably, the group consists essentially of, more preferably consists only of, hydrogen and carbon atoms, unless specified otherwise. Preferably, the hydrocarbyl group comprises an aliphatic hydrocarbyl group. The term "hydrocarbyl" includes "alkyl," "alkenyl," "alkynyl," and "aryl" as defined herein. Hydrocarbyl groups may contain one or more atoms/groups other than carbon and hydrogen provided they do not affect the essentially hydrocarbyl nature of the hydrocarbyl group. Those skilled in the art will be aware of such atoms/groups (*e.g.*, halo, especially chloro and fluoro, amino, alkoxyl, mercapto, alkylmercapto, nitro, nitroso, sulfoxy, etc.).

The term **"alkyl"** means a radical of carbon and hydrogen (such as a $C_1$ to $C_{30}$, such as a $C_1$ to $C_{12}$ group). Alkyl groups in a compound are typically bonded to the compound directly via a carbon atom. Unless otherwise specified, alkyl groups may be linear (*i.e.,* unbranched) or branched, be cyclic, acyclic, or part cyclic/acyclic. Preferably, the alkyl group comprises a linear or branched acyclic alkyl group. Representative examples of alkyl groups include, but are not limited to, methyl, ethyl, n-propyl, iso-propyl, n-butyl, sec-butyl, iso-butyl, tert-butyl, n-pentyl, iso-pentyl, neo-pentyl, hexyl, heptyl, octyl, dimethyl hexyl, nonyl, decyl, undecyl, dodecyl, tridecyl, tetradecyl, pentadecyl, hexadecyl, heptadecyl, octadecyl, nonadecyl, icosyl and triacontyl.

The term **"alkenyl"** means a radical of carbon and hydrogen (such as a $C_2$ to $C_{30}$ radical, such as a $C_2$ to $C_{12}$ radical) having at least one double bond. Alkenyl groups in a compound are typically bonded to the compound directly via a carbon atom. Unless otherwise specified, alkenyl groups may be linear (*i.e.,* unbranched) or branched, be cyclic, acyclic or part cyclic/acyclic.

The term **"alkylene"** means a $C_1$ to $C_{20}$, preferably a $C_1$ to $C_{10}$, bivalent saturated aliphatic radical, which may be linear or branched. Representative examples of alkylene include methylene, ethylene, propylene, butylene, pentylene, hexylene, heptylene, octylene, nonylene, decylene, 1-methyl ethylene, 1-ethyl ethylene, 1-ethyl-2-methyl ethylene, 1,1-dimethyl ethylene and 1-ethyl propylene.

An **"olefin",** alternatively referred to as **"alkene,"** is a linear, branched, or cyclic compound of carbon and hydrogen having at least one double bond. For purposes of this specification and the claims appended thereto, when a polymer or copolymer is referred to as comprising an monomer (such as an olefin), the mer unit present in such polymer or copolymer is the polymerized form of the monomer. For example, when a copolymer is said to have an "isoprene" content of 55 wt % to 95 wt %, it is understood that the mer unit in the copolymer is derived from isoprene in the polymerization reaction and said derived units are present at 55 wt % to 95 wt %, based upon the weight of the copolymer. A **"polymer"** has two or more of the same or different mer units. A **"homopolymer"** is a polymer having mer units that are the same. A **"copolymer"** is a polymer having two or more mer units that are different from each other. "Different" as used to refer to mer

units indicates that the mer units differ from each other by at least one atom or are different isomerically. An "isoprene polymer" or "isoprene copolymer" is a polymer or copolymer comprising at least 50 mol % isoprene derived units, a "butadiene polymer" or "butadiene copolymer" is a polymer or copolymer comprising at least 50 mol % butadiene derived units, and so on. Likewise, when a polymer is referred to as a "partially or fully saturated polymer comprising $C_{4-5}$ olefins," the $C_{4-5}$ olefin(s) present in such polymer or copolymer are the polymerized form of the olefin(s), and the polymer has been partially or fully saturated (such as by hydrogenation) after polymerization of the monomers.

The term **"alkynyl"** means a $C_2$ to $C_{30}$ (such as a $C_2$ to $C_{12}$) radical, which includes at least one carbon-to-carbon triple bond.

The term **"aryl"** means a group containing at least one aromatic ring, such a cyclopentadiene, phenyl, naphthyl, anthracenyl, and the like. Aryl groups are typically $C_5$ to $C_{40}$ (such as $C_5$ to $C_{18}$, such as $C_6$ to $C_{14}$) aryl groups, optionally substituted by one or more hydrocarbyl groups, heteroatoms, or heteroatom-containing groups (such as halo, hydroxyl, alkoxy and amino groups). Preferred aryl groups include phenyl and naphthyl groups and substituted derivatives thereof, especially phenyl, and alkyl substituted derivatives of phenyl.

The term **"substituted"** means that a hydrogen atom has been replaced with hydrocarbon group, a heteroatom, or a heteroatom-containing group. An alkyl substituted derivative means a hydrogen atom has been replaced with an alkyl group. An "alkyl substituted phenyl" is a phenyl group where a hydrogen atom has been replaced by an alkyl group, such as a $C_1$ to $C_{20}$ alkyl group, such as methyl, ethyl, n-propyl, iso-propyl, n-butyl, sec-butyl, iso-butyl, tert-butyl, n-pentyl, iso-pentyl, neo-pentyl, hexyl, heptyl, octyl, dimethyl hexyl, nonyl, decyl, undecyl, dodecyl, tridecyl, tetradecyl, pentadecyl, hexadecyl, heptadecyl, octadecyl, nonadecyl, icosyl and/or triacontyl.

The term **"halogen"** or **"halo"** means a group 17 atom or a radical of group 17 atom, such as fluoro, chloro, bromo, and iodo.

The term **"ashless"** in relation to an additive means the composition does not include a metal.

The term **"ash-containing"** in relation to an additive means the composition includes a metal.

The term **"effective amount"** in respect of an additive means an amount of such an additive in a lubricating oil composition so that the additive provides the desired technical effect.

The term **"effective minor amount"** in respect of an additive means an amount of such an additive of less than 50 mass % of the lubricating oil composition so that the additive provides the desired technical effect.

The term **"effective major amount"** in respect of an additive means an amount of such an additive of 50 mass % or more of the lubricating oil composition so that the additive provides the desired technical effect.

The term **"ppm"** means parts per million by mass, based on the total mass of the lubricating oil composition, unless otherwise indicated.

The term **"metal content"** of a lubricating oil composition or of an additive component, for example, magnesium content, molybdenum content or total metal content (*i.e.,* the sum of all individual metal contents), is measured by ASTM D5185.

The term **"aliphatic hydrocarbyl fatty acid"** means a monocarboxylic acid having an aliphatic $C_7$ to $C_{29}$, preferably a $C_9$ to $C_{27}$, most preferably a $C_{11}$ to $C_{23}$ hydrocarbyl chain. Such compounds may be referred to herein as aliphatic ($C_7$ to $C_{29}$), more preferably ($C_9$ to $C_{27}$), most preferably ($C_{11}$ to $C_{23}$), hydrocarbyl monocarboxylic acid(s) or hydrocarbyl fatty acid(s) (wherein Cx to Cy designates the total number of carbon atoms in the aliphatic hydrocarbyl chain of the fatty acid, the fatty acid itself due to the presence of the carboxyl carbon atom includes a total of Cx+1 to Cy+1 carbon atoms). Preferably, the aliphatic hydrocarbyl fatty acid, inclusive of the carboxyl carbon atom, has an even number of carbon atoms. The aliphatic hydrocarbyl chain of the fatty acid may be saturated or unsaturated (*i.e.,* includes at least one carbon-to-carbon double bond); preferably, the aliphatic hydrocarbyl chain is unsaturated and includes at least one carbon-to-carbon double bond - such fatty acids may be obtained from natural sources (*e.g.*, derived from animal or vegetable oils) and/or by reduction of the corresponding saturated fatty acid. It will be appreciated that a proportion of the aliphatic hydrocarbyl chain(s) of the corresponding aliphatic hydrocarbyl fatty acid ester(s) is unsaturated (*i.e.,* includes at least one carbon-to-carbon double bond) to permit reaction with other agents, such as sulfur, to form the corresponding functionalized, such as sulfurized, aliphatic hydrocarbyl fatty acid ester(s).

The term **"aliphatic hydrocarbyl fatty acid ester"** means an ester obtainable by converting the monocarboxylic acid functional group of the corresponding aliphatic hydrocarbyl fatty acid into an ester group. Suitably, the monocarboxylic acid functional group of the aliphatic hydrocarbyl fatty acid is converted to a hydrocarbyl ester, preferably a $C_1$ to $C_{30}$ aliphatic hydrocarbyl ester, such as an alkyl ester, preferably a $C_1$ to $C_6$ alkyl ester, especially a methyl ester. Alternatively, or additionally, the monocarboxylic acid functional group of the aliphatic hydrocarbyl fatty acid may be in the form of the natural glycerol ester. Accordingly, the term "aliphatic hydrocarbyl fatty acid ester" embraces aliphatic hydrocarbyl fatty acid glycerol ester(s) and aliphatic hydrocarbyl fatty acid $C_1$ to $C_{30}$ aliphatic hydrocarbyl ester(s), [*e.g.*, aliphatic hydrocarbyl fatty acid alkyl ester(s), more preferably aliphatic hydrocarbyl fatty acid $C_1$ to $C_6$ alkyl ester(s), especially aliphatic hydrocarbyl fatty acid methyl ester(s)]. Suitably, the term "aliphatic hydrocarbyl fatty acid ester" embraces aliphatic ($C_7$ to $C_{29}$) hydrocarbyl, more preferably aliphatic ($C_9$ to $C_{27}$) hydrocarbyl, most preferably aliphatic ($C_{11}$ to $C_{23}$) hydrocarbyl fatty acid glycerol ester(s) and aliphatic ($C_7$ to $C_{29}$) hydrocarbyl, more preferably aliphatic ($C_9$ to $C_{27}$)

hydrocarbyl, most preferably aliphatic ($C_{11}$ to $C_{23}$) hydrocarbyl fatty acid $C_1$ to $C_{30}$ aliphatic hydrocarbyl ester(s). Suitably, to permit functionalization, such as sulfurization, of the aliphatic hydrocarbyl fatty acid ester(s) a proportion of the aliphatic hydrocarbyl chain(s) of the fatty acid ester(s) is unsaturated and includes at least one carbon-to-carbon double bond.

The term **"sulfurized aliphatic hydrocarbyl fatty acid ester"** means a compound obtained by sulfurizing an aliphatic hydrocarbyl fatty acid ester as defined herein.

The term **"absent"** as it relates to components included within the lubricating oil compositions described herein and the claims thereto means that the particular component is present at 0 wt %, based upon the weight of the lubricating oil composition, or if present in the lubricating oil composition the component is present at levels that do not impact the lubricating oil composition properties, such as less than 10 ppm, or less than 1 ppm or less than 0.001 ppm. When the term "absent" is used in relation to monomer reactants and/or to repeat units in (co)polymers described herein, it means present at 0 wt%, based upon the weight of all (co)monomers in the (co)polymer, or, if present at all, at levels so low that they do not substantially impact the physical properties of the (co)polymer, such as at 0.2 wt% or less or at 0.1 wt% or less.

As used herein, **Mn** is number average molecular weight, **Mw** is weight average molecular weight, and **Mz** is z average molecular weight. **Molecular weight distribution** (MWD), also referred to as **polydispersity index** (PDI), is defined to be Mw divided by Mn. Unless otherwise noted, all molecular weight units (*e.g.*, Mw, Mn, Mz) are reported in g/mol. When used in context of functionalized polymers (such as dispersants, functionalized styrenic polymers, etc.), the molecular weights are typically reported in terms of the base polymer prior to modification. For example in PIBSA-PAM dispersants, molecular weights are typically reported for the base isobutylene polymer the PIBSA-PAM is derived from prior to functionalization with the acylating agent (maleic acid or anhydride) and functional group (such as polyamine).

**Total Base Number** also referred to as "TBN," in relation to an additive component or of a lubricating oil composition (*i.e.,* unused lubricating oil composition) means total base number as measured by ASTM D2896 and reported in units of mgKOH/g.

**Total Acid Number** ("TAN") is determined by ASTM D664.

**Phosphorus, Boron, Calcium, Zinc, Molybdenum, Sodium, Silicon,** and **Magnesium** content are measured by ASTM D5185.

**Sulfur content in oil** formulations is measured by ASTM D5185.

**Sulfated ash** ("SASH") content is measured by ASTM D874.

**Kinematic viscosity** ($KV_{150}$, $KV_{140}$, $KV_{130}$, $KV_{120}$, $KV_{110}$, $KV_{100}$, $KV_{90}$, $KV_{80}$, $KV_{70}$ $KV_{60}$, $KV_{50}$, $KV_{40}$, $KV_{30}$, $KV_{20}$) is determined pursuant to ASTM D445-19a and reported in units of cSt, unless otherwise specified.

**Viscosity index** is determined according to ASTM D2270.

**Saponification number** is determined by ASTM D94, and reported in units of mgKOH/g.

**"HTCBT,** high temperature corrosion bench test, is determined pursuant to ASTM D6594.

Unless otherwise indicated, all percentages reported are mass % on an active ingredient basis, *i.e.,* without regard to carrier or diluent oil, unless otherwise indicated.

Also, it will be understood that various components used, essential as well as optimal and customary, may react under conditions of reaction, formulation, storage or use and that the disclosure also provides the product obtainable or obtained as a result of any such reaction formulation, storage or use.

Further, it is understood that any upper and lower quantity, range and ratio limits set forth herein may be independently combined.

Also, it will be understood that the preferred features of each aspect of the present disclosure are regarded as preferred features of every other aspect of the present disclosure. Accordingly, preferred and more preferred features of one aspect of the present disclosure may be independently combined with other preferred and/or more preferred features of the same aspect or different aspects of the present disclosure.

As used herein, the term **"comb copolymer"** indicates the presence of relatively long side chains (as opposed to merely pendant moieties) being bonded to a polymeric main chain, frequently also called a polymer "backbone." In the present disclosure, the comb copolymer viscosity modifiers comprise at least one repeat unit derived from a polyalkylene-based macromonomer, whose repeat units are based almost entirely on polymerization or oligomerization of olefinic, non-aromatic, purely hydrocarbon monomers *(i.e.,* neither containing, nor made from monomers containing, more than a contaminant level of heteroatoms, such as O, N, S, P, Si, halides, metals, etc.). Such monomers may include, but are not necessarily limited to, alkyl pendant monoolefins (alkenes) such as ethylene, propylene, 1-butene, isobutylene, 1-pentene, 1-hexene, vinyl cyclohexene, and the like, and combinations thereof, and/or those non-aromatic monomers whose polymerized repeat unit still contains at least one unsaturation (typically alkadienes such as butadiene, isoprene, hexadienes, non-aromatic hexatrienes, norbornadiene, and the like, and combinations thereof). To the extent that any such monomers polymerized/oligomerized to form the macromonomer resulted in remaining unsaturations, it is preferable that such unsaturations would be treated, such as by hydrogenation, to remove said unsaturations. As used herein, the term "main chain" does not necessarily infer that its chain length is greater than that of the side chains - it merely relates to the polymerization process that has linked the enumerated comonomers, including the macromonomer, together.

As used herein, the term **"repeat unit"** is known in the technical field and is typically linked (though not identical)

to the monomer(s) from which a (co)polymer is made. For example, in free-radical polymerization, (olefinic) double bonds within a single monomer or macromonomer are opened up to enable formation of covalent bonds with neighboring monomers, thereby forming the polymer chain. Macromonomers are themselves made by a polymerization/oligomerization of monomers, though they are employed as a "single" (macro)monomer in polymerization of the comb copolymer viscosity modifiers described herein. Nonetheless, when the term "repeat unit" or "repeat units" is invoked, any polymerized monomer is referenced. However, just because a component could be made by polymerization, that does not mean it constitutes a "repeat unit." For example, in the case of a linear $C_{18}$ methacrylate ester, though the 18 carbon linear chain could theoretically have been made by oligomerization of 9 ethylene units, such component is more likely made by a non-polymerization route (such as involving isolation of stearyl alcohol or some similar natural product), and therefore is not considered to be a "macromonomer" for the purposes of this disclosure.

## DETAILED DESCRIPTION OF THE INVENTION

The features of the disclosure relating, where appropriate, to each and all aspects of the disclosure, will now be described in more detail as follows.

The lubricating oil compositions of the disclosure comprise components that may or may not remain the same chemically before and after mixing with an oleaginous carrier (such as a base oil) and/or other additives. This disclosure encompasses compositions which comprise the components before mixing, or after mixing, or both before and after mixing.

### Lubricating Oil Compositions

This disclosure relates to lubricating oil compositions (also referred to as "LOC," "lubricant compositions," "lubricating compositions," or "lubricant oil compositions") comprising or resulting from the admixing of:

(a) from 1 to 99 mass % (alternately 30 to 95 mass %, alternately 50 to 90 mass %, alternately 60 to 95 mass %, alternately 70 to 85 mass %) of one or more base oils, based upon the weight of the lubricating composition;
b1) from 0.10 to 20 mass % (in particular, 0.15 to 10 mass %, alternately 0.20 mass % to 5 mass %, alternately 0.25 to 2 mass %, such as about 3.3 mass%), based on total weight of the lubricating oil composition, of carbonate capped dispersant; and
b2) from 0.10 to 20 mass % (in particular, 0.15 to 10 mass %, alternately 0.20 mass % to 5 mass %, alternately 0.25 to 4 mass %), based on total weight of the lubricating oil composition, of comb copolymer viscosity modifier described herein.

This disclosure also relates to lubricating oil compositions comprising or resulting from the admixing of:

(i) from 1 to 99 mass % (alternately 30 to 95 mass %, alternately 50 to 90 mass %, alternately 60 to 95 mass %, alternately 70 to 85 mass %) of one or more base oils, based upon the weight of the lubricating composition;
(ii) from 0.10 to 20 mass % (in particular 0.15 to 10 mass %, alternately 0.20 mass % to 5 mass %, alternately 0.25 to 2 mass %), based upon the weight of the composition, of one or more detergents, such as Ca and Mg detergents;
iii) from 0.10 to 20 mass % (in particular, 0.15 to 10 mass %, alternately 0.20 mass % to 5 mass %, alternately 0.25 to 2 mass %, such as about 3.3 mass%), based on total weight of the lubricating oil composition, of carbonate capped dispersant; and
iv) from 0.10 to 20 mass % (in particular, 0.15 to 10 mass %, alternately 0.20 mass % to 5 mass %, alternately 0.25 to 4 mass % based on total weight of the lubricating oil composition, of comb copolymer viscosity modifier described herein.

This disclosure also relates to lubricating oil compositions comprising or resulting from the admixing of:

A) from 1 to 99 mass % (alternately 30 to 95 mass %, alternately 50 to 90 mass %, alternately 60 to 95 mass %, alternately 70 to 85 mass %) based upon the weight of the lubricating oil composition, of one or more base oils;
B1) from 0.10 to 20 mass % (in particular, 0.15 to 10 mass %, alternately 0.20 mass % to 5 mass %, alternately 0.25 to 2 mass %, such as about 3.3 mass%), based on total weight of the lubricating oil composition, of carbonate capped dispersant; and
B2) from 0.10 to 20 mass % (in particular, 0.15 to 10 mass %, alternately 0.20 mass % to 5 mass %, alternately 0.25 to 4 mass %), based on total weight of the lubricating oil composition, of comb copolymer viscosity modifier described herein;
C) from 0.10 to 20 mass % (in particular, 0.15 to 10 mass %, alternately 0.20 mass % to 5 mass %, alternately 0.25 to 2

mass %), based upon the weight of the lubricating oil composition, of one or more detergents (such as blends of detergents, such as combinations of Ca and Mg detergents);

D) optionally, from 0.01 to 5 wt % (in particular 0.1 to 4 mass %, alternately 0.25 to 3 mass %, alternately 0.045-0.15 mass %), based on total weight of the lubricating oil composition, of one or more friction modifiers (such as blends of friction modifiers);

E) optionally, from 0.01 to 10 wt % (in particular, 0.01 to 5 wt %, alternately 0.01 to 3 mass %, alternately 0.1 to 2 mass %), based on total weight of the lubricating oil composition, of one or more antioxidants (such as blends of antioxidants);

F) optionally, from 0.005 to 5 wt % (in particular, 0.01 to 3 mass %, alternately 0.1 to 1.5 mass %), based on total weight of the lubricating oil composition, of one or more pour point depressants (such as blends of pour point depressants);

G) optionally, from 0.001 to 5 wt % (in particular, 0.01 to 3 mass %, alternately 0.1 to 1.5 mass %), based on total weight of the lubricating oil composition, of one or more anti-foam agents (such as blends of anti-foam agents);

H) optionally, from 0.001 to 10 wt % (in particular, 0.01 to 6 wt %, alternately 0.01 to 5 mass %, alternately 0.1 to 4 mass %, alternately 0.1 to 2 mass %), based on total weight of the lubricating oil composition, of one or more viscosity modifiers (such as blends of viscosity modifiers) other than B2;

I) optionally, from 0.01 to 20 wt % (in particular, 0.1 to 12 mass %, alternately 0.1 to 8 mass %), based on total weight of the lubricating oil composition, of one or more dispersants (such as blends of dispersants) other than B1;

J) optionally, from 0.005 to 5 wt % (in particular, 0.01 to 3 mass %, alternately 0.01 to 1.5 mass %), based on total weight of the lubricating oil composition, of one or more inhibitors and/or anti-rust agents (such as blends of inhibitors and /or anti-rust agents);

K) from 0.001 to 10 wt % (in particular, 0.01 to 5 wt %, alternately 0.1 to 3 mass %, alternately 0.1 to 1.5 mass %), based on total weight of the lubricating oil composition, of one or more anti-wear agents (such as blends of anti-wear agents, such as one or more ZDDPs);

M) optionally, from 0.01 to 5 wt % (in particular, 0.05 to 2 mass %, alternately 0.1 to 1 mass %), based on total weight of the lubricating oil composition, of one or more seal compatibility agents, such as seal swell agents, and/or

O) optionally, from 0.01 to 5 wt % (in particular, 0.1 to 3 mass %, alternately 0.1 to 1.5 mass %), based on total weight of the lubricating oil composition, of one or more unsaturated $C_{12}$-$C_{60}$ hydrocarbons (such as $C_{12}$-$C_{24}$ linear alpha-olefins (LAOs), oligomers/polymers of polyisobutylenes, and/or blends thereof).

For purposes of this disclosure, components B1 and B2 are not added in the elements C, D, E, F G, H, I, J, K, M, and/or O above for determining weight percentages, even though they may show similar properties, e.g., element B1) can function as a dispersant, but is not added into element I) for determining weight percent of dispersants. Likewise, element B2) can function as a viscosity modifier, but is not added into element H) for determining weight percent of viscosity modifiers.

In embodiments, all of elements D, E, F G, H, I, J, K, M, and O are present in addition to the base oil, detergent, the one or more comb copolymer viscosity modifiers described herein, and the one or more capped dispersants described herein.

In embodiments, elements D, E, F G, H, I, and J are present in addition to the base oil, detergent, the one or more comb copolymer viscosity modifiers described herein, and the one or more capped dispersants described herein.

In embodiments, elements I, F, and G are present in addition to the base oil, detergent, the one or more comb copolymer viscosity modifiers described herein, and the one or more capped dispersants described herein.

In embodiments, element K is present in addition to the base oil, detergent, the one or more comb copolymer viscosity modifiers described herein, and the one or more capped dispersants described herein.

Suitably, the lubricant composition may have a total base number (TBN) of 4 to 15 mgKOH/g, preferably 5 to 12 mgKOH/g, such as 6 to 12 mgKOH/g, as measured by ASTM D2896.

The lubricating compositions of the present disclosure may contain low levels of phosphorus, namely not greater than 1600, preferably not greater than 1200, more preferably not greater than 800, such as 1 to 1600, such as 50 to 1200, such as 100 to 800 parts per million (ppm) by mass of phosphorus, expressed as atoms of phosphorus, based on the total mass of the lubricating compositions, as measured by ASTM D5185. Suitably, the lubricant composition may have a phosphorus level of 1200 ppm or less, alternately 1000 ppm or less, alternately 800 ppm or less, as measured by ASTM D5185.

The lubricating compositions of the present disclosure may contain a ratio of atoms of calcium to atoms of magnesium based on the total mass of the lubricating compositions, as measured by ASTM D5185, of at least 2, preferably at least 2.5.

Typically, the lubricating compositions may contain low levels of sulfur. Preferably, the lubricating composition contains up to 0.4, preferably up to 0.3, such as 0.1 to 0.4 mass % sulfur, based on the total mass of the lubricating oil composition, as measured by ASTM D5185.

Typically, the lubricating compositions may contain low levels of sulfated ash, such as 1.2 % or less, such as 1.0

mass % or less, preferably 0.9 mass or less %, such as 0.7 mass% or less, based on the total mass of the lubricating composition, as measured by ASTM D874-13a (2018).

Generally, the kinematic viscosity at 100° C ("KV100") of the lubricating composition may range from 3 to 30 cSt, such as 3.8 to 12.5 cSt, such as 3.8 to 9.3 cSt as determined according to ASTM D 445-19a). In embodiments, the kinematic viscosity at 100° C ("KV100") of the lubricating composition may range from 3 to 17 cSt, such as 9 to 16.3 cSt, such as 3.8 to 10 cSt, such as 4 to 9.3 cSt, such as 5 to 8.5 cSt, as determined according to ASTM D 445-19a).

Generally, the total base number of the lubricating composition may range from 1 to 30, such as 5 to 15 mgKOH/g, (as determined according to ASTM D2896).

Preferably, the lubricating composition of the present disclosure may be a multigrade oil identified by the viscometric descriptor SAE 20W-X, SAE 15W-X, SAE 10W-X, SAE 5W-X or SAE 0W-X, where X represents any one of 8, 12, 16, 20, 30, 40, and 50; the characteristics of the different viscometric grades can be found in the SAE J300 classification. Alternately, the lubricating composition may be the form of viscosity grade SAE 15W-X, SAE 10W-X, SAE 5W-X or SAE 0W-X, such as in the form of SAE 15W-X or SAE 10W-X, wherein X represents any one of 8, 12, 16, 20, 30, 40, and 50. Preferably X is 8, 12, 16, or 20. Alternately, the lubricating composition of the present disclosure may be a multigrade oil identified by the viscometric descriptor SAE 10W-30, 15W-40, 5W-30, 5W-40, 10W-40, 5W-50. (See standard SAE J300 published January 2015 by SAE International, formerly known as Society of Automotive Engineers).

Alternately, the lubricating composition may have a SAE viscosity grade of 0W-Y, wherein Y may be 8, 12, 16, or 20. In one embodiment, the lubricating composition has an SAE viscosity grade of 0W-12.

Optionally, the lubricating composition may be absent phenolic antioxidant.

Optionally, the lubricating composition may be absent aminic antioxidant, such as phenylamines, such as diphenyl amines, such as alkylated diphenyl amines. Optionally the lubricating composition contains from 0.1 to 3, such as 0.2 to 2, such as less than 0.3 mass % (such as 0.25 mass % or less, such as 0.2 mass % or less, such as 0.1 mass % or less, such as 0.05 mass % or less, such as 0 mass%) of aminic antioxidant, such as alkylated phenyl amines, such as di(alkylphenyl)amine, such as di(nonyl-phenyl)amine, based upon the weight of the composition. In embodiments, the lubricating oil composition may comprise, may be substantially free of, or may be absent, aminic antioxidant, such phenylamines, such as diphenyl amines, such as alkylated diphenyl amines, such as such as di(nonyl-phenyl)amine.

In embodiments, the lubricating oil composition may comprise less than 75 ppm boron, alternately less than 60 ppm boron, alternately from 1 to 70 ppm boron. Alternately, the LOC may be absent boron.

In embodiments, the lubricating oil composition may comprise less than 20 (such as less than 15, such as less than 10, such as less than 5, such as less than 3, such as less than 1) mass %, functionalized (such as aminated) polybutene (such as polyisobutylene), such as PIBSA-PAM. In embodiments, the lubricating oil composition may comprise, may be substantially free of, or may be absent, functionalized (such as aminated) polybutene (such as polyisobutylene), such as PIBSA-PAM.

In embodiments, the lubricating oil composition may comprise acylated polymers, such as polyisobutylene succinic acid (PIBSA), optionally having an Mn of 500 to 50,000 g/mol, such as 600 to 5,000 g/mol, such as 700 to 3000 g/mol. In embodiments, the lubricating oil composition may comprise acylated polymers, such as polyisobutylene succinic acid, having an Mn of 500 to 1600 g/mol, such as 700 to 1200 g/mol. In embodiments, the lubricating oil composition comprises more than 0.1 (such as 0.1 to 10, such as 0.5 to 8) mass %, functionalized (such as aminated) polybutene (such as polyisobutylene), such as PIBSA-PAM.

In embodiments, the lubricating oil composition may comprise 20 (such as 15, such as 10, such as 5, such as 3, such as 1) mass % or less block copolymer, such as block, star, random, and/or tapered block copolymer).

In embodiments, the lubricating oil composition may be substantially free of or may be absent block copolymer, such as block, star, random, and/or tapered block copolymer.

In embodiments, the lubricating oil composition may comprise 20 (such as 15, such as 10, such as 5, such as 3, such as 1) mass % or less styrenic copolymer, such as block, star, random, and/or tapered styrenic block copolymer).

In embodiments, the lubricating oil composition may be substantially free or absent styrenic copolymer, such as block, star, random, and/or tapered sytrenic block copolymer.

In embodiments, the lubricating oil composition may comprise less than 20 (such as less than 15, such as less than 10, such as less than 5, such as less than 3, such as less than 1) mass % of functionalized diluent, such as functionalized oil.

In embodiments, the lubricating oil composition may comprise, may be substantially free of, or may be absent functionalized diluent, such as functionalized oil.

In embodiments, the lubricating oil composition may comprise less than 20 (such as less than 15, such as less than 10, such as less than 5, such as less than 3, such as less than 1) mass % of solvent, such as aromatic solvent.

In embodiments, the lubricating oil composition may be substantially free of or absent solvent, such as functionalized solvent.

In embodiments, the lubricating oil composition may have a total saponification number (SAP) of 25 (such as 28, such as 30, such as 32) mgKOH/g or more, as determined by ASTM 94.

In embodiments, the lubricating oil composition may comprise less than 0.5 (such as 0.4, such as less than 0.3, such as less than 0.2, such as less than 0.1, substantially absent, or zero) wt %, based upon the weight of the LOC, of secondary hydrocarbyl amine compounds and tertiary hydrocarbyl amine compounds.

In embodiments, the lubricating oil composition may be substantially absent, or may comprise no, secondary hydrocarbyl amine compounds and tertiary hydrocarbyl amine compounds.

In embodiments, the lubricating compositions of the present disclosure may be a heavy-duty diesel oil (*e.g.,* for use in an engine for a heavy-duty diesel vehicle, *i.e.,* a heavy-duty diesel vehicle having a gross vehicle weight rating of 10,000 pounds or more.)

In embodiments, the lubricating compositions of the present disclosure may be a passenger car motor oil.

In embodiments, the lubricating compositions of the present disclosure may be a passenger car diesel oil.

In embodiments, the lubricating composition of the present disclosure may be a diesel engine lubricating composition comprising: an oil of lubricating viscosity having greater than 50 wt % of Group I, II, III, IV, and/or V oil (such as a Group III base oil, a Group IV base oil, a Group V base oil, or mixtures thereof); a first PIB succinimide dispersant derived from an 1800 to 2500 Mn PIB; a second PIB succinimide dispersant derived from a PIB with an Mn less than 1600, where at least one of the first PIB succinimide dispersant(s) and the second PIB succinimide dispersant is boron-free (optionally, at least one of the first PIB succinimide dispersant(s) and the second PIB succinimide dispersant is borated); a amide, imide, and/or ester functionalized partially or fully saturated polymer comprising $C_{4-5}$ olefins as described herein; an alkaline earth metal salicylate detergent; an alkaline earth metal sulfonate detergent present in an amount to deliver 0.1 wt % to 1.2 wt % of alkaline earth metal soap to the lubricating composition; and a phosphorus anti wear agent present in an amount to deliver 300 to 900 ppm phosphorous to the lubricating composition, the lubricating composition having a total sulfated ash of between 0.3 to 1.1 wt %; a kinematic viscosity at 100° C of less than 8.3 cSt; a total alkaline earth metal soap of from 0.6 wt % to 2.1 wt %, and a HTHS150 measured according to ASTM D4683 of less than 2.7 mPa•s.

The lubricating compositions disclosed herein, such as diesel engine lubricating compositions, may have a kinematic viscosity as measured by ASTM D-445 at 100° C of from 3.8 to 9.3 cSt ($mm^2/s$) and a kinematic viscosity at 40° C of from 15 to 30 (such as 15 to 28) cSt ($mm^2/s$).

The lubricating composition disclosed herein, such as diesel engine lubricating compositions, may have a high temperature, high shear viscosity (HTHS) as measured by ASTM D4683 at 150° C of more than 2.6 mPa•s, or more than 2.5 mPa•s, or more than 2.4 mPa•s, or more than 2.3 mPa•s, or more than 2.2 mPa•s, or more than 2.0 mPa•s, or more than 1.7 mPa•s. In another embodiment, the HTHS of the lubricating composition is from 2.6 to 2.7 mPa•s, or from 2.3 to 2.4 mPa•s, or from 2.0 to 2.1 mPa•s, or from 1.7 to 1.8 mPa•s.

The lubricating composition, such as diesel engine lubricating compositions, may have a SAE viscosity grade of 0W-Y, wherein Y may be 8, 12, 16, or 20. In one embodiment, the lubricating composition has an SAE viscosity grade of 0W-12.

The lubricating compositions disclosed herein, such as diesel engine lubricating compositions, may have: 1) a kinematic viscosity as measured by ASTM D-445 at 100° C of from 3.8 to 9.3 (such as 4.0 to 6.1, or 5.0 to 7.1, or 6.1 to 8.2, or 6.9 to 9.3 cSt ($mm^2/s$); 2) a high temperature, high shear viscosity (HTHS) as measured by ASTM D4683 at 150° C of more than 2.6 mPa•s, or more than 2.3 mPa•s, or more than 2.0 mPa•s, or more than 1.7 mPa•s; and 3) a SAE viscosity grade of 0W-Y, wherein Y may be 12, 16, or 20 (such as 0W-12).

The lubricating compositions disclosed herein, such as diesel engine lubricating compositions, may have: 1) a molybdenum containing material that provides 20 to 40, such as 20 to 30 ppm Mo to the lubricating oil composition, 2) a zinc alkylthiophosphate where the alkyl group is derived from at least one secondary alcohol, such as a combination of primary and secondary alcohols, 3) about 3 to 5 mass%, such as about 3 to 4, such as about 3.3 mass% of the capped dispersant.

**Concentrates**

A concentrate, also referred to as an additive package, adpak, or addpack, is a composition having less than 50 mass % (such as less than 40 mass %, such as less than 30 mass %, such as less than 25 mass %, such as less than 20 mass %) base oil and lubricant composition additives (such as described herein) which is typically then further blended with additional base oil to form a lubricating oil product.

This disclosure relates to concentrate compositions comprising or resulting from the admixing of:

(i) from 1 to less than 50 mass % (alternately 3 to 45 mass %, alternately 5 to 40 mass %, alternately 5 to 35 mass %, alternately 10 to 25 mass %), based upon the weight of the composition, of one or more base oil(s);

(ii) from 0.10 to 20 mass % (in particular 0.15 to 10 mass %, alternately 0.20 mass % to 5 mass %, alternately 0.25 to 2 mass %), based upon the weight of the composition, of one or more calcium detergent(s) and one or more and magnesium detergent(s) described herein;

(iii) from 0.10 to 50 mass % (in particular 0.15 to 10 mass %, alternately 0.20 mass % to 5 mass %, alternately 0.25 to 2 mass %), based upon the weight of the composition, of one or more capped dispersant(s) (such as ethylene carbonate

capped PIBSA-PAM derived from PIB having an Mn of 1600 g/mol or less) described herein; and
(iv) from 0.10 to 20 mass % (in particular 0.15 to 10 mass %, alternately 0.20 mass % to 5 mass %, alternately 0.25 to 4 mass %), based upon the weight of the composition, of one or more comb copolymer viscosity modifier (s) described herein;
(v) optional additional components, antioxidants, pour point depressants, anti-foam agents, viscosity modifiers, corrosion inhibitors, anti-wear agents, extreme pressure additives, demulsifiers, seal compatibility agents, additive diluent base oils, friction modifier(s) (such as, organic FM, such as organic ester, such as fatty acid ester), etc., such as zinc dialkyl dithio phosphate, and/or molybdenum containing compound (such as dimeric or trimeric MoDTC), and/or an aminic antioxidant.

In embodiments, the concentrate composition may optionally be absent solvent (such as aliphatic or aromatic solvent) and/or absent functionalized base oil.
This disclosure also relates to concentrate compositions comprising or resulting from the admixing of:

A) from 1 to less than 50 mass % (alternately 5 to 45 mass %, alternately 7 to 40 mass %, alternately 10 to 35 mass %, alternately 10 to 25 mass %), based upon the weight of the concentrate composition, of one or more base oil(s);
B1) from 0.10 to 20 mass % (in particular, 0.15 to 10 mass %, alternately 0.20 mass % to 5 mass %, alternately 0.25 to 3 mass %), based upon the weight of the concentrate composition, of one or more capped dispersant(s) as described herein:
B2) from 0.10 to 20 mass % (in particular, 0.15 to 10 mass %, alternately 0.20 mass % to 5 mass %, alternately 0.25 to 4 mass %), based upon the weight of the concentrate composition, of one or more one or more comb copolymer viscosity modifier (s) described herein:

C) from 0.1 to 20 wt % (in particular 0.5 to 10 mass %, alternately 2 to 6 mass %), based on total weight of the concentrate composition, of one or more calcium detergent(s) and one or more magnesium detergents, (such as blends of salicylate, sulfonate or salicylate and sulfonate detergents);
D) optionally, from 0.01 to 5 wt % (in particular, 0.1 to 4 mass %, alternately 0.25 to 3 mass %, alternately 0.25 to 0.75 mass %), based on total weight of the concentrate composition, of one or more friction modifier(s) (such as organic friction modifiers, such as glycerol monoeoleate);
E) optionally, from 0.01 to 20 wt % (in particular, 0.01 to 15 mass %, alternately 0.1 to 10 mass %), based on total weight of the concentrate composition, of one or more antioxidant(s) (such as blends of antioxidants);
F) optionally, from 0.005 to 5 wt % (in particular, 0.01 to 3 mass %, alternately 0.1 to 1.5 mass %), based on total weight of the concentrate composition, of one or more pour point depressants (such as blends of pour point depressants);
G) optionally, from 0.001 to 5 wt % (in particular, 0.01 to 3 mass %, alternately 0.02 to 1 mass %), based on total weight of the concentrate composition, of one or more anti-foam agents (such as blends of anti-foam agents);
I) optionally, from 0.01 to 40 wt % (in particular, 0.1 to 30 mass %, alternately 1 to 20 mass %), based on total weight of the concentrate composition, of one or more dispersants (such as blends of dispersants) other than the capped dispersants of B1 above;
K) optionally, from 0.001 to 10 wt % (in particular, 0.1 to 8 mass %, alternately 1 to 5 mass % alternately 0.25 to 0.75 mass %), based on total weight of the lubricating composition, of one or more anti-wear agents (such as blends of anti-wear agents, such as ZDDP).

Concentrates may be present in the lubricating oil composition at from of 0.5 mass% to 35 mass%, such as 5 mass% to 30 mass%, such as 7.5 mass% to 25 mass%, such as 10 to 22.5 mass%, such as 15 to 20 mass%, based upon the mass of the lubricating oil composition.
Optionally, the concentrate may be absent functionalized oil.
In embodiments, the concentrate composition may optionally be absent solvent (such as aliphatic or aromatic solvent) and/or absent functionalized base oil.
Optionally, the concentrate may be absent phenolic antioxidant.
In embodiments, the concentrate may comprise less than 75 ppm boron, alternately less than 60 ppm boron, alternately from 1 to 70 ppm boron. Alternately, the concentrate may be absent boron.
In embodiments, the concentrate may comprise less than 20 (such as 15, such as 10, such as 5, such as 3, such as 1) mass %, functionalized (such as aminated) polybutene (such as polyisobutylene), such as PIBSA-PAM. In embodiments, the concentrate comprises is substantially free or absent, functionalized (such as aminated) polybutene (such as polyisobutylene), such as PIBSA-PAM.
In embodiments, the concentrate may comprise acylated polymers, such as polyisobutylene succinic acid, optionally, having an Mn of 500 to 50,000 g/mol, such as 600 to 5,000 g/mol, such as 700 to 3000 g/mol. In embodiments,

the concentrate may comprise acylated polymers, such as polyisobutylene succinic acid, having an Mn of 500 to 1600 g/mol, such as 700 to 1200 g/mol.

In embodiments, the concentrate may comprise 20 (such as 15, such as 10, such as 5, such as 3, such as 1) mass % or less block copolymer, such as block, star, random, and/or tapered block copolymer.

In embodiments, the concentrate may be substantially free of or absent block copolymer, such as block, star, random, and/or tapered block copolymer.

In embodiments, the concentrate may comprise 20 mass % or less (such as 15 mass % or less, such as 10 mass % or less, such as 5 mass % or less, such as 3 mass % or less, such as 1) mass % or less styrenic copolymer, such as block, star, random, and/or tapered styrenic block copolymer).

In embodiments, the concentrate may be substantially free of or absent styrenic copolymer, such as block, star, random, and/or tapered sytrenic block copolymer).

In embodiments, the concentrate may comprise less than 20 (such as less than 15, such as 10, such as less than 5, such as less than 3, such as 1) mass % of functionalized diluent, such as functionalized oil.

In embodiments, the concentrate may substantially free of or absent functionalized diluent, such as functionalized oil.

In embodiments, the concentrate may comprise less than 0.5 (such as less than 0.4, such as less than 0.3, such as less than 0.2, such as 0.1, substantially absent, no) wt %, based upon the weight of the concentrate, of secondary hydrocarbyl amine compounds and tertiary hydrocarbyl amine compounds.

In embodiments, the concentrate may be substantially absent, or may comprise no, secondary hydrocarbyl amine compounds and tertiary hydrocarbyl amine compounds.

In embodiments, the concentrate may have a kinematic viscosity at 100° C of less than 1000 cSt, such as less than 500 cSt, such as less than 200 cSt.

Further, this invention relates to a method to make the concentrates described herein comprising combining, based upon the weight of the concentrate:

A) from 1 to less than 50 mass % (alternately 5 to 45 mass %, alternately 7 to 40 mass %, alternately 10 to 35 mass %, alternately 10 to 25 mass %), based upon the weight of the concentrate composition, of one or more base oil(s);
B1) from 0.10 to 20 mass % (in particular, 0.15 to 10 mass %, alternately 0.20 mass % to 5 mass %, alternately 0.25 to 3 mass %), based upon the weight of the concentrate composition, of one or more capped dispersant(s) as described herein:
B2) from 0.10 to 20 mass % (in particular, 0.15 to 10 mass %, alternately 0.20 mass % to 5 mass %, alternately 0.25 to 3 mass %), based upon the weight of the concentrate composition, of one or more one or more comb copolymer viscosity modifier (s) described herein:

C) from 0.1 to 20 wt % (in particular 0.5 to 10 mass %, alternately 2 to 6 mass %), based on total weight of the concentrate composition, of one or more calcium detergent(s) and one or more magnesium detergents, (such as blends of salicylate, sulfonate or salicylate and sulfonate detergents);
D) optionally, from 0.01 to 5 wt % (in particular, 0.1 to 4 mass %, alternately 0.25 to 3 mass %, alternately 0.25 to 0.75 mass %), based on total weight of the concentrate composition, of one or more friction modifier(s) (such as organic friction modifiers, such as glycerol monoeoleate);
E) optionally, from 0.01 to 20 wt % (in particular, 0.01 to 15 mass %, alternately 0.1 to 10 mass %), based on total weight of the concentrate composition, of one or more antioxidant(s) (such as blends of antioxidants);
F) optionally, from 0.01 to 5 wt % (in particular, 0.01 to 3 mass %, alternately 0.1 to 1.5 mass %), based on total weight of the concentrate composition, of one or more pour point depressants (such as blends of pour point depressants);
G) optionally, from 0.001 to 5 wt % (in particular, 0.01 to 3 mass %, alternately 0.02 to 1 mass %), based on total weight of the concentrate composition, of one or more anti-foam agents (such as blends of anti-foam agents);
I) optionally, from 0.01 to 40 wt % (in particular, 0.1 to 30 mass %, alternately 1 to 20 mass %), based on total weight of the concentrate composition, of one or more dispersants (such as blends of dispersants) other than the capped dispersants of B1 above;
K) optionally, from 0.001 to 10 wt % (in particular, 0.1 to 8 mass %, alternately 1 to 5 mass % alternately 0.25 to 0.75 mass %), based on total weight of the lubricating composition, of one or more anti-wear agents (such as blends of anti-wear agents, such as ZDDP).

### A. Base Oil

The base oil (also referred to as "base stock," "lubricating oil basestock," or "oil of lubricating viscosity") useful herein may be a single oil or a blend of oils, and is typically a large liquid constituent of a lubricating composition, also

referred to as a lubricant, into which additives and optional additional oils are blended, for example, to produce a lubricating composition, such as a final lubricant composition, a concentrate, or other lubricating composition.

A base oil may be selected from vegetable, animal, mineral, and synthetic lubricating oils, and mixtures thereof. It may range in viscosity from light distillate mineral oils to heavy lubricating oils, such as those for gas engine oil, mineral lubricating oil, motor vehicle oil, and heavy-duty diesel oil. Generally, the kinematic viscosity at 100° C ("KV100") of the base oil ranges from 1 to 30, such as 2 to 25 cSt, such as 5 to 20 cSt, as determined according to ASTM D445-19a, in particular, from 1.0 cSt to 10 cSt, from 1.5 cSt to 3.3 cSt, from 2.7 cSt to 8.1 cSt, from 3.0 cSt to 7.2 cSt, or from 2.5 cSt to 6.5 cSt. Generally, the high temperature high shear (HTHS) viscosity at 150° C of the base oil ranges from 0.5 to 20 cP such as 1 to 10 cP, such as 2 to 5 cP as determined according to ASTM D4683-20.

Typically, when lubricating oil basestock(s) is used to make a concentrate, it may advantageously be present in a concentrate-forming amount to give a concentrate containing, from 5 wt % to 80 wt %, from 10 wt % to 70 wt %, or from 5 wt % to 50 wt % of active ingredient, based upon the weight of the concentrate.

Common oils useful as base oils include animal and vegetable oils (e.g., castor and lard oil), liquid petroleum oils, and hydrorefined and/or solvent-treated mineral lubricating oils of the paraffinic, naphthenic, and mixed paraffinic-naphthenic types. Oils derived from coal or shale are also useful base oils. Base stocks may be manufactured using a variety of different processes including, but not limited to, distillation, solvent refining, hydrogen processing, oligomerization, esterification, and re-refining.

Synthetic lubricating oils useful herein as base oils include hydrocarbon oils such as homopolymerized and copolymerized olefins, referred to as polyalphaolefins or PAO's or group IV base oils [according to the API EOLCS 1509 definition (American Petroleum Institute Publication 1509, see section E.1.3, 19th edition, January 2021, www.API.org)]. Examples of PAO's useful as base oils include: poly(ethylenes), copolymers of ethylene and propylene, polybutylenes, polypropylenes, propylene-isobutylene copolymers, chlorinated polybutylenes, poly(1-hexenes), poly(1-octenes), poly(1-decenes), homo- or co-polymers of $C_8$ to $C_{20}$ alkenes, homo- or co-polymers of $C_8$, and/or $C_{10}$, and/or $C_{12}$ alkenes, $C_8/C_{10}$ copolymers, $C_8/C_{10}/C_{12}$ copolymers, and $C_{10}/C_{12}$ copolymers, and the derivatives, analogues and homologues thereof.

In another embodiment, the base oil may comprise polyalphaolefins comprising oligomers of linear olefins having 6 to 14 carbon atoms, more preferably 8 to 12 carbon atoms, more preferably 10 carbon atoms having a Kinematic viscosity at 100° C of 10 or more (as measured by ASTM D445); and preferably having a viscosity index ("VI"), as determined by ASTM D2270, of 100 or more, preferably 110 or more, more preferably 120 or more, more preferably 130 or more, more preferably 140 or more; and/or having a pour point of -5° C or less (as determined by ASTM D97), more preferably -10° C or less, more preferably -20° C or less.

In another embodiment polyalphaolefin oligomers useful in the present disclosure may comprise $C_{20}$ to $C_{1500}$ paraffins, preferably $C_{40}$ to $C_{1000}$ paraffins, preferably $C_{50}$ to $C_{750}$ paraffins, preferably $C_{50}$ to $C_{500}$ paraffins. The PAO oligomers are dimers, trimers, tetramers, pentamers, *etc.,* of $C_5$ to $C_{14}$ alpha-olefins in one embodiment, and $C_6$ to $C_{12}$ alpha-olefins in another embodiment, and $C_8$ to $C_{12}$ alpha-olefins in another embodiment. Suitable olefins include 1-pentene, 1-hexene, 1-heptene, 1-octene, 1-nonene, 1-decene, 1-undecene, and 1-dodecene. In one embodiment, the olefin is a combination of 1-octene, 1-decene, and 1-dodecene, or alternately may be substantially 1-decene, and the PAO is a mixture of dimers, trimers, tetramers, and pentamers (and higher) thereof. Useful PAO's are described more particularly in, for example, US Patent Nos. 5,171,908 and 5,783,531, and in Synthetic Lubricants and High-Performance Functional Fluids 1-52 (Leslie R. Rudnick & Ronald L. Shubkin, ed. Marcel Dekker, Inc. 1999).

PAO's useful in the present disclosure typically possess a number average molecular weight of from 100 to 21,000 g/mol in one embodiment, and from 200 to 10,000 g/mol in another embodiment, and from 200 to 7,000 g/mol in yet another embodiment, and from 200 to 2,000 g/mol in yet another embodiment, and from 200 to 500 g/mol in yet another embodiment. Desirable PAO's are commercially available as SpectraSyn™ Hi-Vis, SpectraSyn™ Low-Vis, SpectraSyn™ plus, SpectraSyn™ Elite PAO's (ExxonMobil Chemical Company, Houston Texas) and Durasyn PAO's from Ineos Oligomers USA LLC.

Synthetic lubricating oils useful as base oils also include hydrocarbon oils such as homopolymerized and copolymerized: alkylbenzenes (*e.g.*, dodecylbenzenes, tetradecylbenzenes, dinonylbenzenes, di(2-ethylhexyl)benzenes); polyphenols (*e.g.*, biphenyls, terphenyls, alkylated polyphenols); and alkylated diphenyl ethers, and alkylated diphenyl sulfides; and the derivatives, analogues, and homologues thereof.

Another suitable class of synthetic lubricating oils useful as base oils comprises the esters of dicarboxylic acids (*e.g.*, phthalic acid, succinic acid, alkyl succinic acids and alkenyl succinic acids, maleic acid, azelaic acid, suberic acid, sebasic acid, fumaric acid, adipic acid, linoleic acid dimer, malonic acid, alkylmalonic acids, alkenyl malonic acids) reacted with a variety of alcohols (*e.g.*, butyl alcohol, hexyl alcohol, dodecyl alcohol, 2-ethylhexyl alcohol, ethylene glycol, diethylene glycol monoether, propylene glycol). Specific examples of these esters include dibutyl adipate, di(2-ethylhexyl) sebacate, di-n-hexyl fumarate, dioctyl sebacate, diisooctyl azelate, diisodecyl azelate, dioctyl phthalate, didecyl phthalate, dieicosyl sebacate, the 2-ethylhexyl diester of linoleic acid dimer, and the complex ester formed by reacting one mole of sebacic acid with two moles of tetraethylene glycol and two moles of 2-ethylhexanoic acid.

Esters useful as synthetic oils herein also include those made from $C_5$ to $C_{12}$ monocarboxylic acids and polyols, and polyol ethers such as neopentyl glycol, trimethylolpropane, pentaerythritol, dipentaerythritol, and tripentaerythritol.

Desirable ester base oils are commercially available as Esterex™ Esters (ExxonMobil Chemical Company, Houston, Texas).

Silicon-based oils such as the polyalkyl-, polyaryl-, polyalkoxy- or polyaryloxysilicone oils and silicate oils comprise another useful class of synthetic lubricants useful herein; such oils include tetraethyl silicate, tetraisopropyl silicate, tetra-(2-ethylhexyl) silicate, tetra-(4-methyl-2-ethylhexyl)silicate, tetra-(p-tert-butyl-phenyl) silicate, hexa-(4-methyl-2-ethylhexyl)disiloxane, poly(methyl)siloxanes, and poly(methylphenyl)-siloxanes.

Other synthetic lubricating oils useful herein include liquid esters of phosphorous-containing acids (*e.g.*, tricresyl phosphate, trioctyl phosphate, diethyl ester of decylphosphonic acid) and polymeric tetrahydrofurans.

Unrefined, refined, and re-refined oils can be used in the lubricating compositions of the present disclosure. Unrefined oils are those obtained directly from a natural or synthetic source without further purification treatment. For example, a shale oil obtained directly from retorting operations, a petroleum oil obtained directly from distillation, or an ester oil obtained directly from an esterification process and used without further treatment is considered an unrefined oil. Refined oils are similar to the unrefined oils except they have been further treated in one or more purification steps to improve one or more properties. Many such purification techniques, such as distillation, solvent extraction, acid or base extraction, filtration, and percolation are used by those in the art. Re-refined oils are oils obtained by processes similar to those used to obtain refined oils where the refining processes are applied to previously refined oils which have been previously used in service. Such re-refined oils are also referred to as reclaimed or reprocessed oils and often are additionally processed for removal of spent additive and oil breakdown products. A re-refined base oil is preferably substantially free from materials introduced through manufacturing, contamination, or previous use.

Other examples of useful base oils are gas-to-liquid ("GTL") base oils, *i.e.,* the base oil is an oil derived from hydrocarbons made from synthesis gas ("syn gas") containing H2 and CO using a Fischer-Tropsch catalyst. These hydrocarbons typically require further processing in order to be useful as a base oil. For example, they may, by methods known in the art, be hydroisomerized; hydrocracked and hydroisomerized; dewaxed; or hydroisomerized and dewaxed. For further information on useful GTL base oils and blends thereof, please see US Patent No. 10,913,916 (col 4, ln 62 to col 5, ln 60) and US Patent No. 10,781,397 (col 14, ln 54 to col 15, ln 5, and col 16, ln 44 to col 17, ln 55).

In particular, oils from renewable sources, *i.e.,* based in part on carbon and energy captured from the environment, such as biological sources, are useful herein.

The various base oils are often categorized as Group I, II, III, IV, or V according to the API EOLCS 1509 definition (American Petroleum Institute Publication 1509, see section E.1.3, 19th edition, January 2021, www.API.org). Generally speaking, Group I base stocks have a viscosity index of between about 80 to 120 and contain greater than about 0.03 % sulfur and/or less than about 90 % saturates. Group II base stocks have a viscosity index of between about 80 to 120 and contain less than or equal to about 0.03 % sulfur and greater than or equal to about 90 % saturates. Group III base stocks have a viscosity index greater than about 120 and contain less than or equal to about 0.03 % sulfur and greater than about 90 % saturates. Group IV base stocks includes polyalphaolefins (PAO). Group V base stocks include base stocks not included in Groups I-IV. (Viscosity index measured by ASTM D 2270, saturates is measured by ASTM D2007, and sulfur is measured by ASTM D5185, D2622, ASTM D4294, ASTM D4927, and ASTM D3120).

Base oils for use in the formulated lubricating compositions useful in the present disclosure are any one, two, three, or more of the variety of oils described herein. In desirable embodiments, base oils for use in the formulated lubricating compositions useful in the present disclosure are those described as API Group I(including Group I+), Group II (including Group II+), Group III (including Group III+), Group IV, and Group V oils and mixtures thereof, preferably API Group II, Group III, Group IV, and Group V oils and mixtures thereof. The base oil may be a Group III, Group III+, IV, and Group V base oils due to their exceptional volatility, stability, viscometric, and cleanliness features.. Minor quantities of Group I basestock, such as the amount used to dilute additives for blending into formulated lube oil products, can be tolerated but are typically kept to a minimum, *e.g.*, amounts only associated with their use as diluent/carrier oil for additives used on an "as-received" basis. In regard to the Group II stocks, it is often more useful that the Group II base stock be in the higher quality range associated with that stock, *i.e.,* a Group II stock having a viscosity index in the range from 100 to 120.

The base oil useful herein may be selected from any of the synthetic, natural, or re-refined oils (such as those typically used as crankcase lubricating oils for spark-ignited and compression-ignited engines). Mixtures of synthetic and/or natural and/or re-refined base oils may be used if desired. Multi-modal mixtures (such as bi- or tri-modal mixtures) of Group I, II, III, IV, and/or V base stocks may be used if desired.

The base oil or base oil blend used herein conveniently has a kinematic viscosity at 100° C (KV100, as measured according to ASTM D445-19a, and reported in units of centistoke (cSt) or it its equivalent, mm2/s), of about 2 to about 40 cSt, alternately of 3 to 30 cSt, alternately 4 to 20 cSt at 100° C, alternately 5 to 10 cSt, alternately the base oil or base oil blend may have a kinematic viscosity at 100° C of 2 to 20 cSt, of 2.5 to 20 cSt, and preferably of about 2.5 cSt to about 9 cSt.

The base oil or base oil blend preferably has a saturate content of at least 65 mass %, more preferably at least 75 mass %, such as at least 85 mass %, such as at least 90 mass % as determined by ASTM D2007.

Preferably, the base oil or base oil blend will have a sulfur content of less than 1 mass %, preferably less than 0.6 mass %, most preferably less than 0.4 mass %, such as less than 0.3 mass %, based on the total mass of the lubricating composition, as measured by ASTM D5185.

In embodiments, the volatility of the base oil or base oil blend, as measured by the Noack test (ASTM D5800, procedure B), is less than or equal to 30 mass %, such as less than or equal to 25 mass %, such as less than or equal to 20 mass %, such as less than or equal to 16 mass %, such as less than or equal to 12 mass %, such as less than or equal to 10 mass %, such as 15 to 30 mass%, such as 19 to 28 mass%) based on the total mass of the lubricating composition.

In embodiments, the viscosity index (VI) of the base oil is at least 95, preferably at least 110, more preferably at least 120, even more preferably at least 125, most preferably from about 130 to 240, in particular from about 105 to 140 (as determined by ASTM D2270).

The base oil may be provided in a major amount, in combination with a minor amount of one or more additive components as described hereinafter, constituting a lubricant. This preparation may be accomplished by adding the additives directly to the oil or by adding the one or more additives in the form of a concentrate thereof to disperse or dissolve the additive(s). Additives may be added to the oil by any method known to those skilled in the art, either before, at the same time as, or after addition of other additives.

The base oil may be provided in a minor amount, in combination with minor amounts of one or more additive components as described hereinafter, constituting an additive concentrate. This preparation may be accomplished by adding the additives directly to the oil or by adding the one or more additives in the form of a solution, slurry or suspension thereof to disperse or dissolve the additive(s) in the oil. Additives may be added to the oil by any method known to those skilled in the art, either before, at the same time as, or after addition of other additives.

The base oil typically constitutes the major component of an engine oil lubricant composition of the present disclosure and typically is present in an amount ranging from about 50 to about 99 wt %, preferably from about 70 to about 95 wt %, and more preferably from about 80 to about 95 wt %, based on the total weight of the composition.

Typically, one or more base oils are present in the lubricating composition in an amount of 32 wt % or more, alternately 55 wt % or more, alternately 60 wt % or more, alternately 65 wt % or more, based on the total weight of the lubricating composition. Typically, one or more base oils are present in the lubricating composition at an amount of 98 wt % or less, more preferably 95 wt % or less, even more preferably 90 wt % or less. Alternately, one or more base oils are present in the lubricating composition at from 1 to 99 mass %, alternately 50 to 97 mass %, alternately to 60 to 95 mass %, alternately 70 to 95 mass %, based upon the weight of the lubricating composition.

The base oils and blends thereof described above are also useful for making concentrates as well as for making lubricants therefrom.

Concentrates constitute a convenient means of handling additives before their use, as well as facilitating solution or dispersion of additives in lubricants. When preparing a lubricant that contains more than one type of additive (sometime referred to as "additive components"), each additive may be incorporated separately, each in the form of a concentrate. In many instances, however, it is convenient to provide a so-called additive "package" (also referred to as an "addpack") comprising one or more additives/co-additives, such as described hereinafter, in a single concentrate.

Typically, one or more base oils are present in the concentrate composition in an amount of 50 wt % or less, alternately 40 wt % or less, alternately 30 wt % or less, alternately 20 wt % or less, based on the total weight of the concentrate composition. Typically, one or more base oils are present in the concentrate composition at an amount of 0.1 to 49 mass %, alternately 5 to 40 mass %, alternately to 10 to 30 mass %, alternately 15 to 25 mass %, based upon the weight of the concentrate composition.

**B1. Carbonate Capped Dispersants**

The lubricating oils and/or concentrates described herein may comprise one or more alkyl (such as linear branched or cyclic) carbonate post-treated polyalkenyl succinic derivative dispersants, such as, polyalkenylsuccinimide dispersants, such as polyalkenyl bis-succinimide dispersants;

The term "succinimide," which includes alkenyl or alkyl mono-, bis-succinimides and other higher analogs, is the product of a reaction of an hydrocarbyl (such as alkenyl) substituted succinic acid or anhydride (such as maleic acid or maleic anhydride) with a polyamine.

The term "bis-succinimide" describes a succinimide dispersant which is predominantly bis-succinimide. A predominantly bis-succinimide dispersant contains a major amount of bis-succinimide relative to other compounds, such as mono-succinimide, that may be present in the succinimide dispersant. The reaction product of hydrocarbyl-substituted succinic acylating agent (such as polyisobutylene succinic acid, polyisobutylene succinic anhydride, polyisobutylene succinate, commonly referred to as "PIBSA") with alkylene polyamine ("PAM") will result in a succinimide dispersant comprising a mixture of compounds including mono-succinimides and bis-succinimides (such as PIBSA-PAM). The amount of mono alkenyl succinimide and bis alkenyl succinimide produced may depend on the charge mole ratio of alkylene polyamine to succinic groups and the particular polyamine used. Charge mole ratios of alkylene polyamine to

succinic groups of about 1:1 may produce a predominantly mono-succinimide dispersant. Charge mole ratios of alkylene polyamine to succinic groups of about 1:2 may produce a predominantly bis-succinimide dispersant.

The PIBSAs and PIBSA-PAMs useful herein are typically derived from butylene polymers (preferably polyisobutylene) having a number average molecular weight (Mn) of 1600 g/mol or less, such as from 800 to 1500, such as from 900 to 1450 g/mol, such as from 1000 to 1400 g/mol, such as from 1100 to 1400 g/mol, such as from 1200 to 1400 g/mol, such as about 1300 g/mol). Preferably, The PIBSAs and PIBSA-PAMs useful herein are derived from butylene polymers (preferably polyisobutylene) having a number average molecular weight (Mn) of 1200 to 1400 g/mol (such as 1250 to 1350 g/mol, such as about 1300 g/mol).

The PIBSAs useful herein typically have a functionality (Fv) of 1.0 to 1.7, such as 1.30 to 1.60, such as 1.35 to 1.55, such as 1.40 to 1.50, such as about 1.45. Functionality is a measure of the average number of acid groups per reaction product of PIB and maleic anhydride. Fv is determined according to the following formula 1:

$$Fv = (SAP \times M_n)/((1122 \times A.I.) - (SAP \times MW)) \qquad (1)$$

wherein SAP is the saponification number (i.e., the number of milligrams of KOH consumed in the complete neutralization of the acid groups in one gram of the succinic-containing reaction product, as determined according to ASTM D94); $M_n$ is the number average molecular weight of the starting olefin polymer (polybutene); A.I. is the percent active ingredient of the succinic-containing reaction product (the remainder being unreacted polybutene and diluent); and MW is the molecular weight of the dicarboxylic acid-producing moiety (98 for maleic anhydride).

The PIBSAs useful herein typically have a saponification number (ASTM D94) of 80 to 105 mgKOH/g, such as 86 to 102 mgKOH/g, such as 90 to 98 mgKOH/g, such as about 92 to about 96 mgKOH/g.

The PIBSA PAMs useful herein typically have a coupling ratio of 0.8 to 1.3, such as 0.9 to 1.0. In the context of this disclosure, "coupling ratio" may be defined as a ratio of succinyl groups in the PIBSA to primary amine groups in the polyamine reactant.

The PIBSA PAMs useful herein typically have a nitrogen content of 0.5 to 2.0 mass%, such as 0.75 to 1.75 mass%, such as 1.0 to 1.5 mass%, such as 1.0 to 1.25 mass%, based upon the weight of the PIBSA-PAM.

Preferably the PIBSA-PAMs useful herein:

i) are derived from polyisobutylene having a number average molecular weight (Mn) of 1600 g/mol or less (such as from 800 to 1500, such as from 900 to 1450 g/mol, such as from 1000 to 1400 g/mol, such as from 1100 to 1400 g/mol, such as from 1200 to 1400 g/mol, such as about 1300 g/mol); and

(ii) have a functionality (Fv) of 1.0 to 1.7, such as 1.30 to 1.60, such as 1.35 to 1.55, such as 1.40 to 1.50, such as about 1.45; and

iii) have saponification number (ASTM D94) of 80 to 105 mgKOH/g, such as 86 to 102 mgKOH/g, such as 90 to 98 mgKOH/g, such as about 92 to about 96 mgKOH/g; and

iv) have a nitrogen content of 0.5 to 2.0 mass%, such as 0.75 to 1.75 mass%, such as 1.0 to 1.5 mass%, such as 1.0 to 1.25 mass%, based upon the weight of the PIBSA-PAM.

PIBSA-PAM useful the lubricating oil composition of the present invention further includes a cyclic carbonate post-treated polyalkenyl bis-succinimide dispersant (such as PIBSA-PAM). The polyalkenyl bis-succinimide dispersant of this embodiment can be prepared as described in *"Section I. Dispersants"* below, i.e., the reaction of a polyalkenyl-substituted succinic anhydride with a polyamine.

The polyalkenyl bis-succinimide dispersant(s) are post-treated with a cyclic carbonate to form a carbonate capped dispersant, such as a cyclic carbonate post-treated polyalkenyl bis-succinimide dispersants. Suitable cyclic carbonates for use in this invention include, but are not limited to, 1,3-dioxolan-2-one (ethylene carbonate): 4-methyl-1,3-dioxolan-2-one (propylene carbonate); 4-hydroxymethyl-1,3-dioxolan-2-one: 4,5-dimethyl-1,3-dioxolan-2-one; 4-ethyl-1,3-dioxolan-2-one (butylene carbonate): 4,4-dimethyl-1,3-dioxolan-2-one: 4-methyl-5-ethyl-1,3-dioxolan-2-one; 4,5-diethyl-1,3-dioxolan-2-one: 4,4-diethyl-1,3-dioxolan-2-one; 1,3-dioxan-2-one; 44-dimethyl-1,3-dioxan-2-one; 5,5-dimethyl-1,3-dioxan-2-one: 5,5-dihydroxymethyl-1,3-dioxan-2-one; 5-methyl-1,3-dioxan-2-one; 4-methyl-1,3-dioxan-2-one, 5-hydroxy-1,3-dioxan-2-one; 5-hydroxymethyl-5-methyl-1,3-dioxan-2-one; 5,5-diethyl-1,3-dioxan-2-one; 5-methyl-5-propyl-1,3-dioxan-2-one; 4,6-dimethyl-1,3-dioxan-2-one; 4,4,6-trimethyl-1,3-dioxan-2-one, spiro[1,3-oxa-2-cyclohexanone-5,5'-1',3'-oxa-2'-cyclohexanone] and the like. Other suitable cyclic carbonates may be prepared from saccharides such as sorbitol, glucose, fructose, galactose and the like and from vicinal diols prepared from $C_1$ to $C_{30}$ olefins by methods known in the art.

Several of these cyclic carbonates are commercially available such as 1,3-dioxolan-2-one or 4-methyl-1,3-dioxolan-2-one. Alternatively, cyclic carbonates may be readily prepared by known reactions. For example, reaction of phosgene with a suitable alpha alkane diol or an alkane-1,3-diol yields a cyclic carbonate for use of this invention, see. e.g.,

U.S. Pat. No. 4,115,206. the cyclic carbonates useful for this invention may be prepared by transesterification of a suitable alpha alkane diol or an alkane-1,3-diol with, e.g., diethyl carbonate under transesterification conditions, see, e.g., U.S. Pat. Nos. 4,384,115 and 4,423,205.

The polyalkenyl bis-succinimide dispersant can be post-treated with the cyclic carbonate according to common methods in the art. For example, a cyclic carbonate post-treated polyalkenyl bis-succinimide dispersant can be prepared by a process comprising charging the bis-succinimide dispersant in a reactor, optionally under a nitrogen purge, and heating at a temperature of from about 80° C. to about 170° C. Optionally, diluent oil may be charged under a nitrogen purge in the same reactor. A cyclic carbonate is charged, optionally under a nitrogen purge, to the reactor. This mixture is heated under a nitrogen purge to a temperature in range from about 130° C to about 200° C. Optionally, a vacuum is applied to the mixture for about 0.5 to about 2.0 hours to remove any water formed in the reaction.

Particularly useful carbonate capped dispersants include ethylene carbonate ("EC") capped polyisobutylene succinimide(s), where the one or more polyisobutylenes used to make the succinimide(s) each have a number average molecular weight (Mn) of 1600 g/mol or less (such as from 800 to 1500, such as from 900 to 1450 g/mol, such as from 1000 to 1400 g/mol, such as from 1100 to 1400 g/mol, such as from 1200 to 1400 g/mol, such as about 1300 g/mol). In embodiments, the carbonate capped dispersants can be ethylene carbonate capped polyisobutylene succinimide(s), where the one or more polyisobutylene used to make the succinimide(s) each have a number average molecular weight (Mn) of about 950 to about 2300 g/mol, such as about 950, about 1000, about 1200, about 1300, about 1400, about 1500, about 1600, about 1700, about 1800, about 1900, about 2000, about 2100, about 2200, about 2300, about 2400, about 2500 g/mol.

Preferably the carbonate capped succinimide(s) (such as ethylene carbonate capped PIBSA-PAMs) useful herein are derived from polyisobutylene having a number average molecular weight (Mn) of 1200 to 1400 g/mol (such as 1250 to 1350 g/mol, such as about 1300 g/mol).

Preferably the carbonate capped succinimide(s) (such as ethylene carbonate capped PIBSA-PAMs) useful herein have a ratio of ethylene carbonate to nitrogen (EC/N) ratio of 1 to 2, such as 1.25 to 1.75, such as 1.30 to 1.70.

Preferably the carbonate capped succinimide(s) (such as ethylene carbonate capped PIBSA-PAMs) useful herein have a total base number (TBN) of 10 to 50 mgKOH/g, such as 25 to 40 mgKOH/g, such as 20 to 30 mgKOH/g (ASTM D2896); and

Preferably the carbonate capped succinimide(s) (such as ethylene carbonate capped PIBSA-PAMs) useful herein have a nitrogen content of 0.5 to 5.0 mass%, such as 0.5 to 4.0 mass%, such as 0.75 to 3.0 mass%, such as 0.8 to 2.0 mass%, such as 1.0 to 2.0 mass%, such as about 1.5 to about 1.8 mass%, based upon the weight of the PIBSA-PAM.

Preferably the carbonate capped succinimide(s) (such as ethylene carbonate capped PIBSA-PAMs) useful herein have a degree of capping of 80% or more, such as 85% or more, such as from 85 to 100%.

Preferably the carbonate capped succinimide(s) (such as ethylene carbonate capped PIBSA-PAMs) useful herein have a residual amount of alkyl carbonate (such as ethylene carbonate) of 0.5 mass% or less, such as 0.4 mass% or less, such as from 0.01 to 0.3 mass% or less, such as from 0.1 to 0.1 mass %, such as 0 mass%.

Preferably the carbonate capped succinimide(s) (such as ethylene carbonate capped PIBSA-PAMs) useful herein:

i) are derived from polyisobutylene having a number average molecular weight (Mn) of 1600 g/mol or less (such as from 800 to 1500, such as from 900 to 1450 g/mol, such as from 1000 to 1400 g/mol, such as from 1100 to 1400 g/mol, such as from 1200 to 1400 g/mol, such as about 1300 g/mol); and

(ii) have a ratio of ethylene carbonate to nitrogen (EC/N) ratio of 1 to 2, such as 1.25 to 1.75, such as 1.30 to 1.70; and

iii have a total base number (TBN) of 10 to 50 mgKOH/g, such as 25 to 40 mgKOH/g, such as 20 to 30 mgKOH/g (ASTM D2896); and

iv) have a nitrogen content of 0.5 to 5.0 mass%, such as 0.5 to 4.0 mass%, such as 0.75 to 3.0 mass%, such as 0.8 to 2.0 mass%, such as 1.0 to 2.0 mass%, such as about 1.5 to about 1.8 mass%, based upon the weight of the PIBSA-PAM.

Generally, the amount of the one or more cyclic carbonate post-treated polyalkenyl bis-succinimide dispersants present in a lubricating oil composition of the present invention is greater than about 0.25 wt. %, or greater than about 0.5 wt. %, or greater than about 1.0 wt. %, or greater than about 1.2 wt. %, or greater than about 1.5 wt. %, or greater than about 1.8 wt. %, or greater than about 2.0 wt. %, or greater than about 2.5 wt. %, or greater than about 2.8 wt. %, on an active basis, based on the total weight of the lubricating oil composition. In another embodiment, the amount of the one or more cyclic carbonate post-treated polyalkenyl bis-succinimide dispersants present in a lubricating oil composition of the present invention can range from about 0.25 to 10 wt. %, or about 0.25 to 8.0 wt. %, or about 0.25 to 5.0 wt. %, or about 0.25 to 4.0 wt. %, or 0.25 to 3.0 wt. %, or about 0.5 to 10 wt. %, or about 0.5 to 8.0 wt. %, or about 0.5 to 5.0 wt. %, or about 0.5 to 4.0 wt. %, or about 0.5 to 3.0 wt. %, or about 0.5 to 10 wt. %, or about 0.5 to 8.0 wt. %, or about 1.0 to 5.0 wt. %, or about 1.0 to 4.0 wt. %, or about 1.0 to 3.0 wt. %, or about 1.5 to 10 wt. %, or about 1.5 to 8.0 wt. %, or about 1.5 to 5.0 wt. %, or about 1.5 to

4.0 wt. %, or about 1.5 to 3.0 wt. %, or about 2.0 to 10 wt. %, or about 2.0 to 8.0 wt. %, or about 2.0 to 5.0 wt. % or about 2.0 to 4.0 wt. % on an active basis, based on the total weight of the lubricating oil composition.

**B2. Comb Copolymer Viscosity Modifiers**

Comb copolymer viscosity modifiers particularly useful herein include those described in US Patent No. 11,685,874 or combinations of such with commercial comb copolymers described above. The comb copolymer viscosity modifiers useful herein typically comprise or are the reaction product, i.e. are made by polymerization of, monomers comprising:

(a) a polyalkylene (such as hydrogenated polybutadiene)-based (alk)acrylate ester macromonomer (which repeat units may optionally comprise from 7.0 wt% to 18 wt% of the repeat units of the comb copolymer viscosity modifier);
(b) a $C_3$-$C_8$ alkyl (alk)acrylate ester monomer (which repeat units may optionally comprise from 33 wt% to 64 wt% of the repeat units of the comb copolymer viscosity modifier);
(c) a $C_{12}$-$C_{24}$ alkyl (alk)acrylate ester monomer (which repeat units may comprise at least 16 weight %, and optionally up to 20.0 wt%, of the repeat units of the comb copolymer viscosity modifier); and
(d) a $C_1$-$C_{18}$ alkyl-endcapped or $C_6$-$C_{20}$ aryl-, aralkyl-, or alkaryl- endcapped $C_2$-$C_6$ oxyalkyl or $C_2$-$C_6$ oligo(alkylene glycol)-based (alk)acrylate ester monomer and/or hydroxyalkyl or H-endcapped oligo(alkylene glycol)-based (alk) acrylate monomer (which repeat units may comprise at least 3.0 wt%, and optionally up to 25 wt%, of the repeat units of the comb copolymer viscosity modifier) preferably having the following structure (II):

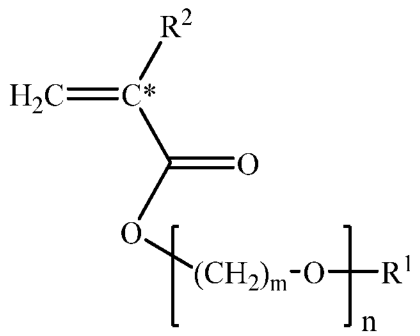

(II)

in which $R^2$ represents hydrogen or $C_1$-$C_2$ alkyl, m is from 2 to 6, such that $-(CH_2)_m-$represents a linear, branched, and/or cyclic alkyl group between oxygens, n is from 1 to 10, and $R^1$ represents H, a $C_1$-$C_{18}$ linear, branched, and/or cyclic alkyl endcap or a $C_6$-$C_{20}$ aryl, aralkyl, or alkaryl endcap, wherein: the combination of (c) and (d) collectively comprise more than 20.0 wt% of repeat units of the comb copolymer viscosity modifier, based upon the weight of all the repeat units in the copolymer.

In preferred embodiments,

1) the (c) $C_{12}$-$C_{24}$ alkyl (alk)acrylate ester monomer repeat units are present at 16 to less than 21 wt% (such as 16.5 to less than 20.0 wt%, such as 17 to less than 19.5 wt%), based upon the weight of all the repeat units in the copolymer,
2) the (d) $C_6$-$C_{20}$ aryl-, aralkyl-, or alkaryl- endcapped $C_2$-$C_6$ oxyalkyl or $C_2$-$C_6$ oligo(alkylene glycol)-based (alk) acrylate ester monomer repeat units are present at 3 to 7 wt%, based upon the weight of all the repeat units in the copolymer, and
3) the combination of (c) and (d) collectively comprise more than 20.0 wt% of repeat units of the comb copolymer viscosity modifier, based upon the weight of all the repeat units in the copolymer.

In embodiments, the monomer units (a), (b), (c) and (d) can be prepared as described in US 2021/0189281, particularly paragraphs [0038] to [0044] of US 2021/0189281.

In embodiments the (a) polyalkylene-based (alk)acrylate macromonomer can be made by reacting (alk)acrylic acid (or a salt thereof) with a polyalkylene-based macro-alcohol, such as Krasol® HLBH5000m (commercially available from Cray Valley of Exton, PA), a hydrogenated polybutadiene that has been mono-hydroxy-functionalized. Other macroalcohols based on hydrogenated polybutadienes can be obtained, e.g., according to British Publication No. GB 2270317. Some commercially available macromonomers may include, for example, Liquid L-1253™ and Liquid L-1203™ (Kuraray Americas Inc. (formerly of Kraton Polymers), Houston, TX), both made from hydrogenated polybutadienes that have been methacrylate-functionalized. Other polyolefin-based macromonomers and their preparations are also described, for example, in European Publication Nos. EP 0 621 293 and EP 0 699 694.

In some embodiments:

monomer (b) is a butyl acrylate and/or a butyl methacrylate, and/or

monomer (c) comprises a lauryl acrylate, a lauryl methacrylate, a myristyl acrylate, a myristyl methacrylate, a palmityl acrylate, a palmityl methacrylate, a heptadecanoyl acrylate, a hepatdecanoyl methacrylate, or a combination thereof, and/or

monomer (d) comprises an ethylene glycol acrylate, an ethylene glycol methacrylate, an ethylene glycol phenyl ether acrylate, an ethylene glycol phenyl ether methacrylate, an ethylene glycol benzyl ether acrylate, an ethylene glycol benzyl ether methacrylate, an ethylene glycol methyl ether acrylate, an ethylene glycol methyl ether methacrylate, an ethylene glycol ethyl ether acrylate, an ethylene glycol ethyl ether methacrylate, an oligo(ethylene glycol) acrylate, an oligo(ethylene glycol) methacrylate, an oligo(ethylene glycol) phenyl ether acrylate, an oligo(ethylene glycol) phenyl ether methacrylate, an oligo(ethylene glycol) benzyl ether acrylate, an oligo(ethylene glycol) benzyl ether methacrylate, an oligo(ethylene glycol) naphthyl ether acrylate, an oligo(ethylene glycol) naphthyl ether methacrylate, an oligo(ethylene glycol) methyl ether acrylate, an oligo(ethylene glycol) methyl ether methacrylate, an oligo(ethylene glycol) ethyl ether acrylate, an oligo(ethylene glycol) ethyl ether methacrylate, an oligo(ethylene glycol) butyl ether acrylate, an oligo(ethylene glycol) butyl ether methacrylate, a propylene glycol acrylate, a propylene glycol methacrylate, a propylene glycol phenyl ether acrylate, a propylene glycol phenyl ether methacrylate, a propylene glycol methyl ether acrylate, a propylene glycol methyl ether methacrylate, a propylene glycol ethyl ether acrylate, a propylene glycol ethyl ether methacrylate, an oligo(propylene glycol) acrylate, an oligo(propylene glycol) methacrylate, an oligo(propylene glycol) phenyl ether acrylate, an oligo(propylene glycol) phenyl ether methacrylate, an oligo(propylene glycol) benzyl ether acrylate, an oligo(propylene glycol) benzyl ether methacrylate, an oligo(propylene glycol) naphthyl ether acrylate, an oligo(propylene glycol) naphthyl ether methacrylate, an oligo(propylene glycol) methyl ether acrylate, an oligo(propylene glycol) methyl ether methacrylate, an oligo(propylene glycol) ethyl ether acrylate, an oligo(propylene glycol) ethyl ether methacrylate, an oligo(propylene glycol) propyl ether acrylate, an oligo(propylene glycol) propyl ether methacrylate, or a combination thereof.

Additionally or alternatively, in some embodiments, the repeat units of monomer (c) comprise at least 16.0 wt%, and may optionally comprise up to 35.0 wt%, of the repeat units of the comb copolymer viscosity modifier.

Additionally or alternatively, in some embodiments, the repeat units of monomer (c) comprise at least 18.0 wt%, and may optionally comprise up to 35.0 wt%, of the repeat units of the comb copolymer viscosity modifier.

Further additionally or alternatively, in some embodiments, the sum of the repeat units of monomer (c) and of monomer (d) collectively comprise more than 20 wt%, and may optionally comprise up to 35.0 wt%, of the repeat units of the comb copolymer viscosity modifier.

Yet further additionally or alternatively, in some embodiments, the comb copolymer viscosity modifier: (i) is made by polymerization of monomers that comprise substantially no styrene nor styrenic monomers; and (ii) comprises substantially no styrene-based nor styrenic-based repeat units.

In still further additional or alternative embodiments, the comb copolymer viscosity modifier is made by polymerization comprising monomers (a), (b), (c), (d), and (e) at least one additional olefinic monomer, different from monomers (a), (b), (c), and (d), and which is not a $C_6$-$C_{20}$ aryl, aralkyl, or alkaryl (alk)acrylate ester monomer.

The polymeric alkyl (alk)acrylate (co)polymers described herein are derived from polymerization (typically, but not limited to, free radical polymerization) of one or more alkyl (alk)acrylate monomers, dimers, trimers, oligomers, macromonomers, and/or the like (collectively abbreviated herein as "monomers," for brevity). Alkyl (alk)acrylate monomers typically have the following general chemical structure (I):

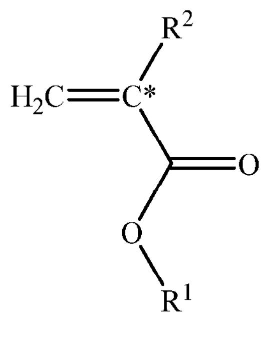

(I)

in which the C=C* double bond is an olefinic bond, $R^1$ represents the "alkyl" portion of the nomenclature on the oxygen side of the ester, and $R^2$ represents the parenthetical "alk" portion of the nomenclature. When $R^2$ is hydrogen, the monomer is

an alkyl acrylate; when $R^2$ is an alkyl group, the monomer is an alkyl alkacrylate. When present, the nature of the "alk" nomenclature is based on the number of carbons in the $R^2$ alkyl group - *e.g.,* one carbon (methyl) means a methacrylate, whereas two carbons (ethyl) means an ethacrylate, etc. Similarly, the nature of the "alkyl" nomenclature is based on the number of carbons in the $R^1$ alkyl group - *e.g.,* one carbon (methyl) means a methyl (alk)acrylate, whereas two carbons (ethyl) means an ethyl (alk)acrylate, etc. Thus, for example, a lauryl methacrylate means that $R^1$ is a $C_{12}$ alkyl moiety and $R^2$ is a $C_1$ alkyl moiety.

In particular, the comb copolymer viscosity modifiers according to the present disclosure can be made by polymerization comprising, consisting essentially of, or consisting of at least the following monomers: (a) a polyalkylene-based (alk)acrylate ester macromonomer; (b) a $C_3$-$C_8$ alkyl (alk)acrylate ester monomer; (c) a $C_{12}$-$C_{24}$ alkyl (alk)acrylate ester monomer; and (d) a $C_1$-$C_{18}$ alkyl-endcapped or $C_6$-$C_{20}$ aryl-, aralkyl-, or alkaryl- endcapped $C_2$-$C_6$ oxyalkyl or $C_2$-$C_6$ oligo(alkylene glycol)-based (alk)acrylate ester monomer and/or hydroxyalkyl or H-endcapped oligo(alkylene glycol)-based (alk)acrylate monomer. In some embodiments, the comb copolymer viscosity modifier may further comprise (e) one or more other olefinic comonomers, different from monomers (a), (b), (c), and (d), and which is not a $C_6$-$C_{20}$ aryl, aralkyl, or alkaryl (alk)acrylate ester monomer. For example, monomer (d) can have the following structure (II):

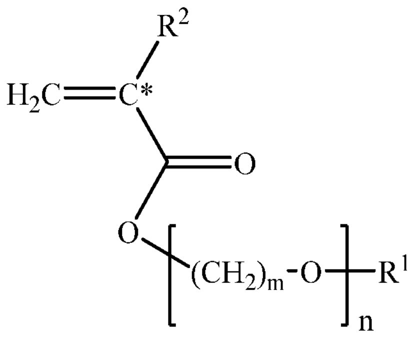

(II)

where $R^2$ represents hydrogen or $C_1$-$C_2$ alkyl (in particular, hydrogen or methyl); m is from 2 to 6 (in particular, from 2 to 4), such that $-(CH_2)_m-$ may represent a linear, branched, and/or cyclic alkyl group between oxygens; n is from 1 to 10 (in particular, from 1 to 6); and $R^1$ represents H, a $C_1$-$C_{18}$ linear, branched, and/or cyclic alkyl endcap, or a $C_6$-$C_{20}$ aryl, aralkyl, or alkaryl endcap (in particular, H, $C_1$-$C_7$ linear, branched, and/or cyclic alkyl, or $C_6$-$C_{11}$ aryl, aralkyl, or alkaryl). When $R^1$ is hydrogen, such monomers may be considered hydroxylacrylates or hydroxymethacrylates; when $R^1$ is not hydrogen, such monomers may be abbreviated herein as "ether acrylates" (EAs) or "ether methacrylates" (EMAs).

In some embodiments, the comb copolymer viscosity modifier may be made by polymerization of monomers that comprise substantially no styrene nor styrenic monomers and/or may comprise substantially no styrene-based nor styrenic-based repeat units. It is important to note that the polyalkylene-based (alk)acrylate ester macromonomer, (a), comprises repeat units as formed, which repeat units are considered repeat units of the comb copolymer viscosity modifier herein, even if such monomers are not called out specifically. Thus, when a comb copolymer comprises substantially no styrene-based nor styrenic-based repeat units herein, that includes the repeat units of the macromonomer, as well as the repeat units of the other comonomers. As used herein, "styrenic" monomers are defined as those monomers that have a styrene (vinyl benzene) core, *i.e.,* containing 8 to 17 carbon atoms, an olefinic double bond, and a 6-membered, all-carbon aromatic moiety (including multi-ring systems including a phenyl ring) attached directly to one end of the olefinic double bond and whose ring hydrogens may be optionally substituted (e.g., a phenyl, naphthenyl, fluorenyl, anthracenyl, phenanthrenyl, biphenylenyl, or acenaphthylenyl moiety).

Regarding the amount of (a) polyalkylene-based (alk)acrylate ester macromonomer used to make the comb copolymer viscosity modifier, repeat units based on the polyalkylene-based (e.g., hydrogenated polybutadiene-based) (alk)acrylate ester macromonomer may comprise at least 5.0 wt% *(e.g.,* at least 6.0 wt%, at least 7.0 wt%, at least 8.0 wt%, at least 9.0 wt%, at least 10 wt%, at least 11 wt%, at least 12 wt%, or at least 13 wt%) and/or up to 30 wt% *(e.g.,* up to 28 wt%, up to 25 wt%, up to 22 wt%, up to 20 wt%, up to 18 wt%, or up to 15 wt%) of the repeat units of the comb copolymer viscosity modifier. For example, repeat units based on the polyalkylene-based (e.g., hydrogenated polybutadiene-based) (alk) acrylate ester macromonomer may comprise from 5.0 wt% to 30 wt%, from 5.0 wt% to 28 wt%, from 5.0 wt% to 25 wt%, from 5.0 wt% to 22 wt%, from 5.0 wt% to 20 wt%, from 5.0 wt% to 18 wt%, from 5.0 wt% to 15 wt%, 6.0 wt% to 30 wt%, from 6.0 wt% to 28 wt%, from 6.0 wt% to 25 wt%, from 6.0 wt% to 22 wt%, from 6.0 wt% to 20 wt%, from 6.0 wt% to 18 wt%, from 6.0 wt% to 15 wt%, 7.0 wt% to 30 wt%, from 7.0 wt% to 28 wt%, from 7.0 wt% to 25 wt%, from 7.0 wt% to 22 wt%, from 7.0 wt% to 20 wt%, from 7.0 wt% to 18 wt%, from 7.0 wt% to 15 wt%, 8.0 wt% to 30 wt%, from 8.0 wt% to 28 wt%, from 8.0 wt% to 25 wt%, from 8.0 wt% to 22 wt%, from 8.0 wt% to 20 wt%, from 8.0 wt% to 18 wt%, from 8.0 wt% to 15 wt%, from 9.0 wt% to 30 wt%, from 9.0 wt% to 28 wt%, from 9.0 wt% to 25 wt%, from 9.0 wt% to 22 wt%, from 9.0 wt% to 20 wt%, from 9.0 wt% to 18 wt%, from 9.0 wt% to 15 wt%, from 10 wt% to 30 wt%, from 10 wt% to 28 wt%, from 10 wt% to 25 wt%, from 10 wt% to 22

wt%, from 10 wt% to 20 wt%, from 10 wt% to 18 wt%, from 10 wt% to 15 wt%, from 11 wt% to 30 wt%, from 11 wt% to 28 wt%, from 11 wt% to 25 wt%, from 11 wt% to 22 wt%, from 11 wt% to 20 wt%, from 11 wt% to 18 wt%, from 11 wt % to 15 wt%, from 12 wt% to 30 wt%, from 12 wt% to 28 wt%, from 10 wt% to 25 wt%, from 12 wt% to 22 wt%, from 12 wt% to 20 wt%, from 12 wt% to 18 wt%, from 12 wt% to 15 wt%, from 13 wt% to 30 wt%, from 13 wt% to 28 wt%, from 13 wt% to 25 wt%, from 13 wt% to 22 wt%, from 13 wt% to 20 wt%, from 13 wt% to 18 wt%, or from 13 wt% to 15 wt%, based on the total weight of repeat units of the comb copolymer viscosity modifier. In particular, repeat units based on the polyalkylene-based (*e.g.*, hydrogenated polybutadiene-based) (alk)acrylate ester macromonomer may comprise from 5.0 wt% to 22 wt%, from 6.0 wt% to 20 wt%, from 7.0 wt% to 18 wt%, or from 9.0 wt% to 15 wt% of the repeat units of the comb copolymer viscosity modifier.

Regarding the amount of (b) C3-C8 alkyl (alk)acrylate ester monomer used to make the comb copolymer viscosity modifier, repeat units based on the C3-C8 alkyl (alk)acrylate ester monomer may comprise from 30 wt% to 71 wt%, e.g., from 30 wt% to 68 wt%, from 30 wt% to 66 wt%, from 30 wt% to 64 wt%, from 30 wt% to 62 wt%, from 30 wt% to 60 wt%, from 30 wt% to 58 wt%, from 30 wt% to 56 wt%, from 30 wt% to 54 wt%, from 30 wt% to 52 wt%, from 30 wt% to 50 wt%, from 30 wt% to 48 wt%, from 33 wt% to 71 wt%, from 33 wt% to 68 wt%, from 33 wt% to 66 wt%, from 33 wt% to 64 wt%, from 33 wt% to 62 wt%, from 33 wt% to 60 wt%, from 33 wt% to 58 wt%, from 33 wt% to 56 wt%, from 33 wt% to 54 wt%, from 33 wt% to 52 wt%, from 33 wt% to 50 wt%, from 33 wt% to 48 wt%, from 35 wt% to 71 wt%, from 35 wt% to 68 wt%, from 35 wt% to 66 wt%, from 35 wt% to 64 wt%, from 35 wt% to 62 wt%, from 35 wt% to 60 wt%, from 35 wt% to 58 wt%, from 35 wt% to 56 wt%, from 35 wt% to 54 wt%, from 35 wt% to 52 wt%, from 35 wt% to 50 wt%, from 35 wt% to 48 wt%, from 38 wt% to 71 wt%, from 38 wt% to 68 wt%, from 38 wt% to 66 wt%, from 38 wt% to 64 wt%, from 38 wt% to 62 wt%, from 38 wt% to 60 wt%, from 38 wt% to 58 wt%, from 38 wt% to 56 wt%, from 38 wt% to 54 wt%, from 38 wt% to 52 wt%, from 38 wt% to 50 wt%, from 38 wt% to 48 wt%, from 40 wt% to 71 wt%, from 40 wt% to 68 wt%, from 40 wt% to 66 wt%, from 40 wt% to 64 wt%, from 40 wt% to 62 wt%, from 40 wt% to 60 wt%, from 40 wt% to 58 wt%, from 40 wt% to 56 wt%, from 40 wt% to 54 wt%, from 40 wt% to 52 wt%, from 40 wt% to 50 wt%, from 40 wt% to 48 wt%, from 45 wt% to 71 wt%, from 45 wt% to 68 wt%, from 45 wt% to 66 wt%, from 45 wt% to 64 wt%, from 45 wt% to 62 wt%, from 45 wt% to 60 wt%, from 45 wt% to 58 wt%, from 45 wt% to 56 wt%, from 45 wt% to 54 wt%, from 45 wt% to 52 wt%, from 45 wt% to 50 wt%, from 45 wt% to 48 wt%, from 50 wt% to 71 wt%, from 50 wt% to 68 wt%, from 50 wt% to 66 wt%, from 50 wt% to 64 wt%, from 50 wt% to 62 wt%, from 50 wt% to 60 wt%, from 50 wt% to 58 wt%, from 50 wt% to 56 wt%, from 50 wt% to 54 wt%, or from 50 wt% to 52 wt%, of the repeat units of the comb copolymer viscosity modifier. In particular, repeat units based on the C3-C8 alkyl (alk)acrylate ester monomer may comprise from 33 wt% to 64 wt%, from 35 wt% to 60 wt%, or from 38 wt% to 58 wt%, of the repeat units of the comb copolymer viscosity modifier.

Regarding (c) the $C_{12}$-$C_{24}$ alkyl (alk)acrylate ester monomer, and referring back to the general formula (I) above for acrylate monomers, the optional "alk" can advantageously represent an $R^2$ of hydrogen (no "alk") or $C_1$-$C_2$ alkyl (in particular, hydrogen or methyl). Thus, given the $C_{12}$-$C_{24}$ alkyl range for the acrylate ester moiety of $R^1$, this monomer can comprise or be a linear, cyclic, or branched $C_{12}$ acrylate, a linear, cyclic, or branched $C_{12}$ methacrylate, a linear, cyclic, or branched $C_{14}$ acrylate, a linear, cyclic, or branched $C_{14}$ methacrylate, a linear, cyclic, or branched $C_{16}$ acrylate, a linear, cyclic, or branched $C_{16}$ methacrylate, a linear, cyclic, or branched $C_{17}$ acrylate, a linear, cyclic, or branched $C_{17}$ methacrylate, a linear, cyclic, or branched C18 acrylate, a linear, cyclic, or branched $C_{18}$ methacrylate, or a combination or polymerization/oligomerization reaction product thereof. In particular, the $C_{12}$-$C_{24}$ alkyl (alk)acrylate ester monomer can comprise, consist essentially of, or be a lauryl acrylate, a lauryl methacrylate, a myristyl acrylate, a myristyl methacrylate, a palmityl acrylate, a palmityl methacrylate, a heptadecanoyl acrylate, a hepatdecanoyl methacrylate, or a combination or polymerization/oligomerization reaction product thereof.

Regarding the amount of (c) the $C_{12}$-$C_{24}$ alkyl (alk)acrylate ester monomer used to make the comb copolymer viscosity modifier, repeat units based on the $C_{12}$-$C_{24}$ alkyl (alk)acrylate ester monomer can comprise at least 16.0 wt% (e.g., at least 18.5 wt%, at least 19.0 wt%, at least 19.5 wt%, at least 20.0 wt%, at least 20.5 wt%, at least 21.0 wt%, at least 21.5 wt%, at least 22.0 wt%, at least 22.5 wt%, at least 23.0 wt%, at least 23.5 wt%, at least 24.0 wt%, at least 24.5 wt%, or at least 25.0 wt%) and optionally also up to 35.0 wt% (e.g., up to 34.0 wt%, up to 33.0 wt%, up to 32.0 wt%, up to 31.0 wt%, up to 30.0 wt%, up to 29.0 wt%, up to 28.0 wt%, or up to 27.0 wt%) of repeat units of the comb copolymer viscosity modifier.

Alternately, the amount of (c) the $C_{12}$-$C_{24}$ alkyl (alk)acrylate ester monomer used to make the comb copolymer viscosity modifier, repeat units based on the $C_{12}$-$C_{24}$ alkyl (alk)acrylate ester monomer can comprise at least 16.0 wt% (e.g., at least 18.5 wt%, at least 19.0 wt%, at least 19.5 wt%) and optionally but preferably also up to less than 20.0 wt% (e.g., up to 20.9 wt%, up to 20.5 wt%, up to 20.0 wt%) of repeat units of the comb copolymer viscosity modifier. In particular, repeat units based on the $C_{12}$-$C_{24}$ alkyl (alk)acrylate ester monomer may comprise from 16.0 wt% to less than 21 wt% (such as from 16.5 wt% to 20.5 wt%, such as from about 17 wt% to about 20 wt%, such as about 19 wt%), of the repeat units of the comb copolymer viscosity modifier.

Regarding the amount of (d) the $C_1$-$C_{18}$ alkyl-endcapped or $C_6$-$C_{20}$ aryl-, aralkyl-, or alkaryl- endcapped $C_2$-$C_6$ oxyalkyl or $C_2$-$C_6$ oligo(alkylene glycol)-based (alk)acrylate ester monomer and/or hydroxyalkyl or H-endcapped oligo(alkylene glycol)-based (alk)acrylate monomer used to make the comb copolymer viscosity modifier, repeat units based on monomer (d) can comprise at least 3.0 wt% *(e.g.,* at least 4.0 wt%, at least 5.0 wt%, at least 6.0 wt%, at least 7.0 wt%, at

least 8.0 wt%, at least 9.0 wt%, at least 10.0 wt%, at least 11.0 wt%, or at least 12.0 wt%) of repeat units of the comb copolymer viscosity modifier and optionally but preferably also up to 28 wt% *(e.g.,* up to 27 wt%, up to 26 wt%, up to 25 wt%, up to 24 wt%, up to 23 wt%, up to 22 wt%, up to 21 wt%, up to 20 wt%, up to 19 wt%, up to 18 wt%, up to 17 wt%, or up to 16 wt%). In particular, repeat units based on monomer (d) may comprise at least 3.0 wt%, up to 28 wt%, up to 20 wt%, from 3.0 wt% to 25 wt%, or from 8.0 wt% to 18 wt%, of the repeat units of the comb copolymer viscosity modifier.

Comb copolymer viscosity modifiers according to the present disclosure may advantageously exhibit an intermediate weight average molecular weight by gel permeation chromatography (GPC; *a.k.a.* size exclusion chromatography or SEC). GPC specification and analysis conditions for determining molecular weight distributions are as follows: Waters Acquity APC with Waters RID and UV215 nm; software: Empower 3; columns (in series 3 x 4.6 x 150 mm): APC-XT 450 (~2.5 μ), APC-XT200 (~2.5 μ), and APC-XT45 (~1.7 μm); mobile phase and flow: >99.9% Fisher optima gold label HPLC grade uninhibited THF; flow rate: ~0.25 mL/min with ~35 min retention time; oven temperature: ~35°C; sample concentration: ~1 mg (solid polymer)/mL; sample preparation: substantially complete dissolution overnight (~8-20 hours), followed by filtration through ~0.45 μm PTFE filter; injection volume: ~10 μL; polystyrene calibration curve. As such, in some embodiments, the weight average molecular weight by GPC of the comb copolymer viscosity modifiers according to the present disclosure may be less than or equal to 1,000,000 g/mol (*e.g.,* less than or equal to 850,000 g/mol, less than or equal to 625,000 g/mol, less than or equal to 613,000 g/mol, less than or equal to 600,000 g/mol, less than or equal to 590,000 g/mol, less than or equal to 580,000 g/mol, from 200,000 g/mol to 1,000,000 g/mol, from 200,000 g/mol to 850,000 g/mol, from 200,000 g/mol to 625,000 g/mol, from 200,000 g/mol to 613,000 g/mol, from 200,000 g/mol to 600,000 g/mol, from 200,000 g/mol to 590,000 g/mol, from 200,000 g/mol to 580,000 g/mol, from 250,000 g/mol to 1,000,000 g/mol, from 250,000 g/mol to 850,000 g/mol, from 250,000 g/mol to 625,000 g/mol, from 250,000 g/mol to 610,000 g/mol, from 250,000 g/mol to 600,000 g/mol, from 250,000 g/mol to 590,000 g/mol, from 250,000 g/mol to 580,000 g/mol, from 300,000 g/mol to 1,000,000 g/mol, from 300,000 g/mol to 850,000 g/mol, from 300,000 g/mol to 625,000 g/mol, from 300,000 g/mol to 610,000 g/mol, from 300,000 g/mol to 600,000 g/mol, from 300,000 g/mol to 590,000 g/mol, from 300,000 g/mol to 580,000 g/mol, from 350,000 g/mol to 1,000,000 g/mol, from 350,000 g/mol to 850,000 g/mol, from 350,000 g/mol to 625,000 g/mol, from 350,000 g/mol to 610,000 g/mol, from 350,000 g/mol to 600,000 g/mol, from 350,000 g/mol to 590,000 g/mol, or from 350,000 g/mol to 580,000 g/mol; in particular, less than or equal to 625,000 g/mol, less than or equal to 600,000 g/mol, from 250,000 g/mol to 625,000 g/mol, or from 300,000 g/mol to 850,000 g/mol), based on polystyrene standards.

Comb copolymer viscosity modifiers according to the present disclosure may advantageously exhibit a relatively high oil solubility or dispersibility. As used herein, the term "oil-soluble" means that a composition comprising at least 0.1 wt%, preferably at least 0.5 wt%, of a comb copolymer viscosity modifier and at least 85 wt% (preferably the remainder) of a lubricant oil basestock may be combined relatively simply without stable macroscopic phase formation. Oil solubility and/or dispersibility may depend on the nature of the basestock, as well as the polymer chemistry *(e.g.,* proportion of lipophilic side chains), *inter alia.*

Combinations with traditional comb copolymers

The comb copolymers described herein may further be combined with traditional comb copolymer viscosity modifiers such as acrylate based branched copolymers typically prepared by (co)polymerizing polyalkyl (meth)acrylate macromonomer(s) with alkyl (meth)acrylate(s) and other optional monomers (such as alkyl (meth)acrylates, styrene, alkyl styrenes, vinyl esters of carboxylic acids, (meth)acrylic acid esters and amides, and vinyl heterocyclic compounds. Useful comb copolymer and their methods of production are described in US 5,756,433, EP 0 637 332, EP 0 937 769, EP 0 979 834, US 3,702,300, EP 0 969 077, EP 0 744 457, EP 0 621 293 and EP 0 699 694.

Examples of commercially available traditional comb copolymers may include the following: polymethacrylates, some of which have dispersant properties (such as those in the Viscoplex™ series from RohMax, the Hitec™ series from Afton, and LZ 7702™, LZ 7727™, LZ 7725™ and LZ 7720C™ from Lubrizol); olefingraft-polymethacrylate polymers (such as Viscoplex™ 2-500 and 2-600 from Evonik/RohMax); and hydrogenated polyisoprene star polymers (such as Shellvis™ 200 and 260, from Shell). Also included as traditional comb copolymers are Asteric™ polymers from Lubrizol (methacrylate polymers with radial or star architecture). Other commercially available traditional polymethacrylates comb copolymers useful herein are available from Rohm and Haas Company/Evonik as Viscoplex™ 0-410, Viscoplex™ 10-930, Viscoplex™ 5029, Acryloid™ 1253, Acryloid™ 1265, Acryloid™ 1263, Acryloid™ 1267, Acryloid™ 954, from Texaco as TLA 233, TLA 5010 and TC 10124. Some of these polymethacrylates may be PMA/OCP (olefin copolymer) type polymers. The combination of comb copolymer viscosity modifiers described herein and traditional comb copolymers viscosity modifiers may be used in the lubricating oil composition at a concentration of up to 20% or 60% or 70% by weight. Concentrations of 0.1 to 12%, 0.1 to 4%, 0.2 to 3%, 1 to 12% or 3 to 10% by weight may be used.

The lubricating composition according to the present disclosure may further comprise one or more additives such as detergents, friction modifiers, antioxidants, pour point depressants, anti-foam agents, viscosity modifiers, dispersants, corrosion inhibitors, anti-wear agents, extreme pressure additives, demulsifiers, seal compatibility agents, additive diluent base oils, etc. Specific examples of such additives are described in, for example, Kirk-Othmer Encyclopedia of Chemical

Technology, third edition, volume 14, pp. 477-526, and several are discussed in further detail below.

**C. Detergents**

The lubricating composition may comprise one or more metal detergents (such as blends of metal detergents) also referred to as a "detergent additive." Metal detergents typically function both as detergents to reduce or remove deposits and as acid neutralizers or rust inhibitors, thereby reducing wear and corrosion and extending engine life. Detergents generally comprise a polar head with a long hydrophobic tail, with the polar head comprising a metal salt of an acidic organic compound. The salts may contain a substantially stoichiometric amount of the metal in which case they are usually described as normal or neutral salts, and would typically have a total base number ("TBN" as measured by ASTM D2896) of up to 150 mgKOH/g, such as from 0 to 80 (or 5-30) mgKOH/g. A large amount of a metal base may be incorporated by reacting excess metal compound *(e.g.,* an oxide or hydroxide) with an acidic gas *(e.g.,* carbon dioxide). Such detergents, sometimes referred to as overbased, may have a TBN of 100 mgKOH/g or more (such as 200 mgKOH/g or more), and typically will have a TBN of 250 mgKOH/g or more, such as 300 mgKOH/g or more, such as from 200 to 800 mgKOH/g, 225 to 700 mgKOH/g, 250 to 650 mgKOH/g, or 300 to 600 mgKOH/g, such as 150 to 650 mgKOH/g.

Suitable detergents include, oil-soluble neutral and overbased sulfonates, phenates, sulfurized phenates, thiophosphonates, salicylates, naphthenates and other oil-soluble carboxylates of a metal, particularly the alkali metals (Group 1 metals, *e.g.*, Li, Na, K, Rb) or alkaline earth metals (Group 2 metals, *e.g.,* Be, Mg, Ca, Sr, Ba), particularly, sodium, potassium, lithium, calcium, and magnesium, such as Ca and/or Mg. Furthermore, the detergent may comprise a hybrid detergent comprising any combination of sodium, potassium, lithium, calcium, or magnesium salts of sulfonates, phenates, sulfurized phenates, thiophosphonates, salicylates, and naphthenates or other oil-soluble carboxylates of a Group 1 and/or 2 metal.

Preferably, the detergent additive(s) useful in the present disclosure comprises calcium and/or magnesium metal salts. The detergent may be a calcium and/or magensium carboxylate (*e.g.*, salicylates), sulfonate, or phenate detergent. More preferably, the detergent additives are selected from magnesium salicylate, calcium salicylate, magnesium sulfonate, calcium sulfonate, magnesium phenate, calcium phenate, and hybrid detergents comprising two, three, four, or more of more of these detergents and/or combinations thereof.

The metal-containing detergent may also include "hybrid" detergents formed with mixed surfactant systems including phenate and/or sulfonate components, e.g., phenate/salicylates, sulfonate/phenates, sulfonate/salicylates, sulfonates/phenates/salicylates, as described, for example, in US Patent Nos. 6,429,178; 6,429,179; 6,153,565; and 6,281,179. Where, for example, a hybrid sulfonate/phenate detergent is employed, the hybrid detergent would be considered equivalent to amounts of distinct phenate and sulfonate detergents introducing like amounts of phenate and sulfonate soaps, respectively.

The overbased metal-containing detergent may be sodium salts, calcium salts, magnesium salts, or mixtures thereof of the phenates, sulfur-containing phenates, sulfonates, salixarates, and salicylates. Overbased phenates and salicylates typically have a total base number of 180 to 650 mgKOH/g, such as 200 to 450 mgKOH/g. Overbased sulfonates typically have a total base number of 250 to 600 mgKOH/g, or 300 to 500 mgKOH/g. In embodiments, the sulfonate detergent may be predominantly a linear alkylbenzene sulfonate detergent having a metal ratio of at least 8 as is described in paragraphs [0026] to [0037] of US Patent Application Publication No. 2005/065045 (and granted as US Patent No. 7,407,919). The overbased detergent may be present at 0 wt % to 15 wt %, or 0.1 wt % to 10 wt %, or 0.2 wt % to 8 wt %, or 0.2 wt % to 3 wt %, based upon of the lubricating composition. For example, in a heavy-duty diesel engine, the detergent may be present at 2 wt % to 3 wt % of the lubricating composition. For a passenger car engine, the detergent may be present at 0.2 wt % to 1 wt % of the lubricating composition.

The detergent additive(s) may comprise one or more magnesium sulfonate detergents. The magnesium detergent may be a neutral salt or an overbased salt. Suitably the magnesium detergent is an overbased magnesium sulfonate having a TBN of from 80 to 650 mgKOH/g (ASTM D2896), such as 200 to 500 mgKOH/g, such as 240 to 450 mgKOH/g.

Alternately, the detergent additive(s) is a magnesium salicylate. Suitably the magnesium detergent is a magnesium salicylate having TBN of from 30 to 650 mgKOH/g (ASTM D2896), such as 50 to 500 mgKOH/g, such as 200 to 500 mgKOH/g, such as 240 to 450 mgKOH/g or alternately of 150 mgKOH/g or less, such as 100 mgKOH/g or less.

Alternately, the detergent additive(s) is a combination of magnesium salicylate and magnesium sulfonate.

The magnesium detergent provides the lubricating composition thereof with from 200-4000 ppm of magnesium atoms, suitably from 200-2000 ppm, from 300 to 1500 or from 450-1200 ppm of magnesium atoms (ASTM D5185).

The detergent composition may comprise (or consist of) a combination of one or more magnesium sulfonate detergents and one or more calcium salicylate detergents.

The detergent composition may comprise (or consist of) a combination of one or more magnesium sulfonate detergents and one or more calcium sulfonate detergents.

The detergent composition may comprise (or consist of) a combination of one or more magnesium salicylate

detergents and one or more calcium salicylate detergents.

The combination of one or more magnesium detergents and one or more calcium detergents provides the lubricating composition thereof with: 1) from 200-4000 ppm of magnesium atoms, suitably from 200-2000 ppm, from 300 to 1500 ppm or from 450-1200 ppm of magnesium atoms (ASTM D5185), and 2) at least 500 ppm, preferably at least 750 ppm, more preferably at least 900 ppm of atomic calcium, such as from 500-4000 ppm, preferably from 750-3000 ppm, more preferably from 900-2000 ppm atomic calcium (ASTM D5185).

The detergent may comprise one or more calcium detergents such as calcium carboxylate (*e.g.*, salicylate), sulfonate, or phenate detergent.

Suitably the calcium detergent has a TBN of from 30 to 700 mgKOH/g (ASTM D2896), such as 50 to 650 mgKOH/g, such as 200 to 500 mgKOH/g, such as 240 to 450 mgKOH/g or alternately of 150 mgKOH/g or less, such as 100 mgKOH/g or less, or 200 mgKOH/g or more, or 300 mgKOH/g or more, or 350 mgKOH/g or more.

Suitably, the calcium detergent is a calcium salicylate, sulfonate, or phenate having a TBN of from 30 to 700 mgKOH/g, 30 to 650 mgKOH/g (ASTM D2896), such as 50 to 650 mgKOH/g, such as 200 to 500 mgKOH/g, such as 240 to 450 mgKOH/g or alternately of 150 mgKOH/g or less, such as 100 mgKOH/g or less, or 200 mgKOH/g or more, or 300 mgKOH/g or more, or 350 mgKOH/g or more.

Calcium detergent is typically present in amount sufficient to provide at least 500 ppm, preferably at least 750 more preferably at least 900 ppm atomic calcium to the lubricating oil composition (ASTM D5185). If present, any calcium detergent is suitably present in amount sufficient to provide no more than 4000 ppm, preferably no more than 3000 ppm, more preferably no more than 2000 ppm atomic calcium to the lubricating oil composition (ASTM D5185). If present, any calcium detergent is suitably present in amount sufficient to provide at from 500-4000 ppm, preferably from 750-3000 ppm more preferably from 900-2000 ppm atomic calcium to the lubricating oil composition (ASTM D5185).

Suitably the total atomic amount of metal from detergent in the lubrication composition according to all aspects of the disclosure is no more than 5000 ppm, preferably no more than 4000 pm and more preferably no more than 2000 ppm (ASTM D5185). The total amount of atomic metal from detergent in the lubrication oil composition according to all aspects of the disclosure is suitably at least 500 ppm, preferably at least 800 ppm and more preferably at least 1000 ppm (ASTM D5185). The total amount of atomic metal from detergent in the lubrication oil composition according to all aspects of the disclosure is suitably from 500 to 5000 ppm, preferably from 500 to 3000 ppm and more preferably from 500 to 2000 ppm (ASTM D5185).

Sulfonate detergents may be prepared from sulfonic acids which are typically obtained by the sulfonation of alkyl substituted aromatic hydrocarbons, such as those obtained from the fractionation of petroleum or by the alkylation of aromatic hydrocarbons. Examples includ those obtained by alkylating benzene, toluene, xylene, naphthalene, diphenyl, or their halogen derivatives such as chlorobenzene, chlorotoluene, and chloronaphthalene. The alkylation may be carried out in the presence of a catalyst with alkylating agents having from about 3 to more than 70 carbon atoms. The alkaryl sulfonates usually contain from about 9 to about 80 or more carbon atoms, preferably from about 16 to about 60 carbon atoms per alkyl substituted aromatic moiety. The oil soluble sulfonates or alkaryl sulfonic acids may be neutralized with oxides, hydroxides, alkoxides, carbonates, carboxylate, sulfides, hydrosulfides, nitrates, borates and ethers of the metal. The amount of metal compound is chosen having regard to the desired TBN of the final product, but typically ranges from about 100 to 220 mass % (preferably at least 125 mass %) of that stoichiometrically required.

Metal salts of phenols and sulfurized phenols are prepared by reaction with an appropriate metal compound such as an oxide or hydroxide and neutral or overbased products may be obtained by methods well known in the art. Sulfurized phenols may be prepared by reacting a phenol with sulfur or a sulfur-containing compound such as hydrogen sulfide, sulfur monohalide, or sulfur dihalide, to form products which are generally mixtures of compounds in which 2 or more phenols are bridged by sulfur-containing bridges.

Carboxylate detergents, e.g., salicylates, can be prepared by reacting an aromatic carboxylic acid (such as a $C_{5}$-$_{100}$, $C_{9}$-$_{30}$, $C_{14}$-$_{24}$ alkyl-substituted hydroxy-benzoic acid) with an appropriate metal compound such as an oxide or hydroxide and neutral or overbased products may be obtained by methods well known in the art. The aromatic moiety of the aromatic carboxylic acid can contain heteroatoms, such as nitrogen and oxygen. Preferably, the moiety contains only carbon atoms; more preferably the moiety contains six or more carbon atoms; for example, benzene is a preferred moiety. The aromatic carboxylic acid may contain one or more aromatic moieties, such as one or more benzene rings, either fused or connected via alkylene bridges.

Preferred substituents in oil-soluble salicylic acids are alkyl substituents. In alkyl - substituted salicylic acids, the alkyl groups advantageously contain 5 to 100, preferably 9 to 30, especially 14 to 20, carbon atoms. Where there is more than one alkyl group, the average number of carbon atoms in all of the alkyl groups is preferably at least 9 to ensure adequate oil solubility.

In embodiments, the ratio of atomic detergent metal to atomic molybdenum in the lubricating oil composition may be less than 3:1, such as less than 2:1.

Further, as metal organic and inorganic base salts, which are used as detergents can contribute to the sulfated ash content of a lubricating oil composition, in embodiments of the present disclosure, the amounts of such additives are

minimized. In order to maintain a low sulfur level, salicylate detergents can be used and the lubricating composition herein may comprise one or more salicylate detergents (said detergents are preferably used in amounts in the range of 0.05 to 20.0 wt %, more preferably from 1.0 to 10.0 wt % and most preferably in the range of from 2.0 to 5.0 wt %, based on the total weight of the lubricating composition).

The total sulfated ash content of the lubricating composition herein is typically not greater than 2.0 wt %, alternately at a level of not greater than 1.0 wt % and alternately at a level of not greater than 0.8 wt %, based on the total weight of the lubricating composition as determined by ASTM D874.

Furthermore, it is useful that each of the detergents, independently, have a TBN (total base number) value in the range of from 10 to 700 mgKOH/g, 10 to 500 mgKOH/g, alternately in the range of from 100 to 650, alternately in the range of from 10 to 500 mgKOH/g, alternately in the range of from 30 to 350 mgKOH/g, and alternately in the range of from 50 to 300 mgKOH/g, as measured by ISO 3771.

The sulfonate detergents (such as Ca and/or Mg sulfonate detergents) may be present in an amount to deliver 0.1 wt % to 1.5 wt %, or 0.15 to 1.2 wt %, or 0.2 wt % to 0.9 wt % sulfonate soap to the lubricant composition.

The salicylate detergents (such as Ca and/or Mg salicylate detergents) are present in an amount to deliver 0.3 wt % to 1.4 wt %, or 0.35 wt % to 1.2 wt %, or 0.4 wt % to 1.0 wt % salicylate soap to the lubricant composition.

The sulfonate soap may be present in an amount 0.2 wt % to 0.8 wt % of the lubricant composition, and the salicylate soap may be present in an amount 0.3 wt % to 1.0 wt % of the lubricant composition.

The total of all alkaline earth metal detergent soap may be present in an amount 0.6 wt % to 2.1 wt %, or 0.7 wt % to 1.4 wt % of the lubricant composition.

Typically, lubricating compositions formulated for use in heavy-duty diesel engines comprise detergents at from about 0.1 to about 10 mass %, alternately from about 0.5 to about 7.5 mass %, alternately from about 1 to about 6.5 mass %, based on the lubricating composition.

Typically, lubricating compositions formulated for use in a passenger-car engines comprise detergents at from about 0.1 to about 10 mass %, alternately from about 0.5 to about 7.5 mass %, alternately from about 1 to about 6.5 mass %, based on the lubricating composition.

Typically, lubricating compositions formulated for use in a drive train (*e.g.*, transmissions) comprise detergents at from about 0.1 to about 10 mass %, alternately from about 0.5 to about 7.5 mass %, alternately from about 2 to about 6.5 mass %, based on the lubricating composition.

**D. Friction Modifiers**

A friction modifier is any material or materials that can alter the coefficient of friction of a surface lubricated by any lubricant or fluid-containing such material(s). Friction modifiers, also known as friction reducers, or lubricity agents or oiliness agents, and other such agents that change the ability of base oils, formulated lubricating compositions, or functional fluids, to modify the coefficient of friction of a lubricated surface may be effectively used in combination with the base oils or lubricating compositions of the present disclosure if desired. Friction modifiers that lower the coefficient of friction are particularly advantageous in combination with the base oils and lubricating compositions of this disclosure.

Illustrative friction modifiers may include, for example, organometallic compounds or materials, or mixtures thereof. Illustrative organometallic friction modifiers useful in the lubricating oil formulations of this disclosure include, for example, tungsten and/or molybdenum compounds, such as molybdenum amine, molybdenum diamine, an organotungstenate, a molybdenum dithiocarbamate, molybdenum dithiophosphates, molybdenum amine complexes, molybdenum carboxylates, and the like, and mixtures thereof. Examples of useful molybdenum-containing compounds may conveniently include molybdenum dithiocarbamates, trinuclear molybdenum compounds, for example, as described in PCT Publication No. WO 98/26030, sulfides of molybdenum and molybdenum dithiophosphate.

Other known friction modifiers comprise oil-soluble organo-molybdenum compounds. Such organo-molybdenum friction modifiers may also provide antioxidant and anti-wear credits to a lubricating oil composition. Examples of such oil-soluble organo-molybdenum compounds include dithiocarbamates, dithiophosphates, dithiophosphinates, xanthates, thioxanthates, sulfides, and the like, and mixtures thereof. Particularly preferred are molybdenum dithiocarbamates, dialkyldithiophosphates, alkyl xanthates and alkylthioxanthates.

Additionally, the molybdenum compound may be an acidic molybdenum compound. These compounds will react with a basic nitrogen compound as measured by ASTM test D664 or D2896 titration procedure and are typically hexavalent. Included are molybdic acid, ammonium molybdate, sodium molybdate, potassium molybdate, and other alkali metal molybdates and other molybdenum salts, e.g., hydrogen sodium molybdate, $MoOC_{14}$, $MoO_2Br2$, $Mo_2O_3C_{16}$, molybdenum trioxide or similar acidic molybdenum compounds.

Among the molybdenum compounds useful in the compositions of this disclosure are organo-molybdenum compounds of the formula $Mo(R''OCS_2)_4$ and $Mo(R''SCS_2)_4$, wherein R" is an organo group selected from the group consisting of alkyl, aryl, aralkyl and alkoxyalkyl, generally of from 1 to 30 carbon atoms, and preferably 2 to 12 carbon atoms and most preferably alkyl of 2 to 12 carbon atoms. Especially preferred are the dialkyldithiocarbamates of molybdenum.

Another group of organo-molybdenum compounds useful in the lubricating compositions of this disclosure are trinuclear molybdenum compounds, especially those of the formula $Mo_3SkLnQz$ and mixtures thereof wherein the L are independently selected ligands having organo groups with a sufficient number of carbon atoms to render the compound soluble or dispersible in the oil, n is from 1 to 4, k varies from 4 to 7, Q is selected from the group of neutral electron-donating compounds such as water, amines, alcohols, phosphines, and ethers, and z ranges from 0 to 5 and includes non-stoichiometric values. At least 21 carbon atoms should be present among all the ligand/organo groups, such as at least 25, at least 30, or at least 35, carbon atoms.

Lubricating oil compositions useful in all aspects of the present disclosure preferably contain at least 10 ppm, at least 30 ppm, at least 40 ppm and more preferably at least 50 ppm molybdenum. Suitably, lubricating oil compositions useful in all aspects of the present disclosure contain no more than 1000 ppm, no more than 750 ppm, or no more than 500 ppm of molybdenum. Lubricating oil compositions useful in all aspects of the present disclosure preferably contain from 10 to 1000, such as 30 to 750 or 40 to 500, ppm of molybdenum (measured as atoms of molybdenum). In embodiments, the lubricating oil compositions useful in all aspects of the present disclosure preferably contain at least 20 to 40 ppm, such as 20 to 30, such as about 25 ppm molybdenum.

For more information or useful friction modifiers containing Mo, please see US Patent No. 10,829,712 (col 8, ln 58 to col 11, ln 31).

Ashless friction modifiers may be present in the lubricating oil compositions of the present disclosure and are known generally and include esters formed by reacting carboxylic acids and anhydrides with alkanols and amine-based friction modifiers. Other useful friction modifiers generally include a polar terminal group (*e.g.*, carboxyl or hydroxyl) covalently bonded to an oleophilic hydrocarbon chain. Esters of carboxylic acids and anhydrides with alkanols are described in US Patent No. 4,702,850. Examples of other conventional organic friction modifiers are described by M. Belzer in the "Journal of Tribology" (1992), Vol. 114, pp. 675-682 and M. Belzer and S. Jahanmir in "Lubrication Science" (1988), Vol. 1, pp. 3-26. Typically, the total amount of organic ashless friction modifier in a lubricant according to the present disclosure does not exceed 5 mass %, based on the total mass of the lubricating oil composition and preferably does not exceed 2 mass % and more preferably does not exceed 0.5 mass %.

Illustrative friction modifiers useful in the lubricating compositions described herein include, for example, alkoxylated fatty acid esters, alkanolamides, polyol fatty acid esters, borated glycerol fatty acid esters, fatty alcohol ethers, and mixtures thereof.

Illustrative alkoxylated fatty acid esters include, for example, polyoxyethylene stearate, fatty acid polyglycol ester, and the like. These can include polyoxypropylene stearate, polyoxybutylene stearate, polyoxyethylene isosterate, polyoxypropylene isostearate, polyoxyethylene palmitate, and the like.

Illustrative alkanolamides include, for example, lauric acid diethylalkanolamide, palmic acid diethylalkanolamide, and the like. These can include oleic acid diethyalkanolamide, stearic acid diethylalkanolamide, oleic acid diethylalkanolamide, polyethoxylated hydrocarbylamides, polypropoxylated hydrocarbylamides, and the like.

Illustrative polyol fatty acid esters include, for example, glycerol monooleate, saturated mono-, di-, and tri-glyceride esters, glycerol monostearate, and the like. These can include polyol esters, hydroxyl-containing polyol esters, and the like.

Illustrative borated glycerol fatty acid esters include, for example, borated glycerol monooleate, borated saturated mono-, di-, and tri-glyceride esters, borated glycerol monosterate, and the like. In addition to glycerol polyols, these can include trimethylolpropane, pentaerythritol, sorbitan, and the like. These esters can be polyol monocarboxylate esters, polyol dicarboxylate esters, and on occasion polyoltricarboxylate esters. Preferred can be the glycerol mono-oleates, glycerol di-oleates, glycerol tri-oleates, glycerol mono-oleates, glycerol di-stearates, and glycerol tri-stearates and the corresponding glycerol mono-palmitates, glycerol di-palmitates, and glycerol tri-palmitates, and the respective isostearates, linoleates, and the like. Ethoxylated, propoxylated, and/or butoxylated fatty acid esters of polyols, especially using glycerol as underlying polyol are useful herein.

Illustrative fatty alcohol ethers include, for example, stearyl ether, myristyl ether, and the like. Alcohols, including those that have carbon numbers from $C_3$ to $C_{50}$, can be ethoxylated, propoxylated, or butoxylated to form the corresponding fatty alkyl ethers. The underlying alcohol portion can preferably be stearyl, myristyl, $C_{11}$-$C_{13}$ hydrocarbon, oleyl, isosteryl, and the like.

Useful concentrations of friction modifiers may range from 0.01 wt % to 5 wt %, or about 0.01 wt % to about 2.5 wt %, or about 0.05 wt % to about 1.5 wt %, or about 0.051 wt % to about 1 wt %. Concentrations of molybdenum-containing materials are often described in terms of Mo metal concentration. Advantageous concentrations of Mo may range from 25 ppm to 700 ppm or more, and often with a preferred range of 50-200 ppm. Friction modifiers of all types may be used alone or in mixtures with the materials of this disclosure. Often mixtures of two or more friction modifiers, or mixtures of friction modifier(s) with alternate surface-active material(s), are also desirable. For example, combinations of Mo-containing compounds with polyol fatty acid esters, such as glycerol mono-oleate are useful herein.

### E. Antioxidants

Antioxidants retard the oxidative degradation of base oils during service. Such degradation may result in deposits on metal surfaces, the presence of sludge, a viscosity increase in a lubricant, and the like. A wide variety of oxidation inhibitors that are useful in lubricating oil compositions. See Lubricants and Related Products, Klamann, Wiley VCH, 1984; US Patent Nos. 4,798,684 and 5,084,197, for example.

Useful antioxidants include hindered phenols. These phenolic antioxidants may be ashless (metal-free) phenolic compounds or neutral or basic metal salts of certain phenolic compounds. Typical phenolic antioxidant compounds are the hindered phenolics, which contain a sterically hindered hydroxyl group, and these include those derivatives of dihydroxy aryl compounds in which the hydroxyl groups are in the o- or p-position to each other. Typical phenolic antioxidants include the hindered phenols substituted with $C_{6+}$ alkyl groups and the alkylene coupled derivatives of these hindered phenols. Examples of phenolic materials of this type 2-t-butyl-4-heptyl phenol; 2-t-butyl-4-octyl phenol; 2-t-butyl-4-dodecyl phenol; 2,6-di-t-butyl-4-heptyl phenol; 2,6-di-t-butyl-4-dodecyl phenol; 2-methyl-6-t-butyl-4-heptyl phenol; and 2-methyl-6-t-butyl-4-dodecyl phenol. Other useful hindered mono-phenolic antioxidants may include, for example, hindered 2,6-di-alkyl-phenolic proprionic ester derivatives. Bis-phenolic antioxidants may also be advantageously used herein. Examples of ortho-coupled phenols include: 2,2'-bis(4-heptyl-6-t-butyl-phenol); 2,2'-bis(4-octyl-6-t-butyl-phenol); and 2,2'-bis(4-dodecyl-6-t-butyl-phenol). Para-coupled bisphenols include, for example, 4,4'-bis(2,6-di-t-butyl-phenol) and 4,4'-methylene-bis(2,6-di-t-butyl-phenol).

Effective amounts of one or more catalytic antioxidants may also be used. The catalytic antioxidants comprise an effective amount of a) one or more oil soluble polymetal organic compounds; and, effective amounts of b) one or more substituted N,N'-diaryl-o-phenylenediamine compounds or c) one or more hindered phenol compounds; or a combination of both b) and c). Catalytic antioxidants useful herein are more fully described in US Patent No. 8,048,833.

Non-phenolic oxidation inhibitors, which may be used include aromatic amine antioxidants and these may be used either as such or in combination with phenolics. Typical examples of non-phenolic antioxidants include: alkylated and non-alkylated aromatic amines such as aromatic monoamines of the formula $R_8R_9R_{10}N$, where $R_8$ is an aliphatic, aromatic or substituted aromatic group, $R_9$ is an aromatic or a substituted aromatic group, and $R_{10}$ is H, alkyl, aryl or $R_{11}S(O)XR_{12}$ where $R_{11}$ is an alkylene, alkenylene, or aralkylene group, $R_{12}$ is an alkyl group, or an alkenyl, aryl, or alkaryl group, and x is 0, 1, or 2. The aliphatic group $R_8$ may contain from 1 to about 20 carbon atoms, and preferably contains from about 6 to 12 carbon atoms. The aliphatic group is typically a saturated aliphatic group. Preferably, both $R_8$ and $R_9$ are aromatic or substituted aromatic groups, and the aromatic group may be a fused ring aromatic group such as naphthyl. Aromatic groups $R_8$ and $R_9$ may be joined together with other groups such as S.

Typical aromatic amines antioxidants have alkyl substituent groups of at least about 6 carbon atoms. Examples of aliphatic groups include hexyl, heptyl, octyl, nonyl, and decyl. Generally, the aliphatic groups will not contain more than about 14 carbon atoms. The general types of amine antioxidants useful in the present compositions include diphenylamines, phenyl naphthylamines, phenothiazines, imidodibenzyls and diphenyl phenylene diamines. Mixtures of two or more aromatic amines are also useful. Polymeric amine antioxidants can also be used. Particular examples of aromatic amine antioxidants useful in the present disclosure include: p,p'-dioctyldiphenylamine; t-octylphenyl-alpha-naphthylamine; phenyl-alpha-naphthylamine; and p-octylphenyl-alpha-naphthylamine.

Sulfur-containing antioxidants are also useful herein. In particular, one or more oil-soluble or oil-dispersible sulfur-containing antioxidant(s) can be used as an antioxidant additive. For example, sulfurized alkyl phenols and alkali or alkaline earth metal salts thereof also are useful antioxidants herein. Suitably, the lubricating oil composition(s) of the present disclosure may include the one or more sulfur-containing antioxidant(s) in an amount to provide the lubricating oil composition with from 0.02 to 0.2, preferably from 0.02 to 0.15, even more preferably 0.02 to 0.1, even more preferably 0.04 to 0.1, mass % sulfur based on the total mass of the lubricating oil composition. Optionally the oil-soluble or oil-dispersible sulfur-containing antioxidant(s) are selected from sulfurized $C_4$ to $C_{25}$ olefin(s), sulfurized aliphatic ($C_7$ to $C_{29}$) hydrocarbyl fatty acid ester(s), ashless sulfurized phenolic antioxidant(s), sulfur-containing organo-molybdenum compound(s), and combinations thereof. For further information, on sulfurized materials useful as antioxidants herein, please see US Patent No. 10,731,101 (col 15, ln 55 to col 22, ln 12).

Antioxidants useful herein include hindered phenols and/or arylamines. These antioxidants may be used individually by type or in combination with one another.

Typical antioxidants include: Irganox™ L67, Irganox™ L135, Ethanox™ 4702, Lanxess Additin™ RC 7110; Ethanox™ 4782J; Irganox™ 1135, Irganox™ 5057, sulfurized lard oil and palm oil fatty acid methyl ester.

Antioxidant additives may be used in an amount of about 0.01 to 10 (alternately 0.01 to 5, alternately 0.01 to less than 3 wt %, alternately about 0.03 to 5 wt %, alternately 0.05 to less than 3 wt %, based upon the weight of the lubricating composition.

Optionally, the lubricating composition may be absent phenolic antioxidant.

Optionally, the lubricating composition may be absent aminic antioxidant, such as phenylamines, such as diphenyl amines, such as alkylated diphenyl amines. Optionally the lubricating composition contains from 0.1 to 3, such as

0.2 to 2, such as less than 0.3 mass % (such as 0.25 mass % or less, such as 0.2 mass % or less, such as 0.1 mass % or less, such as 0.05 mass % or less, such as 0 mass%) of aminic antioxidant, such as alkylated phenyl amines, such as di(alkylphenyl)amine, such as di(nonyl-phenyl)amine, based upon the weight of the composition. In embodiments, the lubricating oil composition may comprise, may be substantially free of, or may be absent, aminic antioxidant, such phenylamines, such as diphenyl amines, such as alkylated diphenyl amines, such as such as di(nonyl-phenyl)amine.

Compositions according to the present disclosure may contain an additive having a different enumerated function that also has secondary effects as an antioxidant (for example, phosphorus-containing anti-wear agents (such as ZDDP) may also have antioxidant effects). These additives are not included as antioxidants for purposes of determining the amount of antioxidant in a lubricating oil composition or concentrate herein.

### F. Pour Point Depressants

Conventional pour point depressants (also known as lube oil flow improvers) may be added to the compositions of the present disclosure if desired. These pour point depressants may be added to lubricating compositions of the present disclosure to lower the minimum temperature at which the fluid will flow or can be poured. Examples of suitable pour point depressants include polymethacrylates, polyacrylates, polyarylamides, condensation products of haloparaffin waxes and aromatic compounds, vinyl carboxylate polymers, and terpolymers of dialkylfumarates, vinyl esters of fatty acids and allyl vinyl ethers. US Patent Nos. 1,815,022; 2,015,748; 2,191,498; 2,387,501; 2,655,479; 2,666,746; 2,721,877; 2,721,878; and 3,250,715 describe useful pour point depressants and/or the preparation thereof. Such additives may be used in an amount of about 0.01 to 5 wt %, preferably about 0.01 to 1.5 wt %, based upon the weight of the lubricating composition.

### G. Anti-Foam Agents

Anti-foam agents may advantageously be added to lubricant compositions described herein. These agents prevent or retard the formation of stable foams. Silicones and/organic polymers are typical anti-foam agents. For example, polysiloxanes, such as silicon oil or polydimethyl siloxane, provide anti-foam properties.

Anti-foam agents are commercially available and may be used in minor amounts such as 5 wt % or less, 3 wt % or less, 1 wt % or less, 0.1 wt % or less, such as from 5 to wt % to 0.1 ppm such as from 3 wt % to 0.5 ppm, such as from 1 wt % to 10 ppm.

For example, it may be that the lubricating oil composition comprises an anti-foam agent comprising polyalkyl siloxane, such as a polydialkyl siloxane, for example, wherein the alkyl is a $C_1$-$C_{10}$ alkyl group, *e.g.,* a polydimethylsiloxane (PDMS), also known as a silicone oil. Alternately, the siloxane is a poly($R^3$)siloxane, wherein $R^3$ is one or more same or different linear branched or cyclic hydrocarbyls, such as alkyls or aryls, typically having 1 to 20 carbon atoms. It may be that, for example, the lubricating oil composition comprises a polymeric siloxane compound according to Formula 1 below wherein $R^1$ and $R^2$ are independently methyl, ethyl, propyl, butyl, pentyl, hexyl, heptyl, octyl, nonyl or decyl, phenyl, naphthyl, alkyl substituted phenyl, or isomers thereof (such as methyl, phenyl) and n is from 2 to 1000, such as 50 to 450, alternately such as 40 to 100.

Additionally, or alternatively, it may be that the lubricating oil composition comprises an organo-modified siloxane (OMS), such as a siloxane modified with an organo group such as a polyether *(e.g.,* ethylene-propyleneoxide copolymer), long chain hydrocarbyl (*e.g.,* $C_{11}$-$C_{100}$ alkyl), or aryl (*e.g.,* $C_6$-$C_{14}$ aryl). It may be that, for example, the lubricating oil composition comprises an organo-modified siloxane compound according to Formula 1, wherein n is from 2 to 2000, such as 50 to 450 (alternately such as 40 to 100), and wherein $R^1$ and $R^2$ are the same or different, optionally wherein each of $R^1$ and $R^2$ is, independently an organo group, such as an organo group selected from polyether (*e.g.,* ethylene-propyleneoxide copolymer), long chain hydrocarbyl (*e.g.,* $C_{11}$-$C_{100}$ alkyl), or aryl (*e.g.,* $C_6$-$C_{14}$ aryl). Preferably, one of $R^1$ and $R^2$ is $CH_3$.

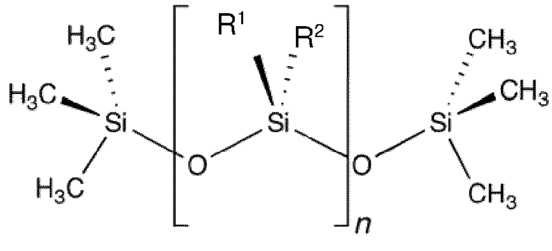

**Formula 1**

Based on the total weight of the lubricant composition, the siloxane according to Formula 1 is incorporated so as

to provide about 0.1 to less than about 30 ppm Si, or about 0.1 to about 25 ppm Si, or about 0.1 to about 20 ppm Si, or about 0.1 to about 15 ppm Si, or about 0.1 to about 10 ppm Si. More preferably, it is in the range of about 3-10 ppm Si.

In embodiments, silicone anti-foam agents useful herein are available from Dow Corning Corporation and Union Carbide Corporation, such as Dow Corning FS-1265 (1000 centistokes), Dow Corning DC-200, and Union Carbide UC-L45. Silicone anti-foamants useful herein include polydimethylsiloxane, phenyl-methyl polysiloxane, linear, cyclic or branched siloxanes, silicone polymers and copolymers, and/organo-silicone copolymers. Also, a siloxane polyether copolymer Anti-foamant available from OSI Specialties, Inc. of Farmington Hills, Michigan and may be substituted or included. One such material is sold as SILWET-L-7220.

Acrylate polymer anti-foam agent can also be used herein. Typical acrylate anti-foamants include polyacrylate anti-foamant available from Monsanto Polymer Products Co. known as PC-1244. A preferred acrylate polymer anti-foam agent useful herein is PX™3841 (*i.e.,* an alkyl acrylate polymer), commercially available from Dorf Ketl, also referred to as Mobilad™C402.

**In** embodiments, a combination of sililcone anti-foamant and acrylate anti-foamant can be used, such as at a weight ratio of the silicone anti-foamant to the acrylate anti-foamant of from about 5:1 to about 1:5, see, for example, US Patent Application Publication No. 2021/0189283.

### H. Viscosity Modifiers

Viscosity modifiers (also referred to as viscosity index improvers or viscosity improvers) other than the comb copolymer viscosity modifiers described in section B2 above, can be included in the lubricating compositions described herein. Viscosity modifiers provide lubricants with high and low temperature operability. These additives impart shear stability at elevated temperatures and acceptable viscosity at low temperatures. Suitable viscosity modifiers include high molecular weight hydrocarbons, polyesters, and viscosity modifier dispersants that can function as both a viscosity modifier and a dispersant. Typical molecular weights of these polymers are between about 10,000 to 1,500,000 g/mol, more typically about 20,000 to 1,200,000 g/mol, and even more typically between about 50,000 and 1,000,000 g/mol.

Examples of suitable viscosity modifiers are linear or star-shaped polymers and copolymers of butadiene, olefins, or alkylated styrenes. Polyisobutylene is a commonly used viscosity modifier. Another suitable viscosity modifier is polymethacrylate (copolymers of various chain length alkyl methacrylates, for example) that do not fall within the description of B2 above, some formulations of which also serve as pour point depressants. Other suitable viscosity modifiers include copolymers of ethylene and propylene, hydrogenated block copolymers of styrene and isoprene, and polyacrylates (copolymers of various chain length acrylates, for example) that do not fall within the description of B2 above. Specific examples include styrene-isoprene or styrene-butadiene based polymers of 50,000 to 200,000 g/mol molecular weight.

Copolymers useful as viscosity modifiers include those commercially available from Chevron Oronite Company LLC under the trade designation "PARATONE™" (such as "PARATONE™ 8921," "PARATONE™ 68231," and "PARATONE™ 8941"); from Afton Chemical Corporation under the trade designation "HiTEC™" (such as HiTEC™ 5850B, and HiTEC™5777); and from The Lubrizol Corporation under the trade designation "Lubrizol™ 7067C". Hydrogenated polyisoprene star polymers useful as viscosity modifiers herein include those commercially available from Infineum International Limited, e.g., under the trade designation "SV200™" and "SV600™". Hydrogenated diene-styrene block copolymers useful as viscosity modifiers herein are commercially available from Infineum International Limited, e.g., under the trade designation "SV 50™".

Polymers useful as viscosity modifiers herein include polymethacrylate or polyacrylate polymers, such as linear polymethacrylate or polyacrylate polymers, such as those available from Evnoik Industries under the trade designation "Viscoplex™" (*e.g.*, Viscoplex™ 6-954) or star polymers which are available from Lubrizol Corporation under the trade designation Asteric™ (*e.g.*, Lubrizol™ 87708 and Lubrizol™ 87725).

Vinyl aromatic-containing polymers useful as viscosity modifiers herein may be derived from vinyl aromatic hydrocarbon monomers, such as styrenic monomers, such as styrene. Illustrative vinyl aromatic-containing copolymers useful herein may be represented by the following general formula: A-B wherein A is a polymeric block derived predominantly from vinyl aromatic hydrocarbon monomer (such as styrene), and B is a polymeric block derived predominantly from conjugated diene monomer (such as isoprene).

Vinyl aromatic-containing polymers useful as viscosity modifiers may have a Kinematic viscosity at 100° C of 20 cSt or less, such as 15 cSt or less, such as 12 cSt or less, but may be diluted (such as in Group I, II, and/or III basestock) to higher Kinematic viscosities at 100° C, such as to 40 cSt or more, such as 100 cSt or more, such as 1000 cSt or more, such as 1000 to 2000 cSt.).

Typically, the viscosity modifiers may be used in an amount of about 0.01 to about 10 wt %, such as about 0.1 to about 7 wt %, such as 0.1 to about 4 wt %, such as about 0.2 to about 2 wt %, such as about 0.2 to about 1 wt %, and such as about 0.2 to about 0.5 wt %, based on the total weight of the formulated lubricant composition.

Viscosity modifiers are typically added as concentrates, in large amounts of diluent oil. The "as delivered"

viscosity modifier typically contains from 20 wt % to 75 wt % of an active polymer for polymethacrylate or polyacrylate polymers, or from 8 wt % to 20 wt % of an active polymer for olefin copolymers, hydrogenated polyisoprene star polymers, or hydrogenated diene-styrene block copolymers, in the "as delivered" polymer concentrate.

**I. Dispersants**

During engine operation, oil-insoluble oxidation byproducts are produced. Dispersants help keep these byproducts in solution, thus diminishing their deposition on metal surfaces. Dispersants used in the formulation of the lubricating compositions herein may be ashless or ashforming in nature. Preferably, the dispersant is ashless. So called ashless dispersants are organic materials that form substantially no ash upon combustion. For example, non-metal-containing or borated metal-free dispersants are considered ashless. In contrast, metal-containing detergents tend to form ash upon combustion.

Dispersants, other than those described in B1 above, useful herein typically contain a polar group attached to a relatively high molecular weight hydrocarbon chain. The polar group typically contains at least one element of nitrogen, oxygen, or phosphorus. Typical hydrocarbon chains contain 40 to 500, such as 50 to 400 carbon atoms. When used in context of functionalized polymers operating as dispersants, the molecular weights are typically reported in terms of the base polymer prior to modification. For example PIBSA-PAM dispersant molecular weights are typically reported for the base polymer prior to functionalization with the acylating agent (maleic acid or anhydride) and functional group (such as polyamine). Hence, herein dispersant molecular weights are assigned the molecular weight of the base polymer the dispersant is derived from.

*Dispersants of (Poly)alkenylsuccinic derivatives*

A particularly useful class of dispersants includes the (poly)alkenylsuccinic derivatives, typically produced by the reaction of a long chain hydrocarbyl-substituted succinic compound, usually a hydrocarbyl-substituted succinic anhydride, with a polyhydroxy or polyamino compound. The long chain hydrocarbyl group constituting the oleophilic portion of the molecule which confers solubility in the oil, is often a polyisobutylene group (typically the long chain hydrocarbyl group, such as a polyisobutylene group, has an Mn of 400 to 3000 g/mol, such as 450 to 2500 g/mol, such as 800 to 2500 g/mol, or even from 1000 to 1500 g/mol). Many examples of this type of dispersant are well known commercially and in the literature. Exemplary US Patents describing such dispersants include US Patent Nos. 3,172,892: 3,2145,707; 3,219,666; 3,316,177; 3,341,542; 3,444,170; 3,454,607; 3,541,012; 3,630,904; 3,632,511; 3,787,374 and 4,234,435. Other types of dispersants are described in US Patent Nos. 3,036,003; 3,200,107; 3,254,025; 3,275,554; 3,438,757; 3,454,555; 3,565,804; 3,413,347; 3,697,574; 3,725,277; 3,725,480; 3,726,882; 4,454,059; 3,329,658; 3,449,250; 3,519,565; 3,666,730; 3,687,849; 3,702,300; 4,100,082; 5,705,458. A further description of dispersants useful herein may be found, for example, in European Patent Applications Nos. 0 471 071 and 0 451 380, to which reference is made for this purpose.

Hydrocarbyl-substituted succinic acid and hydrocarbyl-substituted succinic anhydride derivatives are useful dispersants. In particular, succinimide, succinate esters, or succinate ester amides prepared by the reaction of a hydrocarbon-substituted succinic acid or anhydride compound (typically having at least 25 carbon atoms, such as 28 to 400 carbon atoms, in the hydrocarbon substituent), with at least one equivalent of a polyhydroxy or polyamino compound (such as an alkylene amine) are particularly useful herein. Hydrocarbyl-substituted succinic acid and hydrocarbyl-substituted succinic anhydride derivatives may have a number average molecular weight of at least 400 g/mol, such as at least 900 g/mol, such as at least 1500 g/mol, such as from 400 to 4000 g/mol, such as from 800 to 3000, such as from 2000 to 2800 g/mol, such from about 2100 to 2500 g/mol, and such as from about 2200 to about 2400 g/mol.

Succinimides, which are particularly useful herein, are typically formed by the condensation reaction between: 1) hydrocarbyl-substituted succinic anhydrides, such as polyisobutylene succinic anhydride (PIBSA); and 2) polyamine (PAM). Examples of suitable polyamines include: polyhydrocarbyl polyamines, polyalkylene polyamines, hydroxy-substituted polyamines, polyoxyalkylene polyamines, and combinations thereof. Examples of polyamines include tetraethylene pentamine, pentaethylene hexamine, tetraethylenepentamine (TEPA), pentaethylenehaxamine (PEHA), N-phenyl-p-phenylenediamine (ADPA), and other polyamines having an average of 5, 6, 7, 8, or 9 nitrogen atoms per molecule. Mixtures where the average number of nitrogen atoms per polyamine molecule is greater than 7 are commonly called heavy polyamines or H-PAMs and may be commercially available under trade names such as HPA™ and HPA-X™ from DowChemical, E-100™ from Huntsman Chemical, et al. Examples of hydroxy-substituted polyamines include N-hydroxyalkyl-alkylene polyamines such as N-(2-hydroxyethyl)ethylene diamine, N-(2-hydroxyethyl)piperazine, and/or N-hydroxyalkylated alkylene diamines of the type described, for example, in US Patent No. 4,873,009. Examples of polyoxyalkylene polyamines include polyoxyethylene and/or polyoxypropylene diamines and triamines (as well as co-oligomers thereof) having an average Mn from about 200 to about 5000 g/mol. Products of this type are commercially available under the tradename Jeffamine™. Representative examples of useful succinimides are shown in US Patent Nos. 3,087,936; 3,172,892; 3,219,666; 3,272,746; 3,322,670; 3,652,616; 3,948,800; and 6,821,307; and CA Patent No.

1,094,044.

Succinate esters useful as dispersants include those formed by the condensation reaction between hydrocarbyl-substituted succinic anhydrides and alcohols or polyols. For example, the condensation product of a hydrocarbyl-substituted succinic anhydride and pentaerythritol is a useful dispersant.

Succinate ester amides useful herein are formed by a condensation reaction between hydrocarbyl-substituted succinic anhydrides and alkanol amines. Suitable alkanol amines include ethoxylated polyalkylpolyamines, propoxylated polyalkylpolyamines, and polyalkenylpolyamines such as polyethylene polyamines and/or propoxylated hexamethylenediamine. Representative examples are shown in US Patent No. 4,426,305.

Hydrocarbyl-substituted succinic anhydrides (such as PIBSA) esters of hydrocarbyl bridged aryloxy alcohols are also useful as dispersants herein. For information on such dispersants, please see US Patent No. 7,485,603, particularly, col 2, ln 65 to col 6, ln 22 and col 23, ln 40 to col 26, ln 46. In particular, PIBSA esters of methylene-bridged naphthyloxy ethanol (*i.e.,* 2-hydroxyethyl-1-naphthol ether (or hydroxy-terminated ethylene oxide oligomer ether of naphthol) are useful herein.

The (poly)alkenylsuccinic derivatives described herein, such as PIBSA, PIBSA-PAM, PIBSA esters, PIBSA ester amides, etc., are typically derived from (poly)alkenyl materials, such as polyisobutylene, having molecular weights (Mn) typically from 350 to 4000 g/mol, such as 400 to 3000 g/mol, such as 450 to 2800 g/mol, such as 800 to 2500 g/mol, or even from 1000 to 1500 g/mol, such as from 1200 to 1400 g/mol.

The molecular weight (Mn) of the hydrocarbyl-substituted succinic anhydrides used in the preceding paragraphs will typically range from 350 to 4000 g/mol, such as 400 to 3000 g/mol, such as 450 to 2800 g/mol, such as 800 to 2500 g/mol, or even from 1000 to 1500 g/mol, such as from 1200 to 1400 g/mol.

The dispersant may comprise one or more PIBSA-PAMs, where the PIB is derived from polyisobutylene having an Mn of from 600 to 5000 (such as from 700 to 4000, such as from 800 to 3000, such as from 900 to 2500 g/mol, or even from 1000 to 1500 g/mol, such as from 1200 to 1400 g/mol, such as about 1300 g/mol) and the polyamine is derived from hydrocarbyl-substituted polyamines, such as tetraethylene pentamine, pentaethylene hexamine, tetraethylenepentamine (TEPA), pentaethylenehaxamine (PEHA), N-phenyl-p-phenylenediamine (ADPA), and other polyamines having an average of 5, 6, 7, 8, or 9 nitrogen atoms per molecule).

The dispersant may comprise one or more PIBSA-PAMs, where the PIB is derived from polyisobutylene having an Mn of from 1000 to 1500 g/mol, such as from 1200 to 1400 g/mol, such as about 1300 g/mol) and the polyamine is derived from hydrocarbyl-substituted polyamines, such as tetraethylene pentamine, pentaethylene hexamine, tetraethylenepentamine (TEPA), pentaethylenehaxamine (PEHA), N-phenyl-p-phenylenediamine (ADPA), and other polyamines having an average of 5, 6, 7, 8, or 9 nitrogen atoms per molecule).

The dispersant may comprise at least one first PIBSA-PAM, where the PIB is derived from polyisobutylene having an Mn of from 1000 to 1500 g/mol, such as from 1200 to 1400 g/mol, such as about 1300 g/mol) and at least one second PIBSA-PAM, where the PIB is derived from polyisobutylene having an Mn of from more than 1500 to 5000 g/mol (such as from 1550 to 5000, such as from 1600 to 4000, such as from 1800 to 3000, such as from 1900 to 2500 g/mol, or even from 2000 to 2500 g/mol), where the polyamines used to prepare the first and second PIBSA-PAM's re the same or different and typically are derived from hydrocarbyl-substituted polyamines, such as tetraethylene pentamine, pentaethylene hexamine, tetraethylenepentamine (TEPA), pentaethylenehaxamine (PEHA), N-phenyl-p-phenylenediamine (ADPA), and other polyamines having an average of 5, 6, 7, 8, or 9 nitrogen atoms per molecule.

The above (poly)alkenylsuccinic derivatives can be post-reacted with various reagents such as carbonate, sulfur, oxygen, formaldehyde, carboxylic acids such as oleic acid.

The dispersant may comprise one or more cyclic carbonates, such as 1,3-dioxolan-2-one (ethylene carbonate), post-treated (poly)alkenylsuccinic derivatives, other than those described in B1 above.

The dispersants may be present in the lubricant in an amount 0.1 mass % to 20 mass % of the composition, such as 0.2 to 15 mass %, such as 0.25 to 10 mass %, such as 0.3 to 5 mass %, such as 1.0 mass % to 3.0 mass %, of the lubricating oil composition.

The above (poly)alkenylsuccinic derivatives, can also be post reacted with boron compounds such as boric acid, borate esters or highly borated dispersants, to form borated dispersants generally having from about 0.1 to about 5 moles of boron per mole of dispersant reaction product.

Dispersants useful herein include borated succinimides, including those derivatives from mono-succinimides, bis-succinimides, and/or mixtures of mono- and bis-succinimides, wherein the hydrocarbyl succinimide is derived from a hydrocarbylene group such as polyisobutylene having an Mn of from about 300 to about 5000 g/mol, or from about 500 to about 3000 g/mol, or about 1000 to about 2000 g/mol, or a mixture of such hydrocarbylene groups, often with high terminal vinylic groups.

The boron-containing dispersant may be present at 0.01 wt % to 20 wt %, or 0.1 wt % to 15 wt %, or 0.1 wt % to 10 wt %, or 0.5 wt % to 8 wt %, or 1.0 wt % to 6.5 wt %, or 0.5 wt % to 2.2 wt % of the lubricating composition.

The boron-containing dispersant may be present in an amount to deliver boron to the composition at 15 ppm to 2000 ppm, or 25 ppm to 1000 ppm, or 40 ppm to 600 ppm, or 80 ppm to 350 ppm.

The borated dispersant may be used in combination with non-borated dispersant and may be the same or different compound as the non-borated dispersant. In one embodiment, the lubricating composition may include one or more boron-containing dispersants and one or more non-borated dispersants, wherein the total amount of dispersant may be 0.01 wt % to 20 wt %, or 0.1 wt % to 15 wt %, or 0.1 wt % to 10 wt %, or 0.5 wt % to 8 wt %, or 1.0 wt % to 6.5 wt %, or 0.5 wt % to 2.2 wt % of the lubricating composition and wherein the ratio of borated dispersant to non-boroated dispersant may be 1:10 to 10:1 (weight:weight) or 1:5 to 3:1 or 1:3 to 2:1. The dispersant may comprise one or more borated or unborated poly(alkenyl)succinimides, where the polyalkyenyl is derived from polyisobutylene and the imide is derived from a polyamine ("PIBSA-PAM").

The dispersant may comprise one or more borated PIBSA-PAM's derived from a PIB having an Mn of 700 to 1800 g/mol (such as 800 to 1500 g/mol) and one or more non-borated PIBSA-PAM's derived from a PIB having an Mn of more than 1800 to 5000 g/mol (such as 2000 to 3000 g/mol). The dispersant may comprise one or more non-borated PIBSA-PAM's derived from a PIB having an Mn of 700 to 1800 g/mol (such as 800 to 1500 g/mol) and one or more borated PIBSA-PAM's derived from a PIB having an Mn of more than 1800 to 5000 g/mol (such as 2000 to 3000 g/mol). The dispersant may comprise PIBSA derived from a PIB having an Mn of 700 to 5000 g/mol (such as 800 to 3000 g/mol) and one or more borated or non-borated PIBSA-PAM's derived from a PIB having an Mn of 700 to 5000 g/mol. The dispersant may comprise PIBSA-PAM derived from a PIB having an Mn of 700 to 5000 g/mol (such as 800 to 3000 g/mol) and one or more borated or non-borated PIBSA-PAM's derived from a PIB having an Mn of 700 to 5000 g/mol.

The dispersant may comprise PIBSA derived from a PIB having an Mn of 700 to 5000 g/mol (such as 800 to 3000 g/mol) and one or more borated or non-borated PIBSA-PAM's derived from a PIB having an Mn of 700 to 5000 g/mol.

The dispersant may comprise PIBSA derived from a PIB having an Mn of 700 to 5000 g/mol (such as 800 to 3000 g/mol) and one or more borated PIBSA-PAM's derived from a PIB having an Mn of 700 to 1800 g/mol (such as 800 to 1500 g/mol) and one or more non-borated PIBSA-PAM's derived from a PIB having an Mn of more than 1800 to 5000 g/mol (such as 2000 to 3000 g/mol). The dispersant may comprise PIBSA derived from a PIB having an Mn of 700 to 5000 g/mol (such as 800 to 3000 g/mol) one or more non-borated PIBSA-PAM's derived from a PIB having an Mn of 700 to 1800 g/mol (such as 800 to 1500 g/mol) and one or more borated PIBSA-PAM's derived from a PIB having an Mn of more than 1800 to 5000 g/mol (such as 2000 to 3000 g/mol). The dispersants may comprise one or more, optionally borated, higher molecular weight (Mn 1600 g/mol or more, such as 1800 to 3000 g/mol) succinimides and one or more, optionally borated, lower molecular weight (Mn less than 1600 g/mol) succinimides, where the higher molecular weight may be 1600 to 3000 g/mol, such as 1700 to 2800 g/mol, such as 1800 to 2500 g/mol, such as 1850 to 2300 g/mol; and the lower molecular weight may be 600 to less than 1600 g/mol, such as 650 to 1500 g/mol, such as 700 to 1400 g/mol, such as 800 to 1300 g/mol, such as 850 to 1200 g/mol such as 900 to 1150 g/mol, such as 900 to 1000 g/mol. The higher molecular weight succinimide dispersant may be present in the lubricating composition in an amount of from 0.5 to 10 wt %, or from 0.8 to 6 wt %, or from 1.0 to 5 wt %, or from 1.5 to 5 wt %, or from 1.5 to 4.0 wt %; and the lower molecular weight succinimides dispersant may be present in the lubricating composition in an amount of from 1 to 5 wt %, or from 1.5 to 4.8 wt %, or from 1.8 to 4.6 wt %, or from 1.9 to 4.6 wt %, or at 2 wt % or more, such as 2 to 5 wt %. The lower molecular weight succinimides may differ from the higher molecular weight succinimides, by 500 g/mol or more, such as by 750 g/mol or more, such as by 1000 g/mol or more, such as by 1200 g/mol or more, such as by 500 to 3000 g/mol, such as by 750 to 2000 g/mol, such as by 1000 to 1500 g/mol.

The dispersant may comprise one or more borated or non-borated PIBSA-PAM's and one or more PIBSA-esters of hydrocarbyl bridged aryloxy alcohols.

The dispersant may comprise one or more borated and one or more non-borated PIBSA-PAM's.

The dispersant may comprise one or more, optionally borated, higher molecular weight (Mn 1600 g/mol or more, such as 1800 to 3000 g/mol) PIBSA-PAM's and one or more, optionally borated, lower molecular weight (Mn less than 1600 g/mol) PIBSA-PAM's, where the higher molecular weight may be 1600 to 3000 g/mol, such as 1700 to 2800 g/mol, such as 1800 to 2500 g/mol, such as 1850 to 2300 g/mol; and the lower molecular weight may be 600 to less than 1600 g/mol, such as 650 to 1500 g/mol, such as 700 to 1400 g/mol, such as 800 to 1300 g/mol, such as 850 to 1200 g/mol, such as 900 to 1200 g/mol. The higher molecular weight PIBSA-PAM dispersant may be present in the lubricating composition in an amount of from 0.5 to 10 wt %, or from 0.8 to 6 wt %, or from 1.0 to 5 wt %, or from 1.5 to 5 wt % or from 1.5 to 4.0 wt %; and the lower molecular weight PIBSA-PAM dispersant may be present in the lubricating composition in an amount of from 1 to 5 wt %, or from 1.5 to 4.8 wt %, or from 1.8 to 4.6 wt %, or from 1.9 to 4.6 wt %, or at 2 wt % or more, such as 2 to 5 wt %.

## Dispersants of Mannich Bases

Mannich base dispersants useful herein are typically made from the reaction of an amine component, a hydroxy aromatic compound (substituted or unsubstituted, such as alkyl substituted), such as alkylphenols, and an aldehyde, such as formaldehyde. See US Patent Nos. 4,767,551 and 10,899,986. Process aids and catalysts, such as oleic acid and sulfonic acids, can also be part of the reaction mixture. Representative examples are shown in US Patent Nos. 3,697,574; 3,703,536; 3,704,308; 3,751,365; 3,756,953; 3,798,165; 3,803,039; 4,231,759; 9,938,479; 7,491,248; and 10,899,986, and PCT Publication No. WO 01/42399.

Dispersants of Polymethacrylate or Polyacrylate Derivatives

Polymethacrylate or polyacrylate derivatives are another class of dispersants useful herein. These dispersants are typically prepared by reacting a nitrogen-containing monomer and a methacrylic or acrylic acid esters containing 5-25 carbon atoms in the ester group. Representative examples are shown in US Patent Nos. 2,100,993, and 6,323,164. Polymethacrylate and polyacrylate dispersants are typically lower molecular weights.

The lubricating composition of the disclosure typically comprises dispersant at 0.1 mass % to 20 mass % of the composition, such as 0.2 to 15 mass %, such as 0.25 to 10 mass %, such as 0.3 to 5 mass %, such as 2.0 mass % to 4.0 mass % of the lubricating oil composition. Alternately the dispersant may be present at 0.1 wt % to 5 wt %, or 0.01 wt % to 4 wt % of the lubricating composition.

For further information on dispersants useful herein, please see US Patent No. 10,829,712, col 13, ln 36 to col 16, ln 67 and US Patent No. 7,485,603, col 2, ln 65 to col 6, ln 22, col 8, ln 25 to col 14, ln 53, and col 23, ln 40 to col 26, ln 46.

Compositions according to the present disclosure may contain an additive having a different enumerated function that also has secondary effects as a dispersant (for example, Component B Functionalized Polymer described above, may also have dispersant effects). These additives are not included as dispersants for purposes of determining the amount of dispersant in a lubricating oil composition or concentrate herein.

**J. Corrosion Inhibitors/Anti-rust Agents**

Corrosion inhibitors may be used to reduce the corrosion of metals and are often alternatively referred to as metal deactivators or metal passivators. Some corrosion inhibitors may alternatively be characterized as antioxidants.

Suitable corrosion inhibitors may include nitrogen and/or sulfur-containing heterocyclic compounds such as triazoles (*e.g.*, benzotriazoles), substituted thiadiazoles, imidazoles, thiazoles, tetrazoles, hydroxyquinolines, oxazolines, imidazolines, thiophenes, indoles, indazoles, quinolines, benzoxazines, dithiols, oxazoles, oxatriazoles, pyridines, piperazines, triazines and derivatives of any one or more thereof. A particular corrosion inhibitor is a benzotriazole represented by the structure:

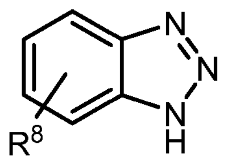

wherein $R^8$ is absent (hydrogen) or is a $C_1$ to $C_{20}$ hydrocarbyl or substituted hydrocarbyl group which may be linear or branched, saturated or unsaturated. It may contain ring structures that are alkyl or aromatic in nature and/or contain heteroatoms such as N, O, or S. Examples of suitable compounds may include benzotriazole, alkyl-substituted benzotriazoles (*e.g.*, tolyltriazole, ethylbenzotriazole, hexylbenzotriazole, octylbenzotriazole, etc.), aryl substituted benzotriazole, alkylaryl- or arylalkyl-substituted benzotriazoles, and the like, as well as combinations thereof. For instance, the triazole may comprise or be a benzotriazole and/or an alkylbenzotriazole in which the alkyl group contains from 1 to about 20 carbon atoms or from 1 to about 8 carbon atoms. Non-limiting examples of such corrosion inhibitors may comprise or be benzotriazole, tolyltriazole, and/or optionally, substituted benzotriazoles such as Irgamet™ 39, which is commercially available from BASF of Ludwigshafen, Germany. A preferred corrosion inhibitor may comprise or be benzotriazole and/or tolyltriazole.

Additionally, or alternatively, the corrosion inhibitor may include one or more N substituted triazoles, such as 1,2,4 triazoles, such as those described at paragraphs [0020] to [0044] of WO 2019/236441. Non-limiting examples of such corrosion inhibitors incude compounds represented by the formula:

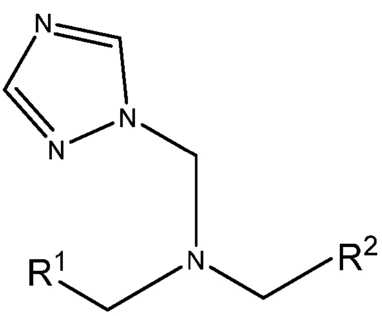

where $R^1$ and $R^2$ are independently H, $C_1$ to $C_{22}$, such as $C_2$ to $C_{20}$, such as $C_3$ to $C_{18}$, such as $C_3$ to $C_{16}$, such as $C_3$ to $C_{12}$ linear, cyclic or branched hydrocarbon, such as methyl, ethyl, n-propyl, iso-propyl, n-butyl, sec-butyl, iso-butyl, tert-butyl, n-pentyl, iso-pentyl, neo-pentyl, hexyl, heptyl, octyl, ethyl-hexyl, dimethyl hexyl, nonyl, decyl, undecyl, dodecyl, tridecyl, tetradecyl, pentadecyl, hexadecyl, heptadecyl, octadecyl, nonadecyl, icosyl, phenyl, benzyl, and the like. $R^1$ and $R^2$ may be the same or different and may join to form a cyclic structure. In embodiments, a useful corrosion inhibitor is 1H-1,2,4-triazole-1-methanamine-N,N-bis(2-ethylhexyl), available as Irgamet™ 30 from BASF of Ludwigshafen, Germany. Additionally, or alternatively, the corrosion inhibitor may include one or more substituted thiadiazoles represented by the structure:

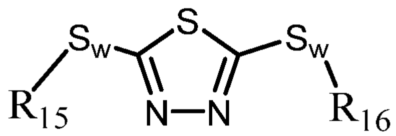

wherein $R_{15}$ and $R_{16}$ are independently hydrogen or a hydrocarbon group, which group may be aliphatic or aromatic, including cyclic, alicyclic, aralkyl, aryl and alkaryl, and wherein each w is independently 1, 2, 3, 4, 5, or 6 (preferably 2, 3, or 4, such as 2). These substituted thiadiazoles are derived from the 2,5-dimercapto-1,3,4-thiadiazole (DMTD) molecule. Many derivatives of DMTD have been described in the art, and any such compounds may be included in the fluid used in the present disclosure. For example, US Patent Nos. 2,719,125; 2,719,126; and 3,087,937; describe the preparation of various 2, 5-bis-(hydrocarbon dithio)-1,3,4-thiadiazoles.

Further, additionally or alternatively, the corrosion inhibitor may include one or more other derivatives of DMTD, such as a carboxylic ester in which $R_{15}$ and $R_{16}$ may be joined to the sulfide sulfur atom through a carbonyl group. Preparation of these thioester-containing DMTD derivatives is described, for example, in US Patent No. 2,760,933. DMTD derivatives produced by condensation of DMTD with alpha-halogenated aliphatic carboxylic acids having at least 10 carbon atoms are described, for example, in US Patent No. 2,836,564. This process produces DMTD derivatives wherein $R_{15}$ and $R_{16}$ are HOOC-CH($R_{19}$)-($R_{19}$ being a hydrocarbyl group). DMTD derivatives further produced by amidation or esterification of these terminal carboxylic acid groups may also be useful.

The preparation of 2-hydrocarbyldithio-5-mercapto-1,3,4-thiadiazoles is described, for example, in US Patent No. 3,663,561.

A class of DMTD derivatives may include mixtures of a 2-hydrocarbyldithio-5-mercapto-1,3,4-thiadiazole and a 2,5-bis-hydrocarbyldithio-1,3,4-thiadiazole. Such mixtures may be sold under the tradename HiTEC™ 4313 and are commercially available from Afton Chemical Company.

The preparation of 2-hydrocarbyldithio-5-mercapto-1,3,4-thiadiazoles is described, for example, in US Patent No. 3,663,561.

A class of DMTD derivatives may include mixtures of a 2-hydrocarbyldithio-5-mercapto-1,3,4-thiadiazole and a 2,5-bis-hydrocarbyldithio-1,3,4-thiadiazole. Such mixtures may be sold under the tradename HiTEC™ 4313 and are commercially available from Afton Chemical Company.

Still further, additionally or alternatively, the corrosion inhibitor may include a trifunctional borate having the structure, $B(OR_{46})_3$, in which each $R_{46}$ may be the same or different. As the borate may typically be desirably compatible with the non-aqueous medium of the composition, each $R_{46}$ may, in particular, comprise or be a hydrocarbyl $C_1$-$C_8$ moiety. For compositions in which the non-aqueous medium comprises or is a lubricating oil basestock, for example, better compatibility can typically be achieved when the hydrocarbyl moieties are each at least $C_4$. Non-limiting examples of such corrosion inhibitors thus include, but are not limited to, triethylborate, tripropylborates such as triisopropylborate, tributylborates such as tri-tert-butylborate, tripentylborates, trihexylborates, trioctylborates such as tri-(2-ethylhexyl) borate, monohexyl dibutylborate, and the like, as well as combinations thereof.

When used, a corrosion inhibitor may comprise a substituted thiadiazole, a substituted benzotriazole, a substituted triazole, a trisubstituted borate, or a combination thereof.

When desired, corrosion inhibitors can be used in any effective amount, but, when used, may typically be used in amounts from about 0.001 wt % to 5.0 wt %, based on the weight of the composition, *e.g.,* from 0.005 wt % to 3.0 wt % or from 0.01 wt % to 1.0 wt %. Alternately, such additives may be used in an amount of about 0.01 to 5 wt %, preferably about 0.01 to 1.5 wt %, based upon the weight of the lubricating composition.

In some embodiments, 3,4-oxypyridinone-containing compositions may contain substantially no *(e.g.,* 0, or less than 0.001 wt %, 0.0005 wt % or less, not intentionally added, and/or absolutely no) triazoles, benzotriazoles, substituted thiadiazoles, imidazoles, thiazoles, tetrazoles, hydroxyquinolines, oxazolines, imidazolines, thiophenes, indoles, indazoles, quinolines, benzoxazines, dithiols, oxazoles, oxatriazoles, pyridines, piperazines, triazines, derivatives thereof, combinations thereof, or all corrosion inhibitors.

Compositions according to the present disclosure may contain an additive having a different enumerated function that also has secondary effects as a corrosion inhibitor (for example, Component B Functionalized Polymer

described above, may also have corrosion inhibitor effects). These additives are not included as corrosion inhibitor for purposes of determining the amount of corrosion inhibitor in a lubricating oil composition or concentrate herein.

**K. Antiwear Agents**

The lubricating oil composition of the present disclosure can contain one or more antiwear agents that can reduce friction and excessive wear. Any anti-wear agent known by a person of ordinary skill in the art may be used in the lubricating oil composition. Non-limiting examples of suitable anti-wear agents include zinc dithiophosphate, metal *(e.g.,* Pb, Sb, Mo, and the like) salts of dithiophosphates, metal *(e.g.,* Zn, Pb, Sb, Mo, and the like) salts of dithiocarbamates, metal *(e.g.,* Zn, Pb, Sb, and the like) salts of fatty acids, boron compounds, phosphate esters, phosphite esters, amine salts of phosphoric acid esters or thiophosphoric acid esters, reaction products of dicyclopentadiene and thiophosphoric acids and combinations thereof. The amount of the antiwear agent may vary from about 0.01 wt % to about 5 wt %, from about 0.05 wt % to about 3 wt %, or from about 0.1 wt % to about 1 wt %, based on the total weight of the lubricating oil composition.

In embodiments, the anti-wear agent is or comprises a dihydrocarbyl dithiophosphate metal salt, such as zinc dialkyl dithiophosphate compounds. The metal of the dihydrocarbyl dithiophosphate metal salt may be an alkali or alkaline earth metal, or aluminum, lead, tin, molybdenum, manganese, nickel, or copper. In some embodiments, the metal is zinc. In other embodiments, the alkyl group of the dihydrocarbyl dithiophosphate metal salt has from about 3 to about 22 carbon atoms, from about 3 to about 18 carbon atoms, from about 3 to about 12 carbon atoms, or from about 3 to about 8 carbon atoms. In further embodiments, the alkyl group is linear or branched.

Useful anti-wear agents also include substituted or unsubstituted thiophosphoric acids, and salts thereof include zinc-containing compounds such as zinc dithiophosphate compounds selected from zinc dialkyl-, diaryl- and/or alkylaryl-dithiophosphates.

A metal alkylthiophosphate and more particularly a metal dialkyl dithio phosphate in which the metal constituent is zinc, or zinc dialkyl dithio phosphate (ZDDP) can be a useful component of the lubricating compositions of this disclosure. ZDDP can be derived from primary alcohols, secondary alcohols or mixtures thereof. ZDDP compounds generally are of the formula $Zn[SP(S)(OR_1)(OR_2)]_2$ where $R_1$ and $R_2$ are $C_1$-$C_{18}$ alkyl groups, preferably $C_2$-$C_{12}$ alkyl groups. These alkyl groups may be straight chain or branched. Alcohols used in the ZDDP can be 2-propanol, butanol, secondary butanol, pentanols, hexanols such as 4-methyl-2-pentanol, n-hexanol, n-octanol, 2-ethyl hexanol, alkylated phenols, and the like. Mixtures of secondary alcohols or of primary and secondary alcohol can be used. Alkyl aryl groups may also be used. Useful zinc dithiophosphates include secondary zinc dithiophosphates such as those available from The Lubrizol Corporation under the trade designations "LZ 677A", "LZ 1095" and "LZ 1371", from Chevron Oronite under the trade designation "OLOA 262" and from Afton Chemical under the trade designation "HiTEC™ 7169".

In embodiments, the zinc compound can be a zinc dithiocarbamate complex, such as the zinc dithiocarbamates represented by the formula:

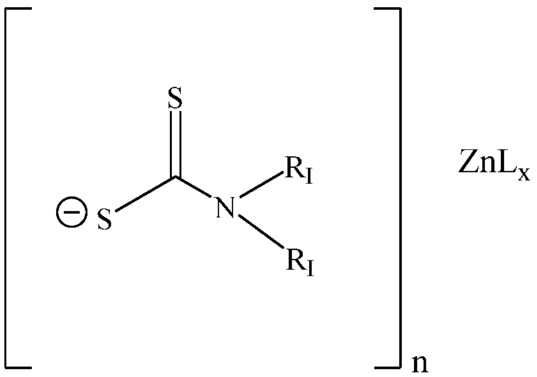

where each $R_I$ is independently a linear, cyclic, or branched, saturated or unsaturated, aliphatic hydrocarbon moiety having from 1 to about 10 carbon atoms, n is 0, 1, or 2, L is a ligand that saturates the coordination sphere of zinc, and x is 0, 1, 2, 3, or 4. In certain embodiments, the ligand, L, is selected from the group consisting of water, hydroxide, ammonia, amino, amido, alkylthiolate, halide, and combinations thereof.

The anti-wear additives, such as ZDDP and/or the zinc carbamates, are typically used in amounts of from about 0.4 wt % to about 1.2 wt %, preferably from about 0.5 wt % to about 1.0 wt %, and more preferably from about 0.6 wt % to about 0.8 wt %, based on the total weight of the lubricating composition, although more or less can often be used advantageously. Preferably, the anti-wear additive is ZDDP, preferably a secondary ZDDP, and is present in an amount of from about 0.6 to 1.0 wt % of the total weight of the lubricating composition.

Antiwear additives useful herein also include boron-containing compounds, such as borate esters, borated fatty

amines, borated epoxides, alkali metal (or mixed alkali metal or alkaline earth metal) borates and borated overbased metal salts.

Compositions according to the present disclosure may contain an additive having a different enumerated function that also has secondary effects as an anti-wear agent (for example, Component B Functionalized Polymer described above, may also have anti-wear effects). These additives are not included as anti-wear agents for purposes of determining the amount of anti-wear agents in a lubricating oil composition or concentrate herein.

### L. Demulsifiers

Demulsifiers useful herein include those described in US Patent No. 10,829,712 (col 20, ln 34-40). Typically, a small amount of a demulsifying component may be used herein. A preferred demulsifying component is described in European Patent No. 330 522. It is obtained by reacting an alkylene oxide with an adduct obtained by reacting a bis-epoxide with a polyhydric alcohol. Such additives may be used in an amount of about 0.001 to 5 wt %, preferably about 0.01 to 2 wt %.

### M. Seal Compatibility Agents

Other optional additives include seal compatibility agents such as organic phosphates, aromatic esters, aromatic hydrocarbons, esters (butylbenzyl phthalate, for example), and polybutenyl succinic anhydride. Such additives may be used in an amount of about 0.001 to 5 wt %, preferably about 0.01 to 2 wt %. In embodiments the seal compatibility agents are sea swell agents, such as PIBSA (polyisobutenyl succinic anhydride).

### N. Extreme Pressure Agents

The lubricating oil composition of the present disclosure can contain one or more extreme pressure agents that can prevent sliding metal surfaces from seizing under conditions of extreme pressure. Any extreme pressure agent known by a person of ordinary skill in the art may be used in the lubricating oil composition. Generally, the extreme pressure agent is a compound that can combine chemically with a metal to form a surface film that prevents the welding of asperities in opposing metal surfaces under high loads. Non-limiting examples of suitable extreme pressure agents include sulfurized animal or vegetable fats or oils, sulfurized animal or vegetable fatty acid esters, fully or partially esterified esters of trivalent or pentavalent acids of phosphorus, sulfurized olefins, dihydrocarbyl polysulfides, sulfurized Diels-Alder adducts, sulfurized dicyclopentadiene, sulfurized or co-sulfurized mixtures of fatty acid esters and monounsaturated olefins, co-sulfurized blends of fatty acid, fatty acid ester and alpha-olefin, functionally substituted dihydrocarbyl polysulfides, thia-aldehydes, thia-ketones, epithio compounds, sulfur-containing acetal derivatives, co-sulfurized blends of terpene and acyclic olefins, and poly sulfide olefin products, amine salts of phosphoric acid esters or thiophosphoric acid esters, and combinations thereof. The amount of the extreme pressure agent may vary from about 0.01 wt % to about 5 wt %, from about 0.05 wt % to about 3 wt %, or from about 0.1 wt % to about 1 wt %, based on the total weight of the lubricating oil composition.

### O. Non-basestock Unsaturated Hydrocarbons

The lubricating oil composition of the present disclosure can contain one or more unsaturated hydrocarbons. These unsaturated hydrocarbons are distinct from any baseoils (lubricating oil basestocks of Group I, II, III, IV and/or V) and/or viscosity modifiers that may be present in the compositions and always have at least one (and typically only one, in the case of linear alpha-olefins, or LAOs) unsaturation per molecule. Without being bound by theory, the unsaturation(s) may provide an antioxidation functionality and/or a sulfur-trapping functionality that may supplement and/or replace one or more antioxidant additives and/or one or more corrosion inhibitor additives, but unsaturated hydrocarbons (LAOs) will typically not provide the only antioxidant nor the only corrosion inhibition functionality in lubrication oil compositions. Non-limiting examples of unsaturated hydrocarbons can include one or more unsaturated $C_{12}$-$C_{60}$ hydrocarbons (such as $C_{12}$-$C_{48}$ hydrocarbons, $C_{12}$-$C_{36}$ hydrocarbons, $C_{12}$-$C_{30}$ hydrocarbons, or $C_{12}$-$C_{24}$ hydrocarbons). When only one unsaturation is present, the unsaturated hydrocarbons may be termed linear alpha-olefins (LAOs). Other non-limiting examples of unsaturated hydrocarbons can include oligomers/polymers of polyisobutylenes that have retained (or been post-polymerization modified to exhibit) a (near-) terminal unsaturation, and/or blends thereof. When present, unsaturated hydrocarbons (LAOs) may be present from 0.01 to 5 wt % (in particular, 0.1 to 3 mass %, alternately 0.1 to 1.5 mass %), based on total weight of the lubricating oil composition.

When lubricating oil compositions contain one or more of the additives discussed above, the additive(s) are typically blended into the composition in an amount sufficient for it to perform its intended function. Typical amounts of such additives useful in the present disclosure, especially for use in crankcase lubricants, are shown in the Table below.

It is noted that many of the additives are shipped from the additive manufacturer as a concentrate, containing one or more additives together, with a certain amount of base oil or other diluents. Accordingly, the weight amounts in the tables below, as well as other amounts mentioned herein, are directed to the amount of active ingredient (that is the non-diluent portion of the ingredient). The weight percent (mass %) indicated below is based on the total weight of the lubricating oil composition.

**Typical Amounts of Lubricating Oil Components**

| **Additive Formulations** | **A (mass % a.i.)** | **B (mass % a.i.)** | **C (mass % a.i.)** |
|---|---|---|---|
| Capped dispersant | 0.1 - 20 | 0.1 - 20 | 0.5 - 8 |
| Mg Detergents | 0.1 - 20 | 0.1 - 10 | 0.1 - 9 |
| Ca Detergents | 0.1 - 20 | 0.2 - 5 | 0.3 - 4 |
| Comb copolymer viscosity modifier | 0.1 - 20 | 0.2 - 15 | 0.5 - 10 |
| Dispersant, other than capped dispersant | 0 - 20 | 0 - 10 | 0 - 8 |
| Traditional or Supplemental VM (different from the comb copolymer viscosity modifier defined in B2 above) | 0 - 20 | 0 - 10 | 0 - 5 |
| Corrosion Inhibitor, Antirust / extreme pressure agents | 0 - 7 | 0.05 - 5 | 0.1 - 1.5 |
| Antioxidant | 0.01 -10 | 0.1 - 5 | 0.1 - 4 |
| Pour Point Depressant | | 0 - 5 | 0.01 - 1.5 |
| Anti-foaming Agent | | 0 - 5 | 0.001 - 0.15 |
| Functionalized Polymer | 0 - 10 | 0 - 5 | 0 - 2 |
| Friction Modifier | 0 - 10 | 0 - 5 | 0 - 3 |
| Antiwear Agent | | 0.1 - 5 | 0.1 - 3 |
| Seal Swell Agents | | 0 - 5 | 0 - 2 |
| Unsaturated Hydrocarbons (LAOs) | | 0 - 5 | 0 - 3 |
| Basestock/diluent | Balance (such as 50 to 95 %) | Balance | Balance |

Typical Amounts of Lubricating Oil Components in LOC (Continued)

| ADDITIVE FORMULATIONS | A (mass%) | B (mass%) | C (mass%) |
|---|---|---|---|
| Dispersant (borated and non-borated), other than capped dispersant | 0 - 20 | 0 - 10 | 0-5 |
| Capped dispersant | 0.1 - 20 | 0.1 - 20 | 1 - 8 |
| Detergents | 0.1 - 20 | 0.2 - 15 | 0.5 - 10 |
| Comb copolymer viscosity modifier | 0.1 - 15 | 0.5 - 5 | 1 to 5 |
| Traditional or Supplemental VM (different from the comb copolymer viscosity modifier defined in B2 above) | 0 - 20 | 0 - 10 | 0 - 5 |
| Amine and or phenol based Antioxidant | 0.01 - 7 | 0.10 - 5 | 1 to 5 |
| Sulfurized fatty acid ester | 0 - 20 | 0 to 10 | 0.5 - 5 |
| Molybdenum containing compound | 0.01-10 | 0.1 to 7 | 0.1 to 5 |

(continued)

| ADDITIVE FORMULATIONS | A (mass%) | B (mass%) | C (mass%) |
|---|---|---|---|
| Antifoaming Agent | 0.001 - 5 | 0.001 - 0.2 | 0.001-0.1 |
| Friction Modifier | 0 - 5 | 0 - 1.5 | 0.1 to 5 |
| LAO (Linear Alpha Olefin) | 0 to 10 | 0.1 to 5 | 0.1 to 2.5 |
| Optional additional additives | 0 -20 | 0.1-10 | 0.1- 5 |
| Basestock/diluent (50 to 99 mass%) | Balance | Balance | Balance |

Typical Amounts of Lubricating Oil Components in LOC (Continued)

| ADDITIVE FORMULATIONS | D (mass%) | E (mass%) | F (mass%) |
|---|---|---|---|
| Dispersant borated, other than capped dispersant | 0 - 10 | 0-8 | 0-5 |
| Dispersant non-borated, other than capped dispersant | 0 to 30 | 0-20 | 0 - 15 |
| Capped dispersant | 0.1 - 20 | 0.1 - 20 | 1-8 |
| Detergent Ca high TBN | 0.1 - 19.8 | 0.25 - 9 | 0.25 to 5 |
| Detergent Mg, preferably high TBN | 0.1 - 19.8 | 0.5 - 8 | 0.5 to 5 |
| Comb copolymer viscosity modifier | 0.1 - 15 | 0.5 - 5 | 1 to 5 |
| Traditional or Supplemental VM (different from the comb copolymer viscosity modifier defined in B2 above) | 0 - 20 | 0 -10 | 0 - 5 |
| Amine and or phenol (preferably amine) based antioxidant | 0.01 -7 | 0.10 - 5 | 1 to 5 |
| Molybdenum containing compound | 0 - 5 | 0.05 - 2 | 0.05 - 1.5 |
| Antifoaming Agent | 0.001 - 5 | 0.001 - 0.2 | 0.001-0.1 |
| Friction Modifier | 0 - 5 | 0 - 3 | 0.1 to 2 |
| Optional additional additives | 0 - 20 | 0.1-10 | 0.1- 10 |
| Basestock/diluent (50 to 99 mass%) | Balance | Balance | Balance |

The foregoing additives are typically commercially available materials. These additives may be added independently, but are usually pre-combined in packages, which can be obtained from suppliers of lubricant oil additives. Additive packages with a variety of ingredients, proportions and characteristics are available and selection of the appropriate package will take the use of the ultimate composition into account.

Fuels

This disclosure also relates to a method of lubricating an automotive internal combustion engine during operation of the engine comprising:

(i) providing to a crankcase of the automotive internal combustion engine the lubricating composition of described herein;
(ii) providing a hydrocarbon fuel in the automotive internal combustion engine; and
(iii) combusting the fuel in the automotive internal combustion engine, such as a spark-ignited or compression-ignited two- or four-stroke reciprocating engines such as a diesel engine or passenger car engine (such as a spark-ignited combustion engine).

This disclosure also relates to a fuel composition comprising the lubricating oil compositions described herein and a hydrocarbon fuel, wherein the fuel may be derived from petroleum and/or biological sources ("biofuel" or "renewable fuel"). In embodiments, the fuel comprises from 0.1 to 100 mass % renewable fuel, alternately from 1 to 75 mass % renewable fuel, alternately from 5 to 50 mass % renewable fuel, based upon the total mass of the renewable fuel and the

petroleum derived fuel.

The renewable fuel component is typically produced from vegetable oil (such as palm oil, rapeseed oil, soybean oil, jatropha oil), microbial oil (such as algae oil), animal fats (such as cooking oil, animal fat, and/or fish fat) and/or biogas. Renewable fuel refers to biofuel produced from biological resources formed through contemporary biological processes. In an embodiment, the renewable fuel component is produced by means of a hydrotreatment process. Hydrotreatment involves various reactions where molecular hydrogen reacts with other components, or the components undergo molecular conversions in the presence of molecular hydrogen and a solid catalyst. The reactions include, but are not limited to, hydrogenation, hydrodeoxygenation, hydrodesulfurization, hydrodenitrification, hydrodemetallization, hydrocracking, and isomerization. The renewable fuel component may have different distillation ranges, which provide the desired properties to the component, depending on the intended use.

**Uses**

The lubricating compositions of the disclosure may be used to lubricate mechanical engine components, particularly in internal combustion engines, *e.g.*, spark-ignited, spark assisted compression ignited, or compression-ignited, two- or four-stroke reciprocating engines, by adding the lubricant thereto. Typically, they are crankcase lubricants, such as passenger car motor oils or heavy-duty diesel engine lubricants.

In particular, the lubricating compositions of the present disclosure are suitably used in the lubrication of the crankcase of a compression-ignited, internal combustion engine, such as a heavy-duty diesel engine.

In particular, the lubricating compositions of the present disclosure are suitably used in the lubrication of the crankcase of a spark-ignited turbo charged internal combustion engine.

In particular, the lubricating compositions of the present disclosure are suitably used in the lubrication of the passenger car crankcase of a spark-ignited (optionally turbo charged) internal combustion engine.

In embodiments, the lubricating oils of this disclosure are used in spark-assisted high compression internal combustion engines and, when used in high compression spark ignition internal combustion engines the lubricating oil compositions of this disclosure are useful in lubricating high compression spark ignition engines.

In embodiments, the lubricating compositions of the present disclosure are suitably used in the lubrication of the crankcase of an engine for a heavy-duty diesel vehicle (*i.e.,* a heavy-duty diesel vehicle having a gross vehicle weight rating of 10,000 pounds or more.)

In embodiments, the lubricating compositions of the present disclosure are suitably used in the lubrication of the crankcase of a passenger car diesel engine.

In particular, lubricating oil formulations of this disclosure are particularly useful in compression-ignited internal combustion engines, *i.e.,* heavy-duty diesel engines, employing low viscosity oils, such as API FA-4 and future oil categories, in which wear protection of the valve train becomes challenging.

Use of the composition described herein, especially those have a flat viscosity profile, have increased fuel efficiency. Lubricating oil compositions comprising, the comb copolymers described herein, especially in combination with capped dispersant described herein, have enhanced fuel economy improvement as compared to the Toyota 0W-8 GLV-1 lubricating oil.

The following non-limiting examples are provided to illustrate the disclosure.

**Experimental**

All molecular weights are number average molecular weights (Mn) reported in g/mol, as determined by gel permeation chromatography using polystyrene standards, except for components based upon/derived from polyisobutylene (PIB) polymers. PIB derived materials are described in terms of gel permeation chromatography using PIB standards (including PIB's obtained from BASF under the tradename Glissopal™ where PIB standards are reported to have been used by the manufacturer). Unless otherwise noted. "A.I.", "a.i.", and "ai" are wt % active ingredient, unless otherwise indicated.

***Testing Procedures***

**KV150** is Kinematic viscosity measured at 150° C according to ASTM D445-19a.

**KV140** is Kinematic viscosity measured at 140° C according to ASTM D445-19a.

**KV130** is Kinematic viscosity measured at 130° C according to ASTM D445-19a.

**KV120** is Kinematic viscosity measured at 120° C according to ASTM D445-19a.

**KV110** is Kinematic viscosity measured at 110° C according to ASTM D445-19a.

**KV100** is Kinematic viscosity measured at 100° C according to ASTM D445-19a.

**KV90** is Kinematic viscosity measured at 90° C according to ASTM D445-19a.

**KV80** is Kinematic viscosity measured at 80° C according to ASTM D445-19a.
**KV70** is Kinematic viscosity measured at 70° C according to ASTM D445-19a.
**KV60** is Kinematic viscosity measured at 60° C according to ASTM D445-19a.
**KV50** is Kinematic viscosity measured at 50° C according to ASTM D445-19a.
**KV40** is Kinematic viscosity measured at 40° C according to ASTM D445-19a.
**KV30** is Kinematic viscosity measured at 30° C according to ASTM D445-19a.
**KV20** is Kinematic viscosity measured at 20° C according to ASTM D445-19a.
**Viscosity index** is determined according to ASTM D2270.
**Sulfur content in oil** is measured by ASTM D5185.
**Sulfated ash** ("SASH") content is measured by ASTM D874.
**Phosphorus, Boron, Calcium, Zinc, Molybdenum,** and **Magnesium** content are measured by ASTM D5185.
**High Temperature High Shear Viscosity at 150** °C ("HTHS150") is determined at 150° C according to ASTM D4683 and is reported in cPs.
**High Temperature High Shear Viscosity at 100** °C ("HTHS100") is determined at 100° C according to ASTM D6616 and is reported in cPs.
**Functionality (Fv)** is a measure of the average number of acid groups per reaction product of the PIB and maleic anhydride). Fv is determined according to the following formula 1:

$$Fv = (SAP \times M_n)/((1122 \times A.I.) - (SAP \times MW)) \qquad (1)$$

wherein SAP is the saponification number (i.e., the number of milligrams of KOH consumed in the complete neutralization of the acid groups in one gram of the succinic-containing reaction product, as determined according to ASTM D94); $M_n$ is the number average molecular weight of the starting olefin polymer (polybutene); A.I. is the percent active ingredient of the succinic-containing reaction product (the remainder being unreacted polybutene and diluent); and MW is the molecular weight of the dicarboxylic acid-producing moiety (98 for maleic anhydride).

**Haake Carbon Black Test.** Dispersancy of carbon black is determined by blending base oil and additive components to provide a formulated oil. Nine wt% of carbon black powder is added to a formulated oil and the sample is blended overnight at 100 °C. The viscosity of the carbon black dispersion is then measured in a Haake rheometer over a range of shear rates from 1 to 10 $sec^{-1}$ and 10 to 1000 $sec^{-1}$.

**Simulated % Fuel Economy Improvement (%FEI)** is calculated based on a 0W-20 reference oil (for examples 1 and 2, Table 3) or a 0W-8 reference oil (commercially available Toyota 0W-8 GLV-1, for examples 3 to 16, Tables 6 and 9) at the JASO M366 operating points and overall. (A higher simulated % FEI value is considered indicative of better fuel efficiency). The coefficient of variation (relative standard deviation) used was 8.4% based on the assessment of a reference oil in the same motored friction rig (Toyota 2ZR-FXE engine). The engine is operated at a constant engine speed, temperature (oil and coolant) and variable peak cylinder pressure (PCP). Candidate improvement vs. reference used to compare formulations. The test program consists of 6 different oil and coolant temperatures (from 14 to 115 °C) and 6 different speeds (700 to 3000 rpm). To not carry over additive effects on friction from one oil candidate to the next one, before each oil change for another test, a flushing process is be conducted. The engine is operated from high to low temperature with a speed sweep at each temperature.

The torque values (Nm) of candidate and reference formulations at 6 JASO M366 operating points are determined from the torque values at the above steady state points. The torque values (Nm) of candidate and reference formulations at each JASO M366 operating points are then translated to work (kilowatts) using the following equation:

$$\text{Work} = \text{Measured torque} \times \text{engine speed} \times \left(\frac{2\pi}{60}\right) \times 10^{-3}$$

The total work (kW) of candidate vs. reference formulation is then calculated from using the following equation (per JASO M366 procedure):

$$\text{Total work (kW)} = \sum_{i=1}^{6} \text{work}_i \times \text{WTF}_i$$

$\text{work}_i$ = work at stage i

$\text{WTF}_i$ = weight factor at stage i

The %FEI in the motored 2ZR-FXE friction rig of candidate vs. reference formulation is then calculated using the following equation:

$$\%\text{FEI (in motored 2ZR} - \text{FXE friction rig)} = \frac{\text{total work}_{\text{reference}} - \text{total work}_{\text{candidate}}}{\text{total work}_{\text{reference}}} \times 100\%$$

| Stage | Temperature (deg C) | Engine speed (rpm) | Coolant temp (deg C) | Weighting (%) |
|---|---|---|---|---|
| 1 | 64 | 1000 | 73 | 20.0420 |
| 2 | 67 | 1300 | 67 | 20.4407 |
| 3 | 64 | 1570 | 64 | 14.2498 |
| 4 | 47 | 1970 | 67 | 13.4313 |
| 5 | 37 | 1600 | 37 | 18.5310 |
| 6 | 35 | 1300 | 35 | 13.3054 |

***Materials***

**Component Chart**

| Components | Description |
|---|---|
| EC PIBSA-PAM, 2300 Mn | ethylene carbonate capped PIBSA-PAM, 2300 Mn PIB |
| PmNE | PIBSA ester of methylene-bridged naphthyloxy ethanol prepared in a manner similar to Example 1 of U.S. 2009/0203559. |
| PIB-MALA | PIBSA-PAM (derived from tetraethylenepentamine polyamine) ashless dispersant diluted in HVI 150 Gp I base oil |
| PIBSA-PAM, 1300 Mn | PIBSA-PAM dispersant, 1300 Mn PIB A8 from Table 1A below |
| B-PIBSA-PAM, 950 Mn | Borated PIBSA-PAM (950Mn) |
| EC PIBSA-PAM, 1300 Mn | Ethylene carbonate capped PIBSA-PAM, 1300 Mn |
| Mg Salicylate 340 TBN | Magnesium Salicylate Detergent 340 TBN |
| Ca Salicylate 350 TBN | Ca salicylate/PDMS Blend TBN 350 in ~ 43 wt % oil/anti-foamant |
| Ca sulfonate TBN 300 | Calcium sulfonate detergent TBN 300 |
| Mg sulfonate detergent 400 TBN | Magnesium sulfonate detergent (400 TBN) |
| ZDDP-1 | 90 mass% ZDDP (primarily derived from 1° alcohol(s)), diluted w/ ~10 mass% mineral oil |
| ZDDP-2 | ZDDP (primarily derived from 2° alcohol(s)) |
| DPA antioxidant | Di-phenylamine antioxidant -Irganox L67 |
| Phenol antioxidant | Hindered phenol antioxidant |
| corrosion inhibitor | benzotriazole corrosion inhibitor (n,n-Bis(2-ethylhexyl)-4-methyl-1h-benzotriazole-1-methanamine) Irgamet™ 39 |
| PIBSA | Polyisobutylene succinate (Mn 950, ai ~72) |
| Anti-foamant | polydimethyl siloxane -silicone anti-foamant |
| diluent | Group I base oil diluent. |
| PPD | Pour point depressant of $C_{12}$-$C_{18}$ dialkyl fumarate vinyl acetate copolymer in approx. 52 wt% oil. |

(continued)

| Components | Description |
|---|---|
| MoDTC Trimer | Trimeric molybdenum dithiocarbamate friction modifier |
| MoDTC Dimer | Dimeric molybdenum dithiocarbamate friction modifier |
| VM-1 | Alkylmethacrylate based copolymer (available from Evonik Oil Additives, USA Inc. as Viscoplex™ 3-160) |
| VM-2 | Alkylmethacrylate based copolymer (available from Evonik Oil Additives, USA Inc. as Viscoplex™ 3-220) |
| VM-3 | PMA comb copolymer prepared according to US 2021/0189281 (having about 13 wt% macromonomer (hydrogenated polybutadiene mono-methacrylate, ~ 5000 Mn), about 64 wt% n-butyl methacrylate, about 19 wt% n-lauryl methacrylate, about 4 wt% 2-phenoxyethyl methacrylate) in oil. |
| VM-16 | PMA comb copolymer prepared according to US 2021/0189281 (having about 13 wt% macromonomer (of hydrogenated polybutadiene mono-methacrylate, ~ 5000 Mn), about 64 wt% n-butyl methacrylate, about 19 wt% n-lauryl methacrylate, about 4 wt% 2-phenoxyethyl methacrylate) in oil. |
| VM-4 | PMA comb copolymers prepared according to US 2021/0189281 (having about 14 wt% macromonomer (of hydrogenated polybutadiene mono-methacrylate, ~ 5000 Mn), about 61 wt% n-butyl methacrylate, about 19 wt% n-lauryl methacrylate, about 4 wt% 2-phenoxyethyl methacrylate, about 2 wt% methyl methacrylate) in oil. |
| VM-5 | PMA comb copolymers prepared according to US 2021/0189281 (having about 14 wt% macromonomer (of hydrogenated polybutadiene mono-methacrylate, ~ 5000 Mn), about 64.5 wt% n-butyl methacrylate, about 16.5 wt% n-lauryl methacrylate, about 5 wt% 2-phenoxyethyl methacrylate) in oil. |
| VM-6 | PMA comb copolymers prepared according to US 2021/0189281 (having about 12.5 wt% macromonomer (of hydrogenated polybutadiene mono-methacrylate, ~ 5000 Mn), about 61.5 wt% n-butyl methacrylate, about 21 wt% n-lauryl methacrylate, about 5 wt% 2-phenoxyethyl methacrylate) in oil. |
| VM-7 | Same copolymer as VM-6 but diluted to less than 30 mass% in oil. |
| VM-8 | Alkylmethacrylate based copolymer (available from Evonik Oil Additives, USA Inc. as Viscoplex™ 6-850) |
| VM-9 | Alkylmethacrylate based comb copolymer (available from Evonik Oil Additives, USA Inc. as Viscoplex™ 3-200) |
| VM-10 | Alkylmethacrylate based comb copolymer (available from Evonik Oil Additives, USA Inc. as Viscoplex™ 3-201) |
| VM-11 | Alkylmethacrylate based comb copolymer (available from Evonik Oil Additives, USA Inc. as Viscoplex™ 3-195, obtained Oct 2022) |
| VM-12 | Hydrogenated styrene-diene block star copolymer in ~94 m% oil |
| VM-13 | Hydrogenated styrene-diene block star copolymer in ~85 m% oil |
| VM-14 | Ethylene propylene copolymer Mw/Mn approx 2, available from Lubrizol (LZ7077) |
| VM-15 | Paratone™ 68231 olefin copolymer viscosity modifier having a $KV_{100}$ of 830 cSt and a viscosity index of about 115, available from Chevron Oronite |
| Group III oil, 3 cSt | Group III base stock 3 cSt, Yubase3 |
| Group III oil, 4 cSt | Group III base stock 4 cSt, Yubase 4 and or Yubase4plus |
| Group III oil, 6 cSt | Group III bases stock 6 cSt, Yubase6plus |
| Group III GTL oil, 3 cSt | Shell Gas to Liquid "GTL" base stock (Group III) 3 cSt |

(continued)

| Components | Description |
|---|---|
| Group III GTL oil, 4 cSt | Shell GTL base stock (Group III) 4 cSt |

***Examples***

**Example A Low Mn PIB for PIBSA-PAM**

Table A summarizes dispersants prepared from isobutylene polymers (PIB), reacted with maleic anhydride (to form PIBSA) followed by polyethylene amines (to form PIBSA-PAM) and using thermal methods known in the art for the maleation step. Note that Component A9* was prepared from a mixed feed of 2300 Mn HR-PIB (Glissopal™ 2300, 40.8 wt%) and 1000 Mn low molecular weight HR-PIB (Glissopal™ 1000, 59.2 wt%) that were averaged to obtain 1300 Mn, both PIBSA-PAMs were made with polyethylene amines (PAM).

**Table A1.**

| Dispersant name | PIB Mn (g/mol) | A.I. % | Functionality (Fv) | N m% of component/oil combination |
|---|---|---|---|---|
| A1 | 2300 | 54 | 1.8 | 1.4 |
| A2 | 2200 | 54.5 | 1.4 | 1.2 |
| A3 | 2300 | 55 | 1.4 | 1.2 |
| A4 | 1300 | 67 | 1.1 | 2.0 |
| A5 | 1300 | 87 | 1.3 | 3.0 |
| A6 | 1300 | 91 | 1.6 | 3.6 |
| A7 | 1300 | 60 | 1.3 | 2.1 |
| A8 | 1300 | 60 | 1.45 | 2.3 |
| A9 | 1300 | 60 | 1.4 | 2.2 |
| A10 | 1000 | 82 | 1.3 | 3.5 |
| A11 | 1000 | 72 | 1.1 | 2.8 |

Selected dispersants from Table A1 were formulated into 0W-12 Lubricating Oil Compositions as shown in Table A2. Figure 1 presents selected KV40 versus %N wherein %N is the contribution of each dispersant within the finished oils (Table A1). It can be seen in Figure 1 that the data series for 1300 molecular weight medium and high functionality, A5 (open circles ◦) and A6 (open triangles Δ), (as well as 1000 MW medium functionality, A10) exhibit lower KV40 values at each given unit concentration of nitrogen contributed by the dispersant to the finished formulation. This means that where the N% contribution correlates to the dispersancy effectiveness of the formulation, the same or better dispersancy power will be demonstrated for A5 and A6 with a lower contribution to the viscosity of the formulation (as indicated by the Y-axis, KV40 values). This typically corresponds to an ability of the oil formulated with A5 or A6 to demonstrate higher or equal dispersancy power with improved Fuel Economy due to reduced formulation viscosity.

Table A2

| Table A2* | Oil | Oil 2 | Oil 3 | Oil 4 | Oil 5 | Oil 6 | Oil 7 | Oil 8 | Oil 9 | Oil 10 |
|---|---|---|---|---|---|---|---|---|---|---|
| A3 | 2.000 | 4.000 | 6.000 | | | | | | | |
| A1 | | | | 2.000 | 4.000 | 6.000 | | | | |
| A4 | | | | | | | 4.000 | 6.000 | 8.000 | |
| A6 | | | | | | | | | | 2.000 |
| Group III oil, 4 cSt | 91.0 | 89.0 | 87.0 | 91.0 | 89.0 | 87.0 | 89.0 | 87.0 | 85.0 | 91.0 |
| **Total** | 100 | 100 | 100 | 100 | 100 | 100 | 100 | 100 | 100 | 100 |
| **Package** | 9.0 | 11.0 | 13.0 | 9.0 | 11.0 | 13.0 | 11.0 | 13.0 | 15.0 | 9.0 |

(continued)

| Table A2* | Oil | Oil 2 | Oil 3 | Oil 4 | Oil 5 | Oil 6 | Oil 7 | Oil 8 | Oil 9 | Oil 10 |
|---|---|---|---|---|---|---|---|---|---|---|
| KV100 (cSt) | 4.99 | 5.5 | 6.07 | 5 | 5.53 | 6.08 | 5.47 | 5.92 | 6.48 | 5.07 |
| KV40 (cSt) | 22.75 | 25.95 | 29.51 | 22.76 | 25.89 | 29.39 | 26.28 | 29.34 | 33.17 | 23.58 |
| CCS @ -35C (cP) | 2892 | 3451 | 4188 | 2811 | 3313 | 3979 | 3666 | 4495 | 5576 | 2983 |
| HTHS (cP) @ 100C | 3.82 | 4.27 | 4.76 | 3.86 | 4.26 | 4.69 | 4.36 | 4.66 | 5.13 | 3.98 |
| HTHS (cP) @ 150C | 1.8 | 1.97 | 2.15 | 1.78 | 1.95 | 2.14 | 1.93 | 2.06 | 2.24 | 1.82 |
| Dispersant in oil, a.i.% | 1.10 | 2.20 | 3.30 | 1.08 | 2.16 | 3.24 | 2.69 | 4.03 | 5.38 | 1.82 |
| Dispersant in oil, N % | 0.024 | 0.048 | 0.072 | 0.028 | 0.057 | 0.085 | 0.080 | 0.121 | 0.161 | 0.071 |
| * Each of Oil 1 to Oil 10 also contained 0.501 m% PmNE, 1.180 m% of Mg Salicylate 340 TBN; 0.680 m% of Ca Salicylate 350 TBN; 1.030 m% of ZDDP-1; 2.0 m% of DPA antioxidant: 0.300 m% PIBSA; 0.007 m% antifoamant; and 1.303 m% diluent. | | | | | | | | | | |

Table A2 Cont'd

| Table A2*, cont'd | Oil 11 | Oil 12 | Oil 13 | Oil 14 | Oil 15 | Oil 16 | Oil 17 | Oil 18 | Oil 19 | Oil 20 |
|---|---|---|---|---|---|---|---|---|---|---|
| A6 | 4.000 | 6.000 | 2.800 | | | | | | | |
| A5 | | | | 1.000 | 2.500 | 4.000 | 4.000 | | | |
| A10 | | | | | | | | 1.000 | 2.500 | 4.000 |
| Group III oil, 4 cSt | 89.0 | 87.0 | 90.2 | 92.0 | 90.5 | 89.0 | 89.0 | 92.0 | 90.5 | 89.0 |
| **Total** | 100 | 100 | 100 | 100 | 100 | 100 | 100 | 100 | 100 | 100 |
| **Package** | 11.0 | 13.0 | 9.8 | 8.0 | 9.5 | 11.0 | 11.0 | 8.0 | 9.5 | 11.0 |
| KV100 (cSt) | 5.67 | 6.29 | 5.31 | 4.7 | 5.12 | 5.55 | 5.58 | 4.67 | 5.04 | 5.39 |
| KV40 (cSt) | 27.21 | 31.17 | 25.04 | 21.49 | 24.03 | 26.56 | 26.95 | 21.42 | 23.88 | 26.09 |
| CCS @ -35C (cP) | 3671 | 4626 | 3290 | 2702 | 3162 | 3690 | | 2706 | 3399 | 3761 |
| HTHS (cP) @ 100C | 4.55 | 4.98 | 4.17 | 3.67 | 3.98 | 4.36 | | | | |
| HTHS (cP) @ 150C | 2.04 | 2.24 | 1.91 | 1.63 | 1.76 | 1.91 | 1.97 | 1.72 | 1.84 | 1.95 |
| Dispersant in oil, a.i.% | 3.65 | 5.47 | 2.55 | 0.87 | 2.17 | 3.47 | 3.47 | 0.82 | 2.05 | 3.28 |
| Dispersant in oil, N % | 0.142 | 0.213 | 0.099 | 0.030 | 0.074 | 0.119 | 0.119 | 0.034 | 0.085 | 0.135 |
| * Each of Oil 11 to Oil 20 also contained 0.501 m% PmNE, 1.180 m% of Mg Salicylate 340 TBN; 0.680 m% of Ca Salicylate 350 TBN; 1.030 m% of ZDDP-1; 2.0 m% of DPA antioxidant: 0.300 m% PIBSA; 0.007 m% antifoamant; and 1.303 m% diluent. | | | | | | | | | | |

Selected dispersants from Table A1 were then formulated to 0W-12 SAE viscosity to evaluate the soot handling abilities and are shown in Table A3. Soot dispersancy was measured using the **Haake Carbon Black Test** described above and the results are illustrated in Figure 2. Note, a different treat rate (4.244 mass%) was used for the 1000 Mn dispersant (A10) in Oil 26 as A10 has significantly higher active ingredient content as compared to other dispersants in this series (Table A1).

In the Haake Carbon Black test, each formulation was dosed with 9% carbon black (CB) to simulate the effect of soot in an aged lubricant in the field. The lower the measured viscosity over a range of shear rates, the better the formulation's soot dispersancy property. By reference to Figure 2 it can be observed that the data set represented by the open circles ◦, from Dispersant A8 shows a trend with lower viscosity across the range of shear rates graphed as compared with the data trend represented by the solid triangles ▲, from Dispersant A9. This confirms that Dispersant A8 has superior dispersancy as compared to A9.

**Table A3****

| | Oil 21 | Oil 22 | Oil 23 | Oil 24 | Oil 25 | Oil 26 |
|---|---|---|---|---|---|---|
| **Constituent** | **Amount** | **Amount** | **Amount** | **Amount** | **Amount** | **Amount** |
| A1 | 5.800 | | | | | |
| A2 | | 5.800 | | | | |
| A3 | | | 5.800 | | | |
| A8 | | | | 5.800 | | |
| A9 | | | | | 5.800 | |
| A10 | | | | | | 4.244 |
| Group III oil, 4 cSt | 85.220 | 85.220 | 85.220 | 85.220 | 85.220 | 86.776 |
| Total m% | 100 | 100 | 100 | 100 | 100 | 100 |
| Package treat rate | 13.780 | 13.780 | 13.780 | 13.780 | 13.780 | 12.224 |
| KV100 | 6.44 | 6.43 | 6.43 | 5.95 | 6 | 5.78 |
| HTHS150 | 2.25 | 2.25 | 2.25 | 2.08 | 2.11 | 2.06 |
| CCS-35 | 4515 | 4817 | 4688 | 4096 | 4107 | 4101 |
| | | | | | | |
| Dispersant (active)% | 3.13 | 3.16 | 3.19 | 3.48 | 3.48 | 3.40 |
| Dispersant N% | 0.10 | 0.08 | 0.08 | 0.13 | 0.13 | 0.15 |
| ** Each of Oil 21 to Oil 26 also contained 0.540 m% B-PIBSA-PAM, 950 Mn; 0.500 m% PmNE, 1.130 m% of Mg Salicylate 340 TBN; 0.680 m% of Ca Salicylate 350 TBN; 1.030 m% of ZDDP-1;0.140 m% of MoDTC Trimer; 2.0 m% of DPA antioxidant: 0.300 m% PIBSA; 0.004 m% antifoamant; 1.656 m% diluent and 1.0 m% VM-12. | | | | | | |

**Example B**

Oils O, P, Q, R, S, T, and U will be prepared as indicated below.

| | **O** | **P** | **Q** | **R** | **S** | **T** | **U** |
|---|---|---|---|---|---|---|---|
| EC PIBSA-PAM, 1300 Mn | 3.265 | 3.265 | 3.490 | 3.490 | 3.490 | 3.490 | 3.265 |
| Ca Salicylate 350 TBN | 1.300 | 1.100 | 1.300 | 1.100 | 0.870 | 0.870 | 1.100 |
| Mg Salicylate 340 TBN | 0.400 | 0.500 | 0.400 | 0.500 | 0.590 | 0.590 | 0.500 |
| Ca, % | 0.163 | 0.138 | 0.163 | 0.138 | 0.110 | 0.110 | 0.138 |
| Mg, % | 0.030 | 0.038 | 0.030 | 0.038 | 0.044 | 0.044 | 0.037 |
| Soap, % | 0.495 | 0.467 | 0.495 | 0.467 | 0.427 | 0.427 | 0.467 |

Each oil will also contain: ZDDP (combination of primary and secondary), MODTC dimer and/or trimer, anti-oxidant (diphenylamine and/or hindered phenol), corrosion inhibitor, PIBSA, antifoamant and diluent) and may optionally contain commercially available comb copolymer or inventive comb copolymer as described herein. The fuel economy performance in JASO M366 is expected to be about 0.2 - 0.4 % against 0W-8 benchmark oil.

**Example C**

**Impact of VM.** A series of VMs of different classes were evaluated for their suitability for Flat Viscosity Oils using relative viscometric contribution properties at different temperatures. The binary blends of a VM in Yubase4 were prepared to the same thickening power (KV100 = 8 cSt) and the viscosities of the binary blends and Yubase4 measured at different temperatures, from 20 to 150°C. The relative viscosity versus Yubase4 was calculated as the ratio of KV of the binary blends over the KV of Yubase4 at the same temperature (see the following equation and Table 1 below). The lower the

relative viscosity (versus Yubase4), the lower the viscometric contribution of the VM to Yubase4. The data are reported in Table 1 and Figure 3.

$$\text{Relative kinematic viscosity at X temperature (Relative } KV^{X}) = \frac{KV^{X}_{VM+Yubase4}}{KV^{X}_{Yubase4}}$$

As can be seen from Figure 3, comb PMAs (Comparative VM's: VM-1, VM- 9, VM-10, and VM-11, and inventive VM-16) exhibit good viscometric profiles suitable for Flat Viscosity Oils: (1) minimal viscometric contribution to base oils (low relative KV values versus base oil) at the low temperature regimes, particularly 20 - 70 ◦C, as relevant to the operating temperature of JASO M366 fuel economy test; and (2) excellent thickening efficiency or high relative KV values at 100 - 150 ◦C to ensure reliability and engine durability. VM-16, in particular, has very good low temperature properties and high thickening efficiency compared to other comb PMA's in the series, shown by the lowest relative KV from 70 to 90 ◦C, and the highest relative KV from 130 to 150 ◦C.

As can be observed From Table 1, viscosity modifiers useful for Flat Viscosity Oils have one, two or three of:

1. a ratio of relative KV140 versus relative KV20 of 1.9 or more, such as 2.1 or more. (This is indicative of the contrast between very high temperature thickening and very low temperature viscometric contribution); and/or
2. a ratio of relative KV100 versus relative KV70 of 1.3 or more, such as 1.35 or more. (This is indicative of the contrast between high temperature thickening and lower temperature viscometric contribution); and/or
3. a viscosity index (VI) of 320 or more, such as 340 or more.

Table 1.

| | Temp (°C) | OCP | OCP | SV | SV | conventional PMA | comb PMA | comb PMA | comb PMA | comb PMA | comb PMA | Yubase 4 (repeat 1) | Yubase4 (repeat 2) |
|---|---|---|---|---|---|---|---|---|---|---|---|---|---|
| **Kinematic viscosity** | 20 | 99.26 | 95.88 | 81.98 | 94.17 | 69.94 | 57.26 | 54.45 | 56.61 | 52.04 | 53.07 | 44.28 | 44.22 |
| | 30 | 61.68 | 60.85 | 51.96 | 59.33 | 46.34 | 36.85 | 35.56 | 36.59 | 33.81 | 34.43 | 28.47 | 28.44 |
| | 40 | 41.00 | 41.01 | 35.06 | 39.64 | 32.37 | 25.59 | 24.86 | 25.30 | 23.48 | 23.84 | 19.36 | 19.38 |
| | 50 | 28.64 | 28.74 | 24.88 | 27.72 | 23.69 | 18.68 | 18.22 | 18.40 | 17.26 | 17.39 | 13.84 | 13.84 |
| | 60 | 20.68 | 20.47 | 18.12 | 20.20 | 18.14 | 14.27 | 14.11 | 14.15 | 13.48 | 13.42 | 10.26 | 10.31 |
| | 70 | 15.54 | 15.40 | 13.76 | 15.27 | 14.34 | 11.47 | 11.49 | 11.43 | 11.23 | 10.89 | 8.02 | 7.94 |
| | 80 | 12.04 | 11.98 | 11.04 | 11.88 | 11.64 | 9.79 | 9.87 | 9.64 | 9.88 | 9.28 | 6.26 | 6.29 |
| | 90 | | | | | | | 8.82 | 8.70 | 8.87 | 8.39 | | 5.11 |
| | 100 | 8.00 | 8.00 | 8.01 | 7.98 | 8.07 | 8.13 | 8.03 | 8.05 | 7.99 | 7.99 | 4.23 | 4.24 |
| | 110 | 6.71 | 6.69 | 7.04 | 6.67 | 6.87 | 7.47 | 7.31 | 7.52 | 7.21 | 7.57 | 3.58 | 3.57 |
| | 120 | 5.83 | 5.76 | 6.19 | 5.64 | 5.94 | 6.84 | 6.71 | 6.94 | 6.54 | 7.00 | 3.07 | 3.06 |
| | 130 | 4.88 | 4.88 | 5.37 | 4.87 | 5.18 | 6.22 | 6.06 | 6.38 | 5.93 | 6.54 | 2.67 | 2.65 |
| | 140 | 4.25 | 4.22 | 4.69 | 4.23 | 4.58 | 5.68 | 5.54 | 5.85 | 5.40 | 6.13 | 2.34 | 2.32 |
| | 150 | | | | | | | 5.06 | 5.39 | 4.94 | 5.73 | | 2.06 |

(continued)

| | Temp (°C) | OCP | OCP | SV | SV | conventional PMA | comb PMA | comb PMA | comb PMA | comb PMA | comb PMA | Yubase 4 (repeat 1) | Yubase4 (repeat 2) |
|---|---|---|---|---|---|---|---|---|---|---|---|---|---|
| **Relative viscosity** | 20 | 2.24 | 2.17 | 1.85 | 2.13 | 1.58 | 1.29 | 1.23 | 1.28 | 1.18 | 1.20 | | |
| | 30 | 2.17 | 2.14 | 1.83 | 2.08 | 1.63 | 1.29 | 1.25 | 1.29 | 1.19 | 1.21 | | |
| | 40 | 2.12 | 2.12 | 1.81 | 2.05 | 1.67 | 1.32 | 1.28 | 1.31 | 1.21 | 1.23 | | |
| | 50 | 2.07 | 2.08 | 1.80 | 2.00 | 1.71 | 1.35 | 1.32 | 1.33 | 1.25 | 1.26 | | |
| | 60 | 2.02 | 2.00 | 1.77 | 1.97 | 1.77 | 1.39 | 1.37 | 1.37 | 1.31 | 1.30 | | |
| | 70 | 1.94 | 1.92 | 1.72 | 1.90 | 1.79 | 1.43 | 1.45 | 1.44 | 1.41 | 1.37 | | |
| | 80 | 1.92 | 1.91 | 1.76 | 1.90 | 1.86 | 1.56 | 1.57 | 1.53 | 1.57 | 1.48 | | |
| | 90 | | | | | | | 1.73 | 1.70 | 1.74 | 1.64 | | |
| | 100 | 1.89 | 1.89 | 1.89 | 1.89 | 1.91 | 1.92 | 1.89 | 1.90 | 1.88 | 1.88 | | |
| | 110 | 1.87 | 1.87 | 1.97 | 1.86 | 1.92 | 2.09 | 2.05 | 2.11 | 2.02 | 2.12 | | |
| | 120 | 1.90 | 1.87 | 2.01 | 1.84 | 1.93 | 2.22 | 2.19 | 2.27 | 2.14 | 2.29 | | |
| | 130 | 1.83 | 1.83 | 2.01 | 1.82 | 1.94 | 2.33 | 2.29 | 2.41 | 2.24 | 2.47 | | |
| | 140 | 1.81 | 1.80 | 2.00 | 1.81 | 1.96 | 2.43 | 2.39 | 2.52 | 2.33 | 2.64 | | |
| | 150 | | | | | | | 2.46 | 2.62 | 2.40 | 2.78 | | |
| Rel KV140/Rel KV20 | | 0.8 | 0.8 | 1.1 | 0.8 | 1.2 | 1.9 | 1.9 | 2.0 | 2.0 | 2.2 | | |
| Rel KV100/Rel KV70 | | 1.0 | 1.0 | 1.1 | 1.0 | 1.1 | 1.3 | 1.3 | 1.3 | 1.3 | 1.4 | | |
| VI | | 172 | 172 | 212 | 179 | 238 | 324 | 330 | 324 | 352 | 345 | | |

**Impact of Detergents.** Example oils 1 and 2 were prepared and tested for Simulated % FEI (fuel economy improvement) as described above. The data are reported in Table 2 and Figure 4. Example 1 and Example 2 are SAE viscosity grade 0W-16 oils based on mixed Ca/Mg salicylate detergents that used with the same viscosity modifier, base stock type, and target the same NOACK level (~20%) and similar soap content but have different Ca/Mg ratios.

Table 2.

| Component | 0W-20 Ref. oil | Benchmark 0W-8 (Toyota 0W-8 GLV-1) | Example 1 | Example 2 |
|---|---|---|---|---|
| EC PIBSA-PAM, 2300 Mn | 3.923 | | 2.800 | 3.100 |
| Mg Salicylate 340 TBN | 0.600 | | 0.600 | 0.400 |
| Ca Salicylate 350 TBN | 1.000 | | 1.000 | 1.300 |
| ZDDP-1 | 0.900 | | 0.200 | |
| ZDDP-2 | 0.180 | | 0.900 | 1.050 |
| MoDTC Trimer | 0.150 | | 0.300 | |
| MoDTC Dimer | 0.780 | | 0.700 | 0.700 |
| DPA antioxidant | 1.800 | | 1.800 | 1.000 |
| Phenol antioxidant | | | | 0.500 |
| corrosion inhibitor | 0.010 | | 0.010 | 0.010 |
| PIBSA | 0.200 | | 0.200 | 0.200 |
| Anti-foamant | 0.003 | | 0.003 | 0.003 |
| diluent | 0.537 | | 0.537 | 0.987 |
| Adpack | | | 9.050 | 8.600 |
| PPD | | | 0.050 | 0.050 |
| VM-6 | | | 7.400 | |
| VM-7 | | | | 10.500 |
| VM-1 | 10.000 | | | |
| VM-2 | 0.550 | | | |
| Group III oil, 3 cSt | 36.000 | | 34.000 | 30.978 |
| Group III oil, 4 cSt | 43.317 | | 49.500 | 49.222 |
| **Total** | | | 100.000 | 100.000 |
| HTHS150 (cP) | 2.60 | 1.83 | 2.27 | 2.30 |
| HTHS100 (cP) | | 4.02 | 4.16 | |
| $Kv_{100}$ (cSt) | 7.20 | 5.03 | 6.45 | 6.275 |
| $Kv_{40}$ (cSt) | 26.04 | 23.48 | 23.42 | 23.39 |
| Ca m% | 0.125 | 0.125 | 0.126 | 0.163 |
| Mg m% | 0.045 | 0.046 | 0.045 | 0.030 |
| Ca/Mg ratio | 2.8 | 2.7 | 2.8 | 5.4 |
| Mo ppm | 863 | 865 | 865 | 700 |
| Nm% | 0.123 | | 0.108 | 0.080 |
| P m% | 0.075 | 0.075 | 0.075 | 0.071 |
| S m% | 0.266 | 0.0286 | 0.272 | 0.238 |
| Si ppm | 11 | 10.000 | 10.412 | 10.602 |
| Zn m% | 0.083 | 0.083 | 0.083 | 0.079 |

(continued)

| Component | 0W-20 Ref. oil | Benchmark 0W-8 (Toyota 0W-8 GLV-1) | Example 1 | Example 2 |
|---|---|---|---|---|
| mass% N from antioxidant | 0.063 | | 0.063 | 0.035 |
| Soap type | Salicylate | | Salicylate | Salicylate |
| Soap level (mmol) | 6.3 | | 6.3 | 6.7 |

Table 3. Simulated %FEI in the motored 2ZR-FXE rig, calculated based on 0W-20 reference oil.

| Operating point | Oil temp [°C] | Engine speed [1/min] | Benchmark 0W-8 Ca/Mg = 2.7 | Example 1 Ca/Mg = 2.8 | Example 2 Ca/Mg = 5.4 |
|---|---|---|---|---|---|
| **Stage 1** | 64 | 1000 | 1.37 | 1.37 | 1.77 |
| **Stage 2** | 67 | 1300 | 1.86 | 1.69 | 1.89 |
| **Stage 3** | 64 | 1570 | 2.03 | 2.08 | 1.86 |
| **Stage 4** | 47 | 1970 | 1.51 | 2.41 | 1.69 |
| **Stage 5** | 37 | 1600 | 1.58 | 2.77 | 1.90 |
| **Stage 6** | 35 | 1300 | 1.73 | 2.78 | 1.95 |
| **Overall %simulated FEI** | | | 1.67 | 2.12 | 1.85 |

As can be seen in Table 3 and Figure 4, Example 2 performed slightly worse than Example 1 as expected from the use of higher dispersant treat rate (3.1 *vs.* 2.8%) and slightly higher KV40. The difference in performance is particularly apparent, as expected, in the lower temperature and higher speed regions (mixed lubrication regime). However, it is surprising that Example 2 performed better than Example 1 in stages 1 and 2 which operate at the lowest speed and highest temperature out of the six stages.

Thus, when seeking additive technology that excels in Stage 1 (oil temperature = 64 ◦C; engine speed = 1000 $min^{-1}$) and Stage 2 (oil temperature = 67 ◦C; engine speed = 1300 $min^{-1}$), Example 2 having salicylate detergents at Ca/Mg ratios of about 5.4 appears advantageous.

**Examples 3-17.** Example oils 3-17 were prepared and tested for Simulated % FEI (fuel economy improvement) as described above. Toyota 0W-8 GLV-1 was used as the reference oil. The data are reported in Tables 4-9 and Figure 5.

From Table 6, Example 3 with mixed salicylate detergent at Ca/Mg of 5.4 outperformed Examples 4-6 (mixed sulfonate candidates) in stages 1 and 2 (higher temperature and low speed operation) and in the overall %FEI versus 0W-8 reference oil despite having similar KV40. This is consistent with previous observation (Example 1 versus Example 2) and supports the finding that the types of additives impact fuel economy performance even when the same level of KV40 is met (contrary to the general teachings in Research on Ultra-High Viscosity Index Engine Oil Part 1-'Flat Viscosity' Concept and Contribution to Carbon Neutrality" Yamamori, K. et al. SAE Technical Paper 2022-01-0525, 2022). Similarly, examples with mixed salicylate detergents at Ca/Mg ratio of 5.4, Examples 11 and 12) outperformed the mixed sulfonate candidates in stages 1 and 2 (Examples 9 and 10) despite similar KV40 values.

**Impact of Dispersants.** As can be seen from Table 6, Examples 9 to 12, EC-capped 1300 Mn dispersant performed better than Examples 7 to 8 with the uncapped precursor in Stages 1 and 2. This indicates capped dispersant reduces dispersant-ZDDP interaction, theoretically freeing ZDDP to increase the formation of $MoS_2$, which leads to better frictional performance in the more boundary conditions (higher temperature and low speed operations). Example 12 (combination of capped low viscosity dispersant, mixed salicylate detergents at Ca/Mg ratio of 5.4, and secondary ZDDP) shows high simulated %FEI, 0.48% versus the benchmark Toyota 0W-8 GLV-1 reference oil.

**Impact of comb PMA candidates.** In Examples 13 and 14 to 16, inventive comb copolymer PMA's (VM-3, VM-4 VM-5, and VM-16) were compared against commercial comb PMA VMs (VM-1 and VM-2). As can be seen from Table 9, VM-3, VM-4 VM-5, and VM-16 PMA gave rise to much better fuel economy performance than commercial comb PMA VMs (VM-1 and VM-2) when formulating to the same viscosity grade and NOACK limit using additive technology and base oil type. This is surprising given the fact that all formulations achieve the same level of KV40.

Table 4

| | Ex 3. capped 2300 PIBSA / salicylat e / sec-ZDDP | Ex 4. capped 2300 PIBSA / sulfonat e / sec-ZDDP | Ex 5. uncappe d HMW / sulfonat e / pri-ZDDP | Ex 6. uncappe d HMW / sulfonat e / sec-ZDDP | Ex 7. uncapped LVD / sulfonate / pri-ZDDP | Ex 8. uncapped LVD / sulfonate / sec-ZDDP | Ex 9. capped 1300 PIBSA / sulfonate / pri-ZDDP | Ex 10. capped 1300 PIBSA / sulfonat e / sec-ZDDP | Ex 11. capped 1300 PIBSA / salicylat e / pri-ZDDP | Ex 12. capped 1300 PIBSA / salicylate / sec-ZDDP Ex 12.. |
|---|---|---|---|---|---|---|---|---|---|---|
| Component | Ex. 3 | Ex. 4 | Ex. 5 | Ex. 6 | Ex. 7 | Ex. 8 | Ex. 9 | Ex. 10 | Ex. 11 | Ex. 12 |
| EC PIBSA-PAM, 2300 Mn | 3.100 | 3.100 | | | | | | | | |
| PIB-MALA | | | 2.600 | 2.600 | | | | | | |
| PIBSA-PAM, 1300 Mn | | | | | 2.350 | 2.350 | | | | |
| EC PIBSA-PAM, 1300 Mn | | | | | | | 2.350 | 2.350 | 2.000 | 2.000 |
| Mg Salicylate 340 TBN | 0.400 | | | | | | | | 0.400 | 0.400 |
| Ca Salicylate 350 TBN | 1.300 | | | | | | | | 1.300 | 1.300 |
| Ca sulfonate TBN 300 | | 1.050 | 1.050 | 1.050 | 1.050 | 1.050 | 1.050 | 1.050 | | |
| Mg sulfo-nate deter-gent 400 TBN | | 0.400 | *0.500* | 0.500 | 0.500 | 0.500 | 0.400 | 0.400 | | |
| ZDDP-1 | | | 1.020 | | 1.020 | | 1.020 | | 1.020 | |
| ZDDP-2 | 1.050 | 1.050 | | 1.050 | | 1.050 | | 1.050 | | 1.050 |

(continued)

| | | | | | | | | | | |
|---|---|---|---|---|---|---|---|---|---|---|
| MoDTC Trimer | | | | | | | | | | |
| DPA antioxidant | 1.000 | 1.000 | 1.000 | 1.000 | 1.000 | 1.000 | 1.000 | 1.000 | 1.000 | 1.000 |
| Phenol antioxidant | 0.500 | 0.500 | 0.500 | 0.500 | 0.500 | 0.500 | 0.500 | 0.500 | 0.500 | 0.500 |
| corrosion inhibitor | 0.010 | 0.010 | 0.010 | 0.010 | 0.010 | 0.010 | 0.010 | 0.010 | 0.010 | 0.010 |
| PIBSA | 0.200 | 0.200 | 0.200 | 0.200 | 0.200 | 0.200 | 0.200 | 0.200 | 0.200 | 0.200 |
| Anti-foamant | 0.003 | 0.003 | 0.003 | 0.003 | 0.003 | 0.003 | 0.003 | 0.003 | 0.003 | 0.003 |
| diluent | 0.987 | 1.287 | 0.667 | 0.667 | 0.667 | 0.667 | 0.537 | 0.537 | 0.987 | 0.987 |
| TOTAL | 8.600 | 8.600 | 7.550 | 7.580 | 7.300 | 7.330 | 7.070 | 7.100 | 7.470 | 7.500 |
| PPD | 0.050 | 0.050 | 0.050 | 0.050 | 0.050 | 0.050 | 0.050 | 0.050 | 0.010 | 0.010 |
| MoDTC Dimer | 0.500 | 0.500 | 0.500 | 0.500 | 0.500 | 0.500 | 0.500 | 0.500 | 0.500 | 0.500 |
| VM-1 | 8.000 | 8.000 | 9.100 | 9.100 | 9.800 | 9.800 | 9.250 | 9.250 | 9.500 | 9.500 |
| VM-2 | 0.250 | 0.250 | 0.250 | 0.250 | 0.250 | 0.250 | 0.250 | 0.250 | 0.250 | 0.250 |
| Group III oil, 3 cSt | 36.000 | 36.000 | 36.000 | 36.000 | 36.000 | 36.000 | 36.000 | 36.000 | 36.000 | 36.000 |
| Group III oil, 4 cSt | 46.650 | 46.600 | 46.550 | 46.520 | 46.100 | 46.070 | 46.880 | 46.850 | 46.230 | 46.200 |
| **Total** | 100.000 | 100.000 | 100.000 | 100.000 | 100.000 | 100.000 | 100.000 | 100.000 | 100.000 | 100.000 |

Table 5

| Property/Example | Ex. 3 | Ex. 4 | Ex. e 5 | Ex. 6 | Ex. 7 | Ex. 8 | Ex. 9 | Ex. 10 | Ex. 11 | Ex. 12 |
|---|---|---|---|---|---|---|---|---|---|---|
| SAE Viscosity | 0W-16 | 0W-16 | 0W-16 | 0W-16 | 0W-16 | 0W-16 | 0W-16 | 0W-16 | 0W-16 | 0W-16 |
| HTHS150 (cP) | 2.25 | 2.34 | 2.37 | 2.35 | 2.41 | 2.39 | 2.26 | 2.26 | 2.38 | 2.28 |
| HTHS 100 (cP) | 4.28 | 4.26 | 4.39 | 4.33 | 4.37 | 4.33 | 4.16 | 4.14 | 0.00 | 0.00 |
| Kv100 (cSt) | 6.12 | 6.05 | 6.30 | 6.29 | 6.32 | 6.32 | 6.07 | 6.04 | 6.20 | 6.09 |
| Kv40 (cSt) | 23.13 | 23.05 | 23.27 | 23.15 | 22.93 | 22.83 | 22.05 | 21.87 | 22.17 | 21.78 |
| B ppm | 0 | 0 | 0 | 0 | 0 | 0 | 0 | 0 | 0 | 0 |
| Ca mass % | 0.163 | 0.122 | 0.122 | 0.122 | 0.122 | 0.122 | 0.122 | 0.122 | 0.163 | 0.163 |
| Mg mass % | 0.030 | 0.037 | 0.046 | 0.046 | 0.046 | 0.046 | 0.037 | 0.037 | 0.030 | 0.030 |
| Mo ppm | 500 | 500 | 500 | 500 | 500 | 500 | 500 | 500 | 500 | 500 |
| N mass % | 0.077 | 0.079 | 0.078 | 0.078 | 0.097 | 0.097 | 0.092 | 0.092 | 0.085 | 0.085 |
| P mass % | 0.071 | 0.071 | 0.071 | 0.071 | 0.071 | 0.071 | 0.071 | 0.071 | 0.071 | 0.071 |
| S mass % | 0.229 | 0.233 | 0.246 | 0.248 | 0.244 | 0.246 | 0.242 | 0.243 | 0.226 | 0.228 |
| Si ppm | 9.262 | 9.007 | 9.122 | 9.122 | 9.122 | 9.122 | 8.987 | 8.987 | 9.237 | 9.237 |
| Zn mass % | 0.079 | 0.079 | 0.079 | 0.079 | 0.079 | 0.079 | 0.079 | 0.079 | 0.079 | 0.079 |
| mass% N from antioxidant | 0.035 | 0.035 | 0.035 | 0.035 | 0.035 | 0.035 | 0.035 | 0.035 | 0.035 | 0.035 |
| mass %N from dispersant | 0.033 | 0.033 | 0.032 | 0.032 | 0.050 | 0.050 | 0.047 | 0.047 | 0.040 | 0.040 |
| Ca/Mg ratio | 5.4 | 3.3 | 2.7 | 2.7 | 2.7 | 2.7 | 3.3 | 3.3 | 5.4 | 5.4 |
| Soap type | Salicylate | Sulfonate | Sulfonate | Sulfonate | Sulfonate | Sulfonate | Sulfonate | Sulfonate | Salicylate | Salicylate |
| Soap level (mmol) | 0.495 | 0.409 | 0.435 | 0.435 | 0.435 | 0.435 | 0.409 | 0.409 | 0.495 | 0.495 |

Table 6. Simulated %FEI in the motored 2ZR-FXE rig, calculated against Toyota 0W-8 GLV-1 reference oil.

| **Stage/Ex.** | Ex 3. | Ex 4. | Ex 5. | Ex 6. | Ex 7. | Ex 8. | Ex 9. | Ex 10. | Ex 11. | Ex 12. |
|---|---|---|---|---|---|---|---|---|---|---|
| **Stage 1** | -0.092 | -1.195 | -1.710 | -1.847 | -2.431 | -2.808 | **-1.199** | **-1.747** | **-0.548** | **-0.158** |
| **Stage 2** | -0.310 | -0.915 | -1.288 | -1.369 | -1.771 | -1.903 | **-0.760** | **-1.193** | **-0.669** | **-0.279** |
| **Stage 3** | -0.420 | -0.631 | -0.890 | -0.843 | -1.180 | -1.064 | -0.323 | -0.562 | -0.530 | -0.103 |
| **Stage 4** | 0.107 | 0.427 | 0.183 | 0.017 | 0.111 | 0.349 | 0.673 | 0.749 | 0.259 | 0.628 |
| **Stage 5** | 0.418 | 0.769 | 0.499 | 0.345 | 0.432 | 0.703 | 1.027 | 1.171 | 0.643 | 1.134 |
| **Stage 6** | 0.531 | 0.780 | 0.492 | 0.387 | 0.296 | 0.531 | 1.127 | 1.251 | 0.739 | 1.258 |
| **Overall** | 0.07 | 0.00 | -0.31 | -0.42 | -0.57 | -0.48 | 0.22 | 0.12 | 0.05 | 0.48 |

Table 7

| Component | Example 13 | Example 14 | Example 15 | Example 16 |
|---|---|---|---|---|
| EC PIBSA-PAM, 2300 Mn | 3.100 | 3.100 | 3.100 | 3.100 |
| Mg Salicylate 340 TBN | 0.400 | 0.400 | 0.400 | 0.400 |
| Ca Salicylate 350 TBN | 1.300 | 1.300 | 1.300 | 1.300 |
| ZDDP-2 | 1.050 | 1.050 | 1.050 | 1.050 |
| DPA antioxidant | 1.000 | 1.000 | 1.000 | 1.000 |
| Phenol antioxidant | 0.500 | 0.500 | 0.500 | 0.500 |
| corrosion inhibitor | 0.010 | 0.010 | 0.010 | 0.010 |
| PIBSA | 0.200 | 0.200 | 0.200 | 0.200 |
| Anti-foamant | 0.003 | 0.003 | 0.003 | 0.003 |
| diluent | 0.987 | 0.987 | 0.987 | 0.987 |
| | 8.600 | 8.600 | 8.600 | 8.600 |
| PPD | 0.050 | 0.050 | 0.050 | 0.050 |
| MoDTC Dimer | 0.750 | 0.750 | 0.750 | 0.750 |
| VM-1 | 10.300 | | | |
| VM-2 | 0.400 | | | |
| VM-3 | | 13.750 | | |
| VM-4 | | | 14.000 | |
| VM-5 | | | | 14.500 |
| Group III GTL oil, 3 cSt | 35.000 | 35.000 | 35.000 | 35.000 |
| Group III GTL oil, 4 cSt | 44.950 | 41.900 | 41.650 | 41.150 |
| **Total** | 100.000 | 100.000 | 100.000 | 100.000 |

Table 8.

| | **Example 13** | **Example 14** | **Example 15** | **Example 16** |
|---|---|---|---|---|
| **HTHS150 (cP)** | 2.34 | 2.31 | 2.37 | 2.27 |
| **HTHS100 (cP)** | 4.03 | 3.88 | 3.96 | 3.87 |
| **Kv100/D445 (cSt)** | 6.22 | 6.52 | 6.33 | 6.05 |
| **Kv40/D445 (cSt)** | 22.26 | 21.94 | 21.87 | 21.96 |
| **B ppm** | 0 | 0 | 0 | 0 |
| **Ca %** | 0.163 | 0.163 | 0.163 | 0.163 |

(continued)

| | Example 13 | Example 14 | Example 15 | Example 16 |
|---|---|---|---|---|
| **Mg %** | 0.030 | 0.030 | 0.030 | 0.030 |
| **Mo ppm** | 750 | 750 | 750 | 750 |
| **N %** | 0.081 | 0.081 | 0.081 | 0.081 |
| **P %** | 0.071 | 0.071 | 0.071 | 0.071 |
| **S %** | 0.261 | 0.261 | 0.261 | 0.261 |
| **Si ppm** | 10.942 | 10.942 | 10.942 | 10.942 |
| **Zn %** | 0.079 | 0.079 | 0.079 | 0.079 |
| **mass% N from antioxidant** | 0.035 | 0.035 | 0.035 | 0.035 |
| **mass %N from dispersant** | 0.033 | 0.033 | 0.033 | 0.033 |
| **Ca/Mg ratio** | 5.4 | 5.4 | 5.4 | 5.4 |
| **Soap type** | Salicylate | Salicylate | Salicylate | Salicylate |
| **Soap level (mmol)** | 0.495 | 0.495 | 0.495 | 0.495 |

Table 9. Simulated %FEI in the motored 2ZR-FXE rig, calculated against Toyota 0W-8 GLV-1 reference oil.

| Stage/Example | Example 13 | Example 14 | Example 15 | Example 16 |
|---|---|---|---|---|
| **Stage 1** | 0.66 | 0.61 | 0.92 | 1.31 |
| **Stage 2** | 0.43 | 0.65 | 0.87 | 0.96 |
| **Stage 3** | 0.45 | 0.78 | 0.92 | 0.87 |
| **Stage 4** | 1.06 | 1.47 | 1.60 | 1.55 |
| **Stage 5** | 1.67 | 1.94 | 2.18 | 2.01 |
| **Stage 6** | 1.88 | 2.12 | 2.46 | 2.35 |
| **Overall** | 1.1 | 1.3 | 1.5 | 1.5 |

As is apparent from the foregoing general description and the specific embodiments, while forms of the invention have been illustrated and described, various modifications can be made without departing from the scope of the invention. Accordingly, it is not intended that the invention be limited thereby. The term "comprising" is considered synonymous with the term "including." Likewise, whenever a composition, an element, or a group of elements is preceded with the transitional phrase "comprising," it is understood that we also contemplate the same composition or group of elements with transitional phrases "consisting essentially of," "consisting of," "selected from the group of consisting of," or "is" preceding the recitation of the composition, element, or elements and vice versa.

## Claims

**1.** A lubricating oil composition comprising or resulting from the admixing of:

(i) at least 50 mass%, based upon the weight of the lubricating oil composition, of base oil,
(ii) at least one capped dispersant derived from a polymer having number average molecular weight (Mn) of less than 1600 g/mol,
(iii) at least one magnesium containing detergent,
(iv) at least one calcium containing detergent,
(v) at least one comb copolymer viscosity modifier comprising the reaction product of at least the following monomers:

(a) a hydrogenated polybutadiene-based (alk)acrylate ester macromonomer;
(b) a $C_3$-$C_8$ alkyl (alk)acrylate ester monomer;

(c) a $C_{12}$-$C_{24}$ alkyl (alk)acrylate ester monomer; and
(d) a $C_1$-$C_{18}$ alkyl-endcapped or $C_6$-$C_{20}$ aryl-, aralkyl-, or alkaryl- endcapped $C_2$-$C_6$ oxyalkyl or $C_2$-$C_6$ oligo(alkylene glycol)-based (alk)acrylate ester monomer and/or hydroxyalkyl or H-endcapped oligo(alkylene glycol)-based (alk)acrylate monomer having the following structure (II):

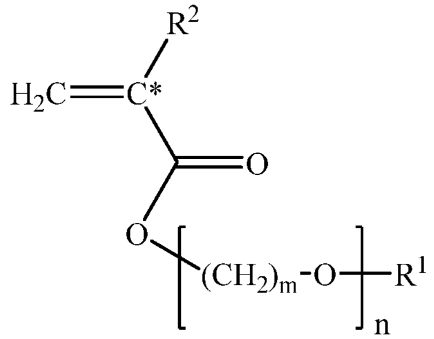
(II)

in which $R^2$ represents hydrogen or $C_1$-$C_2$ alkyl, m is from 2 to 6, such that $-(CH_2)_m-$ represents a linear, branched, and/or cyclic alkyl group between oxygens, n is from 1 to 10, and $R^1$ represents H, a $C_1$-$C_{18}$ linear, branched, and/or cyclic alkyl endcap or a $C_6$-$C_{20}$ aryl, aralkyl, or alkaryl endcap,
wherein the combination of (c) and (d) collectively comprise more than 20.0 wt% of repeat units of the comb copolymer viscosity modifier, based upon the weight of all the repeat units in the copolymer.

2. The lubricating oil composition of claim 1, wherein the capped dispersant (ii) is represented by the following formula:

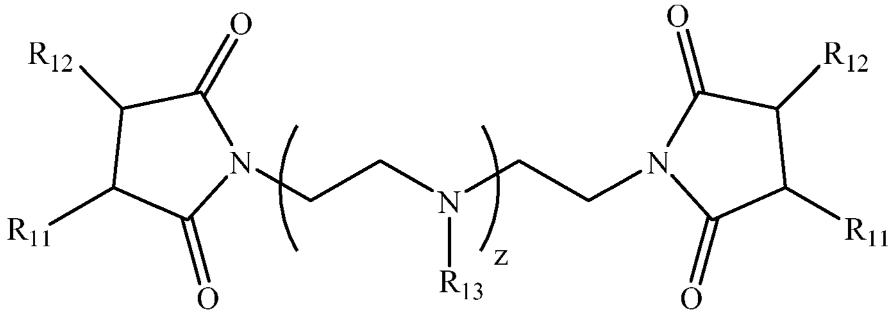

wherein each $R_{11}$ and $R_{12}$ is individually hydrogen or a hydrocarbyl group, provided that $R_{11}$ and $R_{12}$ connected to the same succinimide ring are not both hydrogen; z is an integer from 0 to 10; and each $R_{13}$ is individually an acetyl group, or wherein two proximate $R_{13}$ groups connected to different nitrogen atoms may connect together.

3. The lubricating oil composition of claim 2, wherein two proximate R13 groups in the capped dispersant (ii) connect together using an ethylene bridge to form a piperazinyl group.

4. The lubricating oil composition of claim 3, wherein z is an integer from 1 to 8.

5. The lubricating oil composition of any one of the preceding claims, wherein the capped dispersant is an ethylene carbonate capped dispersant derived from polyisobutylene having an Mn of from 800 to less than 1600 g/mol.

6. The lubricating oil composition of claim 5, wherein the ethylene carbonate capped dispersant is derived from polyisobutylene having an Mn of 1200 to 1400 g/mol.

7. The lubricating oil composition of any one of claims 1 to 4, wherein the capped dispersant is an ethylene carbonate capped polyisobutylene succinimide derived from polyisobutylene having a number average molecular weight of 1200 to 1400 g/mol and polyamine.

8. The lubricating oil composition of any one of the preceding claims, wherein the comb copolymer viscosity modifier (v) is a polymethacrylate comb copolymer viscosity modifier made by polymerization of at least the following monomers:

(a) a hydrogenated polybutadiene-based (alk)acrylate ester macromonomer;
(b) a $C_3$-$C_8$ alkyl (alk)acrylate ester monomer;
(c) a $C_{12}$-$C_{24}$ alkyl (alk)acrylate ester monomer; and
(d) a $C_6$-$C_{20}$ aryl-, aralkyl-, or alkaryl- endcapped $C_2$-$C_6$ oxyalkyl or $C_2$-$C_6$ oligo(alkylene glycol)-based (alk) acrylate ester monomer having the following structure (II):

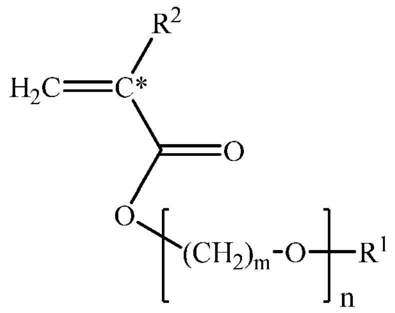
(II)

in which $R^2$ represents hydrogen or $C_1$-$C_2$ alkyl, m is from 2 to 6, such that $-(CH_2)_m-$ represents a linear, branched, and/or cyclic alkyl group between oxygens, n is from 1 to 10, and $R^1$ represents a $C_6$-$C_{20}$ aryl, aralkyl, or alkaryl endcap,

wherein:

1) the (c) $C_{12}$-$C_{24}$ alkyl (alk)acrylate ester monomer repeat units are present at 16 to less than 21 wt%, based upon the weight of all the repeat units in the copolymer,
2) the (d) $C_6$-$C_{20}$ aryl-, aralkyl-, or alkaryl- endcapped $C_2$-$C_6$ oxyalkyl or $C_2$-$C_6$ oligo(alkylene glycol)-based (alk) acrylate ester monomer repeat units are present at 3 to 7 wt%, based upon the weight of all the repeat units in the copolymer, and
3) the combination of (c) and (d) collectively comprise more than 20.0 wt% of repeat units of the comb copolymer viscosity modifier, based upon the weight of all the repeat units in the copolymer.

**9.** The lubricating oil composition of claim 8 wherein the polymethacrylate comb copolymer viscosity modifier is made by polymerization of at least the following monomers:

(a) a hydrogenated polybutadiene-based (alk)acrylate ester macromonomer;
(b) butyl methacrylate;
(c) lauryl methacrylate; and
(d) a $C_6$-$C_{20}$ aryl-, aralkyl-, or alkaryl- endcapped $C_2$-$C_6$ oxyalkyl or $C_2$-$C_6$ oligo(alkylene glycol)-based (alk) acrylate ester monomer having the following structure (II):

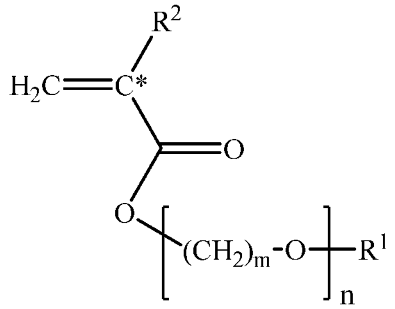
(II)

in which $R^2$ represents hydrogen or $C_1$-$C_2$ alkyl, m is from 2 to 6, such that $-(CH_2)_m-$ represents a linear, branched, and/or cyclic alkyl group between oxygens, n is from 1 to 10, and $R^1$ represents a $C_6$-$C_{20}$ aryl, aralkyl, or alkaryl endcap,

wherein:

1) the (c) lauryl methacrylate monomer repeat units are present at 16.5 to less than 20 wt%, based upon the weight of all the repeat units in the copolymer,
2) the (d) $C_6$-$C_{20}$ aryl-, aralkyl-, or alkaryl- endcapped $C_2$-$C_6$ oxyalkyl or $C_2$-$C_6$ oligo(alkylene glycol)-based (alk) acrylate ester monomer repeat units are present at 3 to 7 wt%, based upon the weight of all the repeat units in the copolymer, and
3) the combination of (c) and (d) collectively comprise more than 20.0 wt% of repeat units of the comb copolymer viscosity modifier, based upon the weight of all the repeat units in the copolymer.

**10.** The lubricating oil composition of any one of claims 2 to 9, wherein the group III base oil has a KV140 of 2 cSt, a KV20 of 44 cSt, and a KV70 of 19 cSt (ASTM D445).

**11.** The lubricating oil composition of any one of the preceding claims, further comprising a metal alkylthiophosphate wherein the alkyl group is derived from at least one secondary alcohol.

**12.** The lubricating oil composition of claim 11, wherein the alkyl group of the metal alkylthiophosphate is derived from at least one primary alcohol and at least one secondary alcohol.

**13.** The lubricating oil composition of claim 11, wherein the metal alkylthiophosphate comprises one or more zinc dialkyl dithio phosphates, wherein the alkyl groups are at least partially derived from secondary alcohols or mixtures of primary and secondary alcohols.

**14.** The lubricating oil composition of claim 11, wherein the metal alkylthiophosphate is represented by the formula $Zn[SP(S)(OR_1)(OR_2)]_2$ wherein $R_1$ and $R_2$ are each, individually, $C_1$-$C_{18}$ alkyl groups.

**15.** The lubricating oil composition of claim 14, wherein one, two, three, and/or four of $R_1$ and $R_2$ are secondary $C_2$-$C_{12}$ alkyl groups.

**16.** The lubricating oil composition of any one of the preceding claims, wherein the lubricating oil composition has:

a) a volatility, as measured by the Noack test (ASTM D5800, procedure B), of less than or equal to 30 mass %, based on the total mass of the lubricating composition; and/or
b) a ratio of calcium from the detergents to magnesium from the detergents of 10:1 to 2:1; and/or
c) a total soap content of less than 30 mmol.

**17.** The lubricating composition of any one of the preceding claims, wherein the lubricating oil composition further comprises one or more of the following components:

(D) one or more friction modifiers;
(E) one or more antioxidants;
(F) one or more pour point depressants;
(G) one or more anti-foaming agents;
(H) one or more viscosity modifiers other than the comb copolymer of (v);
(I) one or more dispersants;
(J) one or more inhibitors and/or antirust agents; and/or
(K) one or more anti-wear agents.

**18.** The lubricating composition of any one of the preceding claims, wherein:

(i) the base oil is present at 50 to 99 mass % based upon the weight of the lubricating oil composition; and
(ii) the capped dispersant is present at from 0.1 to 10 wt. %, based on total weight of the lubricating oil composition; and
(iii) and (iv) the detergents are present at from 0.1 to 20 wt. %, based on total weight of the lubricating oil composition; and
(v) the comb copolymer viscosity modifier is present at from 0.1 to 10 wt. %, based on total weight of the lubricating oil composition.

**19.** The lubricating composition of claim 18, wherein the lubricating oil composition further comprises one or more of the following components:

(D) one or more friction modifiers present at from 0.01 to 5 wt. %, based on total weight of the lubricating composition;
(E) one or more antioxidants present at from 0.01 to 5 wt. %, based on total weight of the lubricating composition;
(F) one or more pour point depressants present at from 0.01 to 5 wt. %, based on total weight of the lubricating composition;
(G) one or more anti-foaming agents present at from 0.001 to 5 wt. %, based on total weight of the lubricating composition;
(H) one or more viscosity modifiers other than the comb copolymer viscosity modifier (v) present at from 0.001 to 6 wt. %, based on total weight of the lubricating composition;
(I) one or more dispersants present at from 0.01 to 20 wt. %, based on total weight of the lubricating composition;
(J) one or more inhibitors and/or antirust agents are present at from 0.01 to 5 wt. %, based on total weight of the lubricating composition.

**20.** The lubricating oil composition of any one of the preceding claims, wherein the lubricating oil composition further comprises a polyisobutylene succinimide dispersant composition derived from a first polyamine and a first polyisobutylene having a number average molecular weight of 1200 to 1400 g/mol, said polyisobutylene succinimide dispersant composition having a viscosity of 0.01 to 0.03 Pa.s at a shear rate of 100 $sec^{-1}$, and viscosity of 0.15 Pa.s or less at a shear rate of 10 $sec^{-1}$ as measured using the Haake Carbon Black Test 9 wt% carbon black, 1 to 10 $s^{-1}$ and 10 to 1000 $s^{-1}$ shear rate ranges.

**21.** The lubricating composition according to any one of the preceding claims, wherein the lubricating composition is a passenger car motor oil, a light duty diesel engine oil, or a heavy-duty diesel engine oil.

**22.** A method of lubricating an internal combustion engine during operation of the engine comprising:

(i) providing to a crankcase of the internal combustion engine the lubricating composition as claimed in any one of claims 1 to 21;
(ii) providing a hydrocarbon, renewable and/or alternative fuel in the internal combustion engine; and
(iii) combusting the fuel in the internal combustion engine.

**23.** The method of claim 22, wherein the internal combustion engine is an automotive internal combustion engine.

**24.** The method of claim 23, wherein the internal combustion engine is a gasoline or diesel automotive internal combustion engine.

**25.** A concentrate composition comprising:

(i) less than 50 mass%, based upon the weight of the composition, of base oil,
(ii) at least one capped dispersant, having number average molecular weight (Mn) of less than 1600 g/mol, ;
(iii and iv) at least one magnesium containing detergent and at least one calcium containing detergent where the calcium from detergent to magnesium from detergent ratio is 10:1 to 2:1, and
(v) at least one comb copolymer viscosity modifier comprising the reaction product of at least the following monomers:

(a) a hydrogenated polybutadiene-based (alk)acrylate ester macromonomer;
(b) a $C_3$-$C_8$ alkyl (alk)acrylate ester monomer;
(c) a $C_{12}$-$C_{24}$ alkyl (alk)acrylate ester monomer;
(d) a $C_1$-$C_{18}$ alkyl-endcapped or $C_6$-$C_{20}$ aryl-, aralkyl-, or alkaryl- endcapped $C_2$-$C_6$ oxyalkyl or $C_2$-$C_6$ oligo(alkylene glycol)-based (alk)acrylate ester monomer and/or hydroxyalkyl or H-endcapped oligo(alkylene glycol)-based (alk)acrylate monomer having the following structure (II):

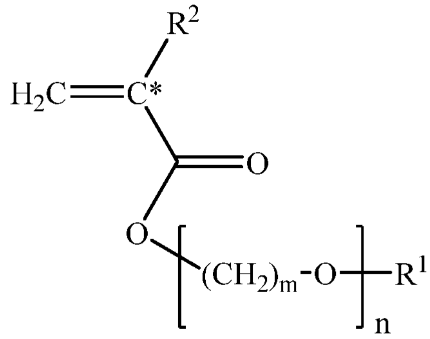

(II)

in which $R^2$ represents hydrogen or $C_1$-$C_2$ alkyl, m is from 2 to 6, such that -$(CH_2)_m$- represents a linear, branched, and/or cyclic alkyl group between oxygens, n is from 1 to 10, and $R^1$ represents H, a $C_1$-$C_{18}$ linear, branched, and/or cyclic alkyl endcap or a $C_6$-$C_{20}$ aryl, aralkyl, or alkaryl endcap,

wherein the combination of (c) and (d) collectively comprise more than 20.0 wt% of repeat units of the comb copolymer viscosity modifier, based upon the weight of all the repeat units in the copolymer.

**26.** A concentrate as claimed in claim 25, wherein the concentrate further includes one or more of the following components:

(vi) a metal alkylthiophosphate where the alkyl group is derived from at least one secondary alcohol;
(vii) a molybendum containing compound; and
(viii) antioxidant.

**27.** The use of the lubricating oil composition of any one of claims 1 to 21 to provide increased fuel economy of more than a 10 % difference infuel economy improvement as compared to the Toyota 0W-8 GLV-1 lubricating oil, comprising introducing the lubricating oil composition of any of claims 1 to 21 into an internal combustion engine, and operating said engine.

**28.** The use of the lubricating oil composition of any of claims 1 to 21 for providing flat oil viscosity properties to a 0W-20, 0W-16, 0W-12, 0W-8 SAE viscosity formulation of the lubricating oil composition.

**29.** Use, in the lubrication of an internal combustion engine, of a capped dispersant (ii), as defined in any one of claims 1 to 21, and a comb copolymer viscosity modifier (v), as defined in any one of claims 1 to 21, as a combination of additives in a lubricating oil composition to provide improved fuel economy during operation of the engine, wherein the lubricating oil composition comprises at least 50 mass %, based upon the weight of the lubricating oil composition, of a base oil (i), at least one magnesium containing detergent (iii), and at least one calcium containing detergent (iv).

## Patentansprüche

**1.** Schmierölzusammensetzung, die umfasst:

(i) mindestens 50 Massen%, bezogen auf das Gewicht der Schmierölzusammensetzung, von Basisöl,
(ii) mindestens ein mit Kappungsgruppe versehendes Dispergiermittel, das abgeleitet ist von einem Polymer, das ein durchschnittliches Molekulargewicht (Zahlenmittel, (Mn)) von weniger als 1600 g/mol aufweist,
(iii) mindestens ein magnesiumhaltiges Detergens,
(iv) mindestens ein calciumhaltiges Detergens,
(v) mindestens einen Kammcopolymer-Viskositätsmodifizierer, der das Reaktionsprodukt mindestens der folgenden Monomere umfasst:

(a) hydriertes Polybutadien-basiertes (Alk)acrylatester-Makromonomer,
(b) $C_3$- bis $C_8$-Alkyl (Alk)acrylatester-Monomer,
(c) $C_{12}$- bis $C_{24}$-Alkyl (Alk)acrylatester-Monomer, und
(d) $C_1$- bis $C_{18}$-Alkyl-Endkappe tragendes oder $C_6$- bis $C_{20}$-Aryl-, Aralkyl- oder Alkaryl-Endkappe tragendes

$C_2$- bis $C_6$-Oxyalkyl- oder $C_2$- bis $C_6$-Oligo(alkylenglycol)-basiertes (Alk)acrylatester-Monomer und/oder Hydroxyalkyl- oder H-Endkappe tragendes Oligo(alkylenglycol)-basiertes (Alk)acrylat-Monomer, das die folgende Struktur (II) aufweist:

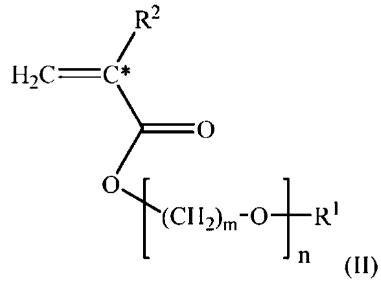

(II)

in der $R^2$ für Wasserstoff oder $C_1$- bis $C_2$-Alkyl steht, m 2 bis 6 ist, so dass $-(CH_2)_m-$ für eine lineare, verzweigte, und/oder cyclische Alkylgruppe zwischen Sauerstoffatomen steht, n 1 bis 10 ist, und $R^1$ für H, eine $C_1$- bis $C_{18}$- lineare, verzweigte, und/oder cyclische Alkyl-Endkappe oder eine $C_6$- bis $C_{20}$-Aryl-, Aralkyl- oder Alkaryl-Endkappe steht,

wobei die Kombination aus (c) und (d) insgesamt mehr als 20,0 Gew.-% der Wiederholungseinheiten des Kammcopolymer-Viskositätsmodifizierer umfasst, bezogen auf das Gewicht aller Wiederholungseinheiten in dem Copolymer,

oder durch Mischen davon resultiert.

2. Schmierölzusammensetzung nach Anspruch 1, bei der das mit Kappungsgruppe versehende Dispergiermittel (ii) durch die folgende Formel wiedergegeben wird:

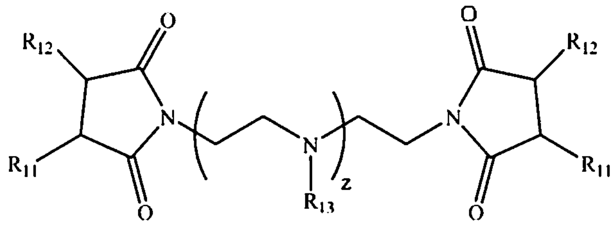

in der jedes $R_{11}$ und $R_{12}$ individuell Wasserstoff oder eine Kohlenwasserstoffgruppe ist, mit der Maßgabe, dass $R_{11}$ und $R_{12}$, die an denselben Succinimidring gebunden sind, nicht beide Wasserstoff sind, z eine ganze Zahl von 0 bis 10 ist, und jedes $R_{13}$ individuell eine Acetylgruppe ist, oder wobei zwei benachbarte $R_{13}$-Gruppen, die an verschiedene Stickstoffatome gebunden sind, miteinander verbunden sein können.

3. Schmierölzusammensetzung nach Anspruch 2, bei der zwei benachbarte R13-Gruppen in dem mit Kappungsgruppe versehenden Dispergiermittel (ii) über eine Ethylenbrücke miteinander verbunden sind, um eine Piperazinylgruppe zu bilden.

4. Schmierölzusammensetzung nach Anspruch 3, bei der z eine ganze Zahl von 1 bis 8 ist.

5. Schmierölzusammensetzung nach einem der vorstehenden Ansprüche, bei der das mit Kappungsgruppe versehende Dispergiermittel ein mit Ethylencarbonat-Kappungsgruppe versehendes Dispergiermittel ist, das abgeleitet ist von Polyisobutylen, das ein Mn von 800 bis weniger als 1600 g/mol aufweist.

6. Schmierölzusammensetzung nach Anspruch 5, bei der das mit Ethylencarbonat-Kappungsgruppe versehende Dispergiermittel abgeleitet ist von Polyisobutylen, das ein Mn von 1200 bis 1400 g/mol aufweist.

7. Schmierölzusammensetzung nach einem der Ansprüche 1 bis 4, bei der das mit Kappungsgruppe versehende Dispergiermittel ein mit Ethylencarbonat-Kappungsgruppe versehendes Polyisobutylensuccinimid ist, das abgeleitet ist von Polyisobutylen, das ein durchschnittliches Molekulargewicht (Zahlenmittel) von 1200 bis 1400 g/mol aufweist, und Polyamin.

**8.** Schmierölzusammensetzung nach einem der vorstehenden Ansprüche, bei der der Kammcopolymer-Viskositätsmodifizierer (v) ein Polymethacrylat-Kammcopolymer-Viskositätsmodifizierer ist, der durch Polymerisation mindestens der folgenden Monomere hergestellt ist:

(a) hydriertes Polybutadien-basiertes (Alk)acrylatester-Makromonomer,
(b) $C_3$- bis $C_8$-Alkyl (Alk)acrylatester-Monomer,
(c) $C_{12}$- bis $C_{24}$-Alkyl (Alk)acrylatester-Monomer, und
(d) $C_6$- bis $C_{20}$-Aryl-, Aralkyl- oder Alkaryl-Endkappe tragendes $C_2$- bis $C_6$-Oxyalkyl- oder $C_2$- bis $C_6$-Oligo(alkylenglykol)-basiertes (Alk)acrylatester-Monomer, das die folgende Struktur (II) aufweist:

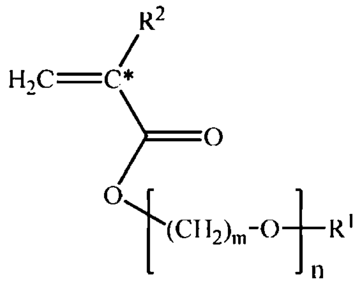
(II)

in der $R^2$ für Wasserstoff oder $C_1$- bis $C_2$-Alkyl steht, m 2 bis 6 ist, so dass $-(CH_2)_m$-für eine lineare, verzweigte und/oder cyclische Alkylgruppe zwischen Sauerstoffatomen steht, n 1 bis 10 ist, und $R^1$ für eine $C_6$- bis $C_{20}$-Aryl-, Aralkyl- oder Alkaryl-Endkappe steht,

wobei:

1) die (c) $C_{12}$- bis $C_{24}$-Alkyl (Alk)acrylatester-Monomer-Wiederholungseinheiten in 16 bis weniger als 21 Gew.-% vorhanden sind, bezogen auf das Gewicht aller Wiederholungseinheiten in dem Copolymer,
2) die (d) $C_6$- bis $C_{20}$-Aryl-, Aralkyl- oder Alkaryl-Endkappe tragenden $C_2$- bis $C_6$-Oxyalkyl- oder $C_2$- bis $C_6$-Oligo(alkylenglykol)-basierten (Alk)acrylatester-Monomer-Wiederholungseinheiten in einer Menge von 3 bis 7 Gew.-% vorhanden sind, bezogen auf das Gewicht aller Wiederholungseinheiten in dem Copolymer, und
3) die Kombination aus (c) und (d) insgesamt mehr als 20,0 Gew.-% der Wiederholungseinheiten des Viskositätsmodifizierers des Kammcopolymers umfasst, bezogen auf das Gewicht aller Wiederholungseinheiten in dem Copolymer.

**9.** Schmierölzusammensetzung nach Anspruch 8, bei der der Polymethacrylat-Kammcopolymer-Viskositätsmodifizierer durch Polymerisation von mindestens den folgenden Monomeren hergestellt ist:

(a) hydriertes Polybutadien-basiertes (Alk)acrylatester-Makromonomer,
(b) Butylmethacrylat
(c) Laurylmethacrylat, und
(d) $C_6$- bis $C_{20}$-Aryl-, Aralkyl- oder Alkaryl-Endkappe tragendes $C_2$- bis $C_6$-Oxyalkyl- oder $C_2$- bis $C_6$-Oligo(alkylenglykol)-basiertes (Alk)acrylatester-Monomer, das die folgende Struktur (II) aufweist:

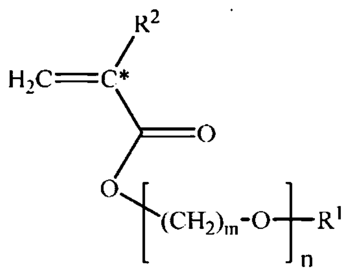
(II)

in der $R^2$ für Wasserstoff oder $C_1$- bis $C_2$-Alkyl steht, m 2 bis 6 ist, so dass $-(CH_2)_m$- für eine lineare, verzweigte und/oder cyclische Alkylgruppe zwischen Sauerstoffato men steht, n 1 bis 10 ist und $R^1$ für eine $C_6$- bis $C_{20}$-Aryl-, Aralkyl- oder Alkaryl-End kappe steht,

wobei:

1) die (c) Laurylmethacrylat-Monomer-Wiederholungseinheiten in einer Menge von 16,5 bis weniger als 20 Gew.-% vorhanden sind, bezogen auf das Gewicht aller Wiederholungseinheiten in dem Copolymer,
2) die (d) $C_6$- bis $C_{20}$-Aryl-, Aralkyl- oder Alkaryl-Endkappe tragenden $C_2$- bis $C_6$-Oxyalkyl- oder $C_2$- bis $C_6$-Oligo(alkylenglycoi)-basierten (Alk)acrylatester-Monomer-Wiederholungseinheiten in einer Menge von 3 bis 7 Gew.-% vorhanden sind, bezogen auf das Gewicht aller Wiederholungseinheiten in dem Copolymer, und
3) die Kombination aus (c) und (d) insgesamt mehr als 20,0 Gew.-% der Wiederholungseinheiten des Viskositätsmodifizierers des Kammcopolymers umfasst, bezogen auf das Gewicht aller Wiederholungseinheiten in dem Copolymer.

**10.** Schmierölzusammensetzung nach einem der Ansprüche 2 bis 9, bei der das Gruppe-III-Basisöl eine KV140 von 2 cSt, eine KV20 von 44 cSt, und eine KV70 von 19 cSt (ASTM D445) aufweist.

**11.** Schmierölzusammensetzung nach einem der vorstehenden Ansprüche, die ferner ein Metallalkylthiophosphat umfasst, wobei die Alkylgruppe von mindestens einem sekundären Alkohol abgeleitet ist.

**12.** Schmierölzusammensetzung nach Anspruch 11, bei der die Alkylgruppe des Metallalkylthiophosphats von mindestens einem primären Alkohol und mindestens einem sekundären Alkohol abgeleitet ist.

**13.** Schmierölzusammensetzung nach Anspruch 11, bei der das Metallalkylthiophosphat ein oder mehrere Zinkdialkyldithiophosphate umfasst, wobei die Alkylgruppen zumindest teilweise von sekundären Alkoholen oder Gemischen aus primären und sekundären Alkoholen abgeleitet sind.

**14.** Schmierölzusammensetzung nach Anspruch 11, bei der das Metallalkylthiophosphat durch die Formel $Zn[SP(S)(OR_1)(OR_2)]_2$ wiedergegeben wird, wobei $R_1$ und $R_2$ jeweils individuell $C_1$- bis $C_{18}$-Alkylgruppen sind.

**15.** Schmierölzusammensetzung nach Anspruch 14, bei der ein, zwei, drei, und/oder vier von $R_1$ und $R_2$ sekundäre $C_2$- bis $C_{12}$-Alkylgruppen sind.

**16.** Schmierölzusammensetzung nach einem der vorstehenden Ansprüche, bei der die Schmierölzusammensetzung:

a) eine Flüchtigkeit, wie mittels des Noack-Tests (ASTM D5800, Verfahren B) gemessen, von weniger als oder gleich 30 Massen%, bezogen auf die Gesamtmasse der Schmiermittelzusammensetzung, und/oder
b) ein Verhältnis von Calcium aus den Detergentien zu Magnesium aus den Detergentien von 10:1 bis 2:1, und/oder
c) einen Gesamtseifengehalt von weniger als 30 mmol

aufweist.

**17.** Schmiermittelzusammensetzung nach einem der vorstehenden Ansprüche, bei der die Schmierölzusammensetzung ferner eine oder mehrere der folgenden Komponenten umfasst:

(D) einen oder mehrere Reibungsmodifizierer,
(E) ein oder mehrere Antioxidationsmittel,
(F) ein oder mehrere Pourpoint-Senkungsmittel,
(G) ein oder mehrere Antischaummittel,
(H) ein oder mehrere Viskositätsmodifizierer, die nicht das Kammcopolymer aus (v) sind,
(I) ein oder mehrere Dispergiermittel,
(J) ein oder mehrere Inhibitoren und/oder Rostschutzmittel, und/oder
(K) ein oder mehrere Antiverschleißmittel.

**18.** Schmiermittelzusammensetzung nach einem der vorstehenden Ansprüche, bei der:

(i) das Basisöl in einer Menge von 50 bis 99 Massen% vorhanden ist, bezogen auf das Gewicht der Schmierölzusammensetzung, und
(ii) das mit Kappungsgruppe versehende Dispergiermittel in einer Menge von 0,1 bis 10 Gew.-% vorhanden ist, bezogen auf das Gesamtgewicht der Schmierölzusammensetzung, und

(iii) und (iv) die Detergentien in 0,1 bis 20 Gew.-% vorhanden sind, bezogen auf das Gesamtgewicht der Schmierölzusammensetzung, und
(v) der Kammcopolymer-Viskositätsmodifizierer in einer Menge von 0,1 bis 10 Gew.-% vorhanden ist, bezogen auf das Gesamtgewicht der Schmierölzusammensetzung.

**19.** Schmiermittelzusammensetzung nach Anspruch 18, bei der die Schmierölzusammensetzung ferner eine oder mehrere der folgenden Komponenten umfasst:

(D) ein oder mehrere Reibungsmodifizierer, die in einer Menge von 0,01 bis 5 Gew.-% vorhanden sind, bezogen auf das Gesamtgewicht der Schmiermittelzusammensetzung,
(E) ein oder mehrere Antioxidationsmittel, die in einer Menge von 0,01 bis 5 Gew.-% vorhanden sind, bezogen auf das Gesamtgewicht der Schmiermittelzusammensetzung,
(F) ein oder mehrere Pourpoint-Senkungsmittel, die in einer Menge von 0,01 bis 5 Gew.-% vorhanden sind, bezogen auf das Gesamtgewicht der Schmiermittelzusammensetzung,
(G) ein oder mehrere Antischaummittel, die in einer Menge von 0,001 bis 5 Gew.-% vorhanden sind, bezogen auf das Gesamtgewicht der Schmiermittelzusammensetzung,
(H) ein oder mehrere Viskositätsmodifizierer, die von dem Kammcopolymer-Viskositätsmodifizierer (v) unterschiedlich sind und in einer Menge von 0,001 bis 6 Gew.-% vorhanden sind, bezogen auf das Gesamtgewicht der Schmiermittelzusammensetzung,
(I) ein oder mehrere Dispergiermittel, die in einer Menge von 0,01 bis 20 Gew.-% vorhanden sind, bezogen auf das Gesamtgewicht der Schmiermittelzusammensetzung,
(J) ein oder mehrere Inhibitoren und/oder Rostschutzmittel, die in einer Menge von 0,01 bis 5 Gew.-% vorhanden sind, bezogen auf das Gesamtgewicht der Schmiermittelzusammensetzung.

**20.** Schmierölzusammensetzung nach einem der vorstehenden Ansprüche, bei der die Schmierölzusammensetzung ferner eine Polyisobutylensuccinimid-Dispergiermittelzusammensetzung umfasst, die abgeleitet ist von einem ersten Polyamin und einem ersten Polyisobutylen, das ein durchschnittliches Molekulargewicht (Zahlenmittel) von 1200 bis 1400 g/mol aufweist, wobei die Polyisobutylensuccinimid-Dispergiermittelzusammensetzung eine Viskosität von 0,01 bis 0,03 Pa·s bei einer Schergeschwindigkeit von 100 $s^{-1}$, und eine Viskosität von 0,15 Pa·s oder weniger bei einer Schergeschwindigkeit von 10 $s^{-1}$, gemessen mit dem Haake-Ruß-Test mit 9 Gew.-% Ruß, 1 bis 10 $s^{-1}$ und 10 bis 1000 $s^{-1}$ Schergeschwindigkeitsbereichen.

**21.** Schmiermittelzusammensetzung nach einem der vorstehenden Ansprüche, bei der die Schmiermittelzusammensetzung ein Personenkraftfahrzeugmotoröl, ein Leichtdieselmotoröl oder ein Schwerlastdieselmotoröl ist.

**22.** Verfahren zum Schmieren eines Verbrennungsmotors während des Betriebs des Motors, bei dem:

(i) einem Kurbelgehäuse des Verbrennungsmotors eine Schmiermittelzusammensetzung gemäß einem der Ansprüche 1 bis 21 bereitgestellt wird,
(ii) in dem internen Verbrennungsmotor ein Kohlenwasserstoff-erneuerbarer und/oder -alternativer Kraftstoff bereitgestellt wird, und
(iii) der Kraftstoff in dem Verbrennungsmotor verbrannt wird.

**23.** Verfahren nach Anspruch 22, bei dem der interne Verbrennungsmotor ein interner Verbrennungsmotor für Kraftfahrzeuge ist.

**24.** Verfahren nach Anspruch 23, bei dem der interne Verbrennungsmotor ein interner Benzin- oder Diesel-Verbrennungsmotor für Kraftfahrzeuge ist.

**25.** Konzentratzusammensetzung, die umfasst:

(i) weniger als 50 Massen%, bezogen auf das Gewicht der Zusammensetzung, an Basisöl,
(ii) mindestens ein mit Kappungsgruppe versehendes Dispergiermittel, das ein durchschnittliches Molekulargewicht (Zahlenmittel, (Mn)) von weniger als 1600 g/mol aufweist, (iii und iv) mindestens ein magnesiumhaltiges Detergens und mindestens ein calciumhaltiges Detergens, wobei das Verhältnis von Calcium aus dem Detergens zu Magnesium aus dem Detergens 10:1 bis 2:1 ist, und
(v) mindestens einen Kammcopolymer-Viskositätsmodifizierer, der das Reaktionsprodukt mindestens der folgenden Monomere umfasst:

(a) hydriertes Polybutadien-basiertes (Alk)acrylatester-Makromonomer,
(b) $C_3$- bis $C_8$-Alkyl (Alk)acrylatester-Monomer,
(c) $C_{12}$- bis $C_{24}$-Alkyl (Alk)acrylatester-Monomer,
(d) $C_{12}$- bis $C_{24}$-Alkyl-Endkappe tragendes oder $C_6$- bis $C_{20}$-Aryl-, Aralkyl- oder Alkaryl-Endkappe tragendes $C_2$- bis $C_6$-Oxyalkyl- oder $C_2$- bis $C_6$-Oligo(alkylenglycol)-basiertes (Alk)acrylatester-Monomer und/oder Hydroxyalkyl- oder H-Endkappe tragendes Oligo(alkylenglycol)-basiertes (Alk)acrylat-Monomer, das die folgende Struktur (II) aufweist:

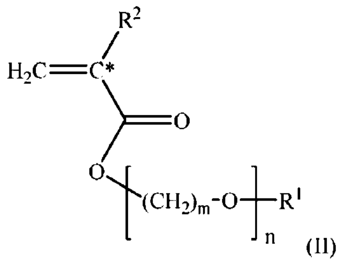
(II)

in der $R^2$ für Wasserstoff oder $C_1$- bis $C_2$-Alkyl steht, m 2 bis 6 ist, so dass $-(CH_2)_m-$für eine lineare, verzweigte, und/oder cyclische Alkylgruppe zwischen Sauerstoffatomen steht, n 1 bis 10 ist und $R^1$ für H, eine $C_1$- bis $C_{18}$- lineare, verzweigte, und/oder cyclische Alkyl-Endkappe oder eine $C_6$- bis $C_{20}$-Aryl-, Aralkyl- oder Alkaryl-Endkappe steht,

wobei die Kombination aus (c) und (d) insgesamt mehr als 20,0 Gew.-% der Wiederholungseinheiten des Kammcopolymer-Viskositätsmodifizierers umfasst, bezogen auf das Gewicht aller Wiederholungseinheiten in dem Copolymer.

**26.** Konzentrat nach Anspruch 25, bei dem das Konzentrat ferner eine oder mehrere der folgenden Komponenten enthält:

(v) Metallalkylthiophosphat, wobei die Alkylgruppe von mindestens einem sekundären Alkohol abgeleitet ist,
(vii) molybdänhaltige Verbindung, und
(viii) Antioxidationsmittel.

**27.** Verwendung der Schmierölzusammensetzung nach einem der Ansprüche 1 bis 21 um eine erhöhte Kraftstoffeffizienz von mehr als 10% Unterschied bei der Verbesserung der Kraftstoffeffizienz im Vergleich zu dem Schmieröl Toyota 0W-8 GLV-1 bereitzustellen, bei welcher Verwendung die Schmierölzusammensetzung gemäß einem der Ansprüche 1 bis 21 in einen internen Verbrennungsmotor eingebracht wird und der Motor betrieben wird.

**28.** Verwendung der Schmierölzusammensetzung nach einem der Ansprüche 1 bis 21 um flache Ölviskositätseigenschaften für eine 0W-20, 0W-16, 0W-12, 0W-8 SAE-Viskositätsformulierung der Schmierölzusammensetzung bereitzustellen.

**29.** Verwendung, bei der Schmierung eines internen Verbrennungsmotors, von mit Kappungsgruppe versehenden Dispergiermittel (ii), wie in einem der Ansprüche 1 bis 21 definiert, und Kammcopolymer-Viskositätsmodifizierer (v), wie in einem der Ansprüche 1 bis 21 definiert, als Kombination von Additiven in einer Schmierölzusammensetzung, um eine verbesserte Kraftstoffeffizienz während des Betriebs des Motors bereitzustellen, wobei die Schmierölzusammensetzung mindestens 50 Massen% umfasst, bezogen auf das Gewicht der Schmierölzusammensetzung, Basisöl (i), mindestens eines magnesiumhaltigen Detergens (iii) und mindestens eines calciumhaltigen Detergens (iv).

## Revendications

**1.** Composition d'huile lubrifiante comportant ou résultant de l'addition de :

(i) au moins 50 % en masse, par rapport au poids de la composition d'huile lubrifiante, d'huile de base,
(ii) au moins un dispersant coiffé dérivé d'un polymère ayant un poids moléculaire moyen en nombre (Mn) inférieur à 1600 g/mol,

(iii) au moins un détergent contenant du magnésium,
(iv) au moins un détergent contenant du calcium,
(v) au moins un modificateur de viscosité de copolymère en peigne comportant le produit réactionnel d'au moins les monomères suivants :

(a) un macromonomère d'ester d' (alk)acrylate à base de polybutadiène hydrogéné ;
(b) un monomère d'ester d' (alk)acrylate $C_3$-$C_8$ alkyle ;
(c) un monomère d'ester d' (alk)acrylate $C_{12}$-$C_{24}$ alkyle ;
et
(d) un monomère d'ester d' (alk)acrylate à base de $C_2$-$C_6$ oxyalkyle à coiffe d'extrémité $C_1$-$C_{18}$ alkyle ou à coiffe d'extrémité $C_6$-$C_{20}$ aryle, aralkyle ou alkaryle ou de $C_2$-$C_6$ oligo(alkylène glycol) et/ou monomère d' (alk)acrylate à base d'oligo(alkylène glycol) à coiffe d'extrémité hydroxyalkyle ou H ayant la structure suivante (II) :

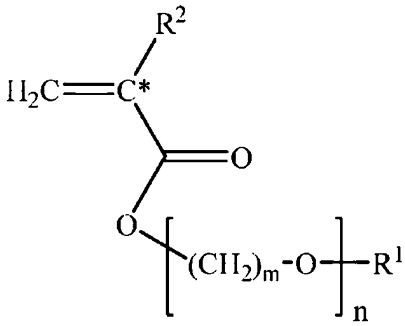
(II)

dans laquelle $R^2$ représente de l'hydrogène ou $C_1$-$C_2$ alkyle, m est de 2 à 6, de sorte que $-(CH_2)_m-$ représente un groupe alkyle linéaire, ramifié, et/ou cyclique entre les oxygènes, n est de 1 à 10, et $R^1$ représente H, une coiffe d'extrémité $C_1$-$C_{18}$ alkyle linéaire, ramifiée, et/ou cyclique ou une coiffe d'extrémité $C_6$-$C_{20}$ aryle, aralkyle ou alkaryle,
dans laquelle la combinaison de (c) et (d) comporte collectivement plus de 20,0 % en poids d'unités de répétition du modificateur de viscosité de copolymère en peigne, par rapport au poids de toutes les unités de répétition dans le copolymère.

**2.** Composition d'huile lubrifiante selon la revendication 1, dans laquelle le dispersant coiffé (ii) est représenté par la formule suivante :

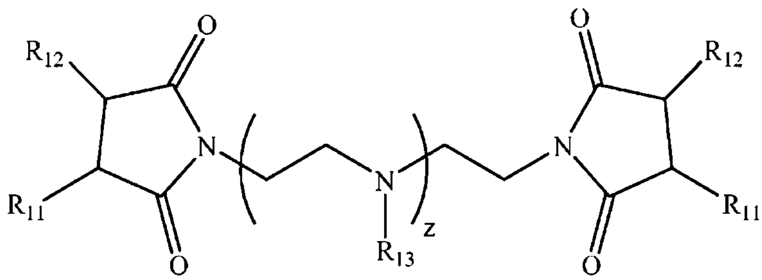

dans laquelle chaque $R_{11}$ et $R_{12}$ est individuellement de l'hydrogène ou un groupe hydrocarbyle, à condition que $R_{11}$ et $R_{12}$ reliés au même cycle succinimide ne soient pas tous deux de l'hydrogène ; z est un nombre entier de 0 à 10 ; et chaque $R_{13}$ est individuellement un groupe acétyle, ou dans laquelle deux groupes $R_{13}$ proches reliés à différents atomes d'azote peuvent se relier ensemble.

**3.** Composition d'huile lubrifiante selon la revendication 2, dans laquelle deux groupes R13 proches dans le dispersant coiffé (ii) se relient ensemble à l'aide d'un pont éthylène pour former un groupe pipérazinyle.

**4.** Composition d'huile lubrifiante selon la revendication 3, dans laquelle z est un nombre entier de 1 à 8.

**5.** Composition d'huile lubrifiante selon l'une quelconque des revendications précédentes, dans laquelle le dispersant coiffé est un dispersant coiffé de carbonate d'éthylène dérivé du polyisobutylène ayant un Mn de 800 à moins de 1600 g/mol.

**6.** Composition d'huile lubrifiante selon la revendication 5, dans laquelle le dispersant coiffé de carbonate d'éthylène est dérivé du polyisobutylène ayant un Mn de 1200 à 1400 g/mol.

**7.** Composition d'huile lubrifiante selon l'une quelconque des revendications 1 à 4, dans laquelle le dispersant coiffé est un polyisobutylène succinimide coiffé de carbonate d'éthylène dérivé du polyisobutylène ayant un poids moléculaire moyen en nombre de 1200 à 1400 g/mol et de polyamine.

**8.** Composition d'huile lubrifiante selon l'une quelconque des revendications précédentes, dans laquelle le modificateur de viscosité de copolymère en peigne (v) est un modificateur de viscosité de copolymère en peigne de polyméthacrylate réalisé par polymérisation d'au moins les monomères suivants :

(a) un macromonomère d'ester d' (alk)acrylate à base de polybutadiène hydrogéné ;
(b) un monomère d'ester d' (alk)acrylate $C_3$-$C_8$ alkyle ;
(c) un monomère d'ester d' (alk)acrylate $C_{12}$-$C_{24}$ alkyle ;
et
(d) un monomère d'ester d' (alk)acrylate à base de $C_2$-$C_6$ oxyalkyle à coiffe d'extrémité $C_6$-$C_{20}$ aryle, aralkyle ou alkaryle ou de $C_2$-$C_6$ oligo(alkylène glycol) ayant la structure suivante (II) :

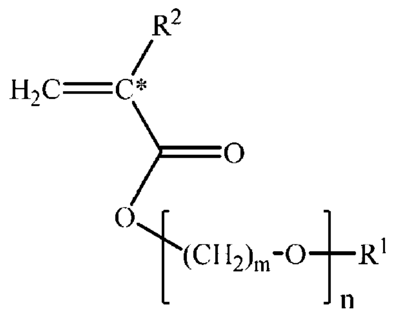

(II)

dans laquelle $R^2$ représente de l'hydrogène ou $C_1$-$C_2$ alkyle, m est de 2 à 6, de sorte que $-(CH_2)_m-$ représente un groupe alkyle linéaire, ramifié, et/ou cyclique entre les oxygènes, n est de 1 à 10, et $R^1$ représente une coiffe d'extrémité $C_6$-$C_{20}$ aryle, aralkyle, ou alkaryle,
dans laquelle :

1) les (c) unités de répétition de monomère d'ester d' (alk)acrylate $C_{12}$-$C_{24}$ alkyle sont présentes à 16 à moins de 21 % en poids, par rapport au poids de toutes les unités de répétition dans le copolymère,
2) les (d) unités de répétition de monomère d'ester d' (alk)acrylate à base de $C_2$-$C_6$ oxyalkyle à coiffe d'extrémité $C_6$-$C_{20}$ aryle, aralkyle ou alkaryle ou de $C_2$-$C_6$ oligo(alkylène glycol) sont présentes à 3 à 7 % en poids, par rapport au poids de toutes les unités de répétition dans le copolymère, et
3) la combinaison de (c) et (d) comportent collectivement plus de 20,0 % en poids d'unités de répétition du modificateur de viscosité de copolymère en peigne, par rapport au poids de toutes les unités de répétition dans le copolymère.

**9.** Composition d'huile lubrifiante selon la revendication 8 dans laquelle le modificateur de viscosité de copolymère en peigne de polyméthacrylate est réalisé par polymérisation d'au moins les monomères suivants :

(a) un macromonomère d'ester d' (alk)acrylate à base de polybutadiène hydrogéné ;
(b) du méthacrylate de butyle ;
(c) du méthacrylate de lauryle ; et
(d) un monomère d'ester d' (alk)acrylate à base de $C_2$-$C_6$ oxyalkyle à coiffe d'extrémité $C_6$-$C_{20}$ aryle, aralkyle ou alkaryle ou de $C_2$-$C_6$ oligo(alkylène glycol) ayant la structure suivante (II) :

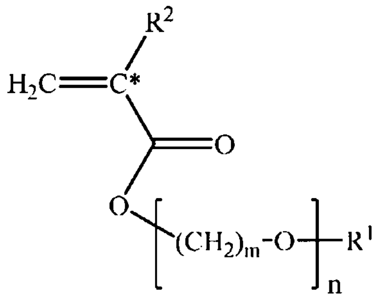

(II)

dans laquelle $R^2$ représente de l'hydrogène ou $C_1$-$C_2$ alkyle, m est de 2 à 6, de sorte que $-(CH_2)_m-$ représente un groupe alkyle linéaire, ramifié, et/ou cyclique entre les oxygènes, n est de 1 à 10, et $R^1$ représente une coiffe d'extrémité $C_6$-$C_{20}$ aryle, aralkyle, ou alkaryle,
dans laquelle :

1) les (c) unités de répétition de monomère de méthacrylate de lauryle sont présentes à 16,5 à moins de 20 % en poids, par rapport au poids de toutes les unités de répétition dans le copolymère,
2) les (d) unités de répétition de monomère d'ester d' (alk)acrylate à base de $C_2$-$C_6$ oxyalkyle à coiffe d'extrémité $C_6$-$C_{20}$ aryle, aralkyle ou alkaryle ou de $C_2$-$C_6$ oligo(alkylène glycol) sont présentes à 3 à 7 % en poids, par rapport au poids de toutes les unités de répétition dans le copolymère, et
3) la combinaison de (c) et (d) comportent collectivement plus de 20,0 % en poids d'unités de répétition du modificateur de viscosité de copolymère en peigne, par rapport au poids de toutes les unités de répétition dans le copolymère.

**10.** Composition d'huile lubrifiante selon l'une quelconque des revendications 2 à 9, dans laquelle l'huile de base du groupe III présente un KV140 de 2 cSt, un KV20 de 44 cSt et un KV70 de 19 cSt (ASTM D445).

**11.** Composition d'huile lubrifiante selon l'une quelconque des revendications précédentes, comportant en outre un alkylthiophosphate métallique dans laquelle le groupe alkyle est dérivé d'au moins un alcool secondaire.

**12.** Composition d'huile lubrifiante selon la revendication 11, dans laquelle le groupe alkyle du métal alkylthiophosphate est dérivé d'au moins un alcool primaire et d'au moins un alcool secondaire.

**13.** Composition d'huile lubrifiante selon la revendication 11, dans laquelle l'alkylthiophosphate métallique comporte un ou plusieurs dialkyldithiophosphates de zinc, dans laquelle les groupes alkyle sont au moins partiellement dérivés d'alcools secondaires ou de mélanges d'alcools primaires et secondaires.

**14.** Composition d'huile lubrifiante selon la revendication 11, dans laquelle l'alkylthiophosphate métallique est représenté par la formule $Zn[SP(S)(OR_1)(OR_2)]_2$ dans laquelle $R_1$ et $R_2$ sont chacun, individuellement, des groupes $C_1$-$C_{18}$ alkyle.

**15.** Composition d'huile lubrifiante selon la revendication 14, dans laquelle un, deux, trois et/ou quatre de $R_1$ et $R_2$ sont des groupes $C_2$-$C_{12}$ alkyle secondaires.

**16.** Composition d'huile lubrifiante selon l'une quelconque des revendications précédentes, dans laquelle la composition d'huile lubrifiante présente :

a) une volatilité, telle que mesurée par le test de Noack (ASTM D5800, procédure B), inférieure ou égale à 30 % en masse, par rapport à la masse totale de la composition lubrifiante ; et/ou
b) un rapport du calcium des détergents au magnésium des détergents de 10:1 à 2:1 ; et/ou
c) une teneur totale en savon inférieure à 30 mmol.

**17.** Composition lubrifiante selon l'une quelconque des revendications précédentes, dans laquelle la composition d'huile lubrifiante comporte en outre un ou plusieurs des composants suivants :

(D) un ou plusieurs modificateurs de friction ;
(E) un ou plusieurs antioxydants ;

(F) un ou plusieurs abaisseurs de point d'écoulement ;
(G) un ou plusieurs agents antimousse ;
(H) un ou plusieurs modificateurs de viscosité autres que le copolymère en peigne de (v) ;
(I) un ou plusieurs dispersants ;
(J) un ou plusieurs inhibiteurs et/ou agents antirouille ; et/ou
(K) un ou plusieurs agents anti-usure.

**18.** Composition lubrifiante selon l'une quelconque des revendications précédentes, dans laquelle :

(i) l'huile de base est présente à 50 à 99 % en masse par rapport au poids de la composition d'huile lubrifiante ; et
(ii) le dispersant coiffé est présent à 0,1 à 10 % en poids, par rapport au poids total de la composition d'huile lubrifiante ; et
(iii) et (iv) les détergents sont présents à 0,1 à 20 % en poids, par rapport au poids total de la composition d'huile lubrifiante ; et
(v) le modificateur de viscosité de copolymère en peigne est présent à 0,1 à 10 % en poids, par rapport au poids total de la composition d'huile lubrifiante.

**19.** Composition lubrifiante selon la revendication 18, dans laquelle la composition d'huile lubrifiante comporte en outre un ou plusieurs des composants suivants :

(D) un ou plusieurs modificateurs de friction présents à 0,01 à 5 % en poids, par rapport au poids total de la composition lubrifiante ;
(E) un ou plusieurs antioxydants présents à 0,01 à 5 % en poids, par rapport au poids total de la composition lubrifiante ;
(F) un ou plusieurs abaisseurs de point d'écoulement présents à 0,01 à 5 % en poids, par rapport au poids total de la composition lubrifiante ;
(G) un ou plusieurs agents antimousse présents à 0,001 à 5 % en poids, par rapport au poids total de la composition lubrifiante ;
(H) un ou plusieurs modificateurs de viscosité autres que le modificateur de viscosité de copolymère en peigne (v) présent de 0,001 à 6 % en poids, par rapport au poids total de la composition lubrifiante ;
(I) un ou plusieurs dispersants présents à 0,01 à 20 % en poids, par rapport au poids total de la composition lubrifiante ;
(J) un ou plusieurs inhibiteurs et/ou agents antirouille sont présents à 0,01 à 5 % en poids, par rapport au poids total de la composition lubrifiante.

**20.** Composition d'huile lubrifiante selon l'une quelconque des revendications précédentes, dans laquelle la composition d'huile lubrifiante comporte en outre une composition de dispersant de succinimide de polyisobutylène dérivée d'une première polyamine et d'un premier polyisobutylène ayant un poids moléculaire moyen en nombre de 1200 à 1400 g/mol, ladite composition de dispersant de succinimide de polyisobutylène ayant une viscosité de 0,01 à 0,03 Pa.s à un taux de cisaillement de 100 $sec^{-1}$, et une viscosité de 0,15 Pa.s ou moins à un taux de cisaillement de 10 $s^{-1}$ tel que mesuré à l'aide du test de noir de carbone de Haake 9 % en poids de noir de carbone, des plages de taux de cisaillement de 1 à 10 $s^{-1}$ et de 10 à 1000 $s^{-1}$.

**21.** Composition lubrifiante selon l'une quelconque des revendications précédentes, dans laquelle la composition lubrifiante est une huile moteur de voiture particulière, une huile moteur diesel légère ou une huile moteur diesel lourde.

**22.** Procédé de lubrification d'un moteur à combustion interne pendant le fonctionnement du moteur comportant :

(i) la fourniture à un carter du moteur à combustion interne de la composition lubrifiante selon l'une quelconque des revendications 1 à 21 ;
(ii) la fourniture d'un hydrocarbure, carburant renouvelable et/ou alternatif dans le moteur à combustion interne ; et
(iii) la combustion du carburant dans le moteur à combustion interne.

**23.** Procédé selon la revendication 22, dans lequel le moteur à combustion interne est un moteur à combustion interne automobile.

**24.** Procédé selon la revendication 23, dans lequel le moteur à combustion interne est un moteur à combustion interne automobile essence ou diesel.

**25.** Composition concentrée comportant :

(i) moins de 50 % en masse, par rapport au poids de la composition, d'huile de base,
(ii) au moins un dispersant coiffé, ayant un poids moléculaire moyen en nombre (Mn) inférieur à 1600 g/mol, ;
(iii et iv) au moins un détergent contenant du magnésium et au moins un détergent contenant du calcium où le rapport du calcium du détergent au magnésium du détergent est de 10:1 à 2:1, et
(v) au moins un modificateur de viscosité de copolymère en peigne comportant le produit réactionnel d'au moins les monomères suivants :

(a) un macromonomère d'ester d' (alk)acrylate à base de polybutadiène hydrogéné ;
(b) un monomère d'ester d' (alk)acrylate $C_3$-$C_8$ alkyle ;
(c) un monomère d'ester d' (alk)acrylate $C_{12}$-$C_{24}$ alkyle ;
(d) un monomère d'ester d' (alk)acrylate à base de $C_2$-$C_6$ oxyalkyle à coiffe d'extrémité $C_1$-$C_{18}$ alkyle ou à coiffe d'extrémité $C_6$-$C_{20}$ aryle, aralkyle ou alkaryle ou de $C_2$-$C_6$ oligo(alkylène glycol) et/ou monomère d' (alk)acrylate à base d'oligo(alkylène glycol) à coiffe d'extrémité hydroxyalkyle ou H ayant la structure suivante (II) :

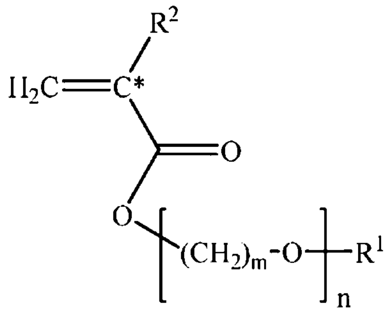
(II)

dans laquelle $R^2$ représente de l'hydrogène ou $C_1$-$C_2$ alkyle, m est de 2 à 6, de sorte que $-(CH_2)_m-$ représente un groupe alkyle linéaire, ramifié, et/ou cyclique entre les oxygènes, n est de 1 à 10, et $R^1$ représente H, une coiffe d'extrémité $C_1$-$C_{18}$ alkyle linéaire, ramifiée, et/ou cyclique ou une coiffe d'extrémité $C_6$-$C_{20}$ aryle, aralkyle ou alkaryle,
dans laquelle la combinaison de (c) et (d) comporte collectivement plus de 20,0 % en poids d'unités de répétition du modificateur de viscosité de copolymère en peigne, par rapport au poids de toutes les unités de répétition dans le copolymère.

**26.** Concentré selon la revendication 25, dans lequel le concentré inclut en outre un ou plusieurs des composants suivants :

(vi) un alkylthiophosphate métallique où le groupe alkyle est dérivé d'au moins un alcool secondaire ;
(vii) un composé contenant du molybdène ; et
(viii) de l'antioxydant.

**27.** Utilisation de la composition d'huile lubrifiante selon l'une quelconque des revendications 1 à 21 pour fournir une économie de carburant accrue de plus de 10 % d'amélioration de l'économie de carburant par rapport à l'huile lubrifiante Toyota 0W-8 GLV-1, comportant l'introduction de la composition d'huile lubrifiante selon l'une quelconque des revendications 1 à 21 dans un moteur à combustion interne, et le fonctionnement dudit moteur.

**28.** Utilisation de la composition d'huile lubrifiante selon l'une quelconque des revendications 1 à 21 pour fournir des propriétés de viscosité d'huile plate à une formulation de viscosité SAE 0W-20, 0W-16, 0W-12, 0W-8 de la composition d'huile lubrifiante.

**29.** Utilisation, dans la lubrification d'un moteur à combustion interne, d'un dispersant coiffé (ii), tel que défini dans une quelconque des revendications 1 à 21, et d'un modificateur de viscosité de copolymère en peigne (v), tel que défini

dans une quelconque des revendications 1 à 21, comme combinaison d'additifs dans une composition d'huile lubrifiante pour fournir une économie de carburant améliorée pendant le fonctionnement du moteur, dans laquelle la composition d'huile lubrifiante comporte au moins 50 % en masse, par rapport au poids de la composition d'huile lubrifiante, d'une huile de base (i), au moins un détergent contenant du magnésium (iii), et au moins un détergent contenant du calcium (iv).

Figure 1. (Fig. 1)

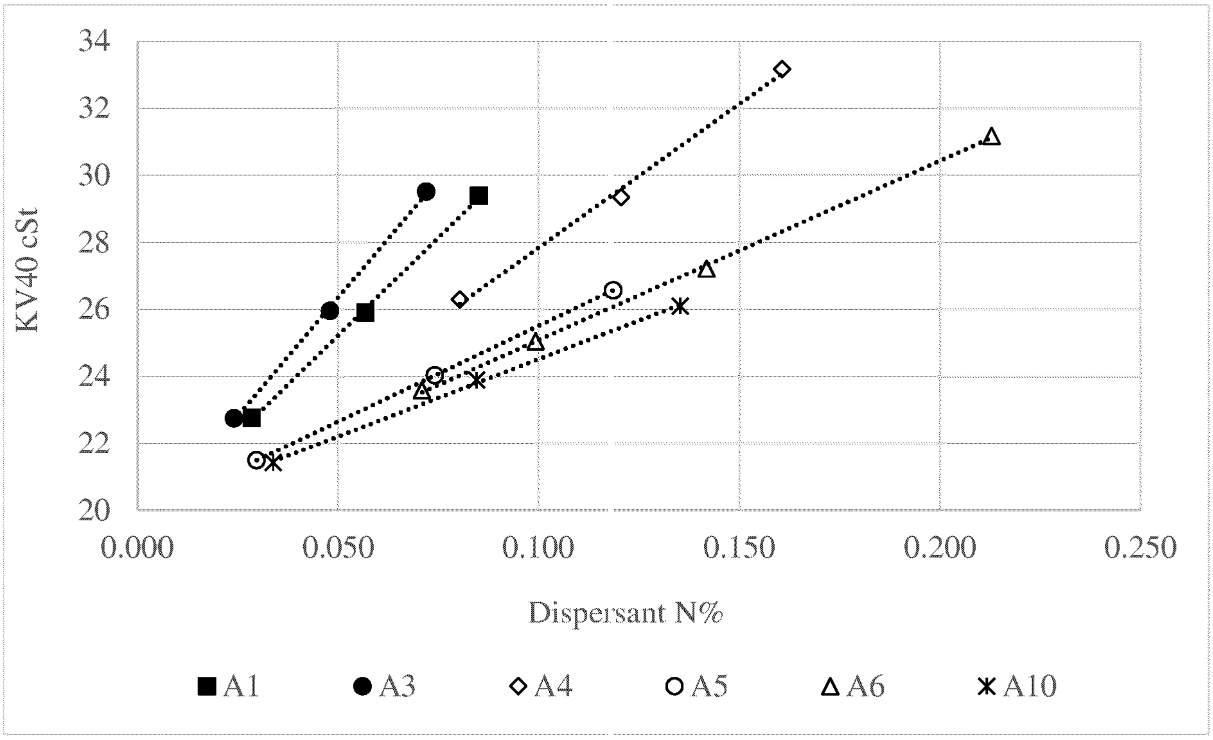


Figure 2.

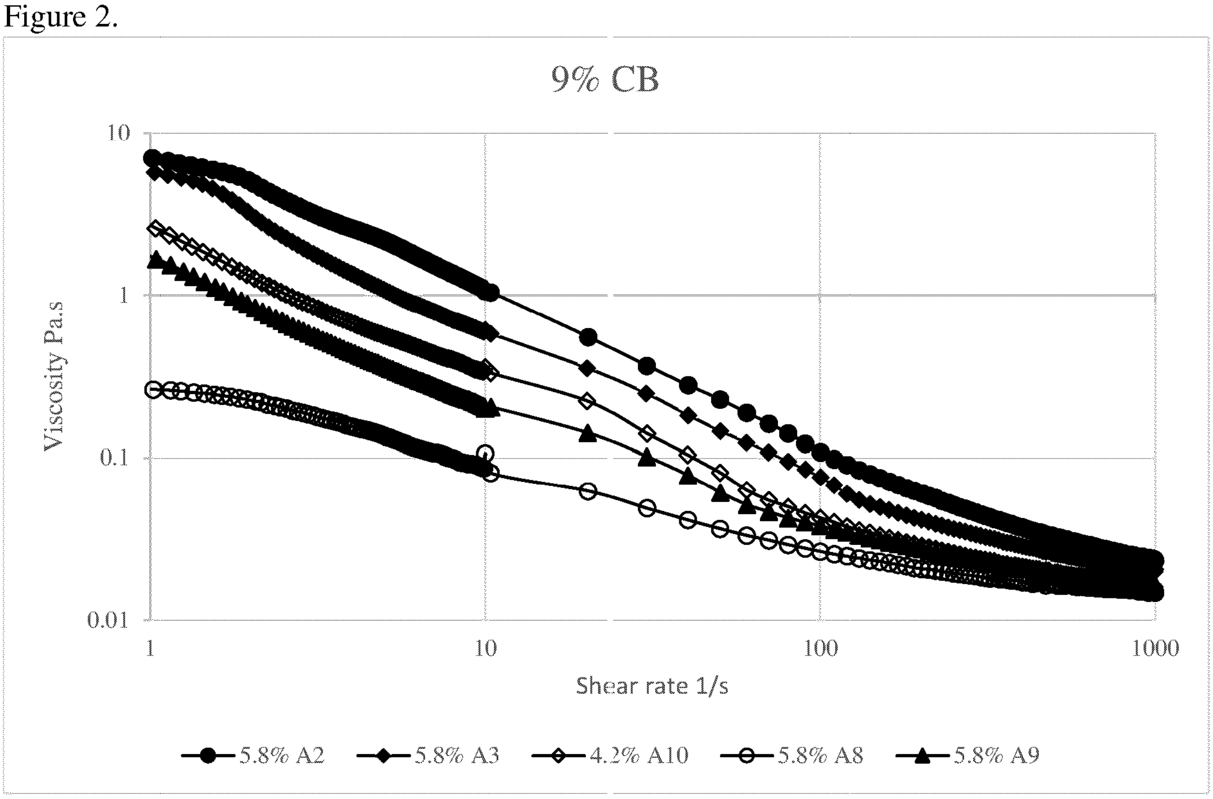

Figure 3 (Fig. 3)

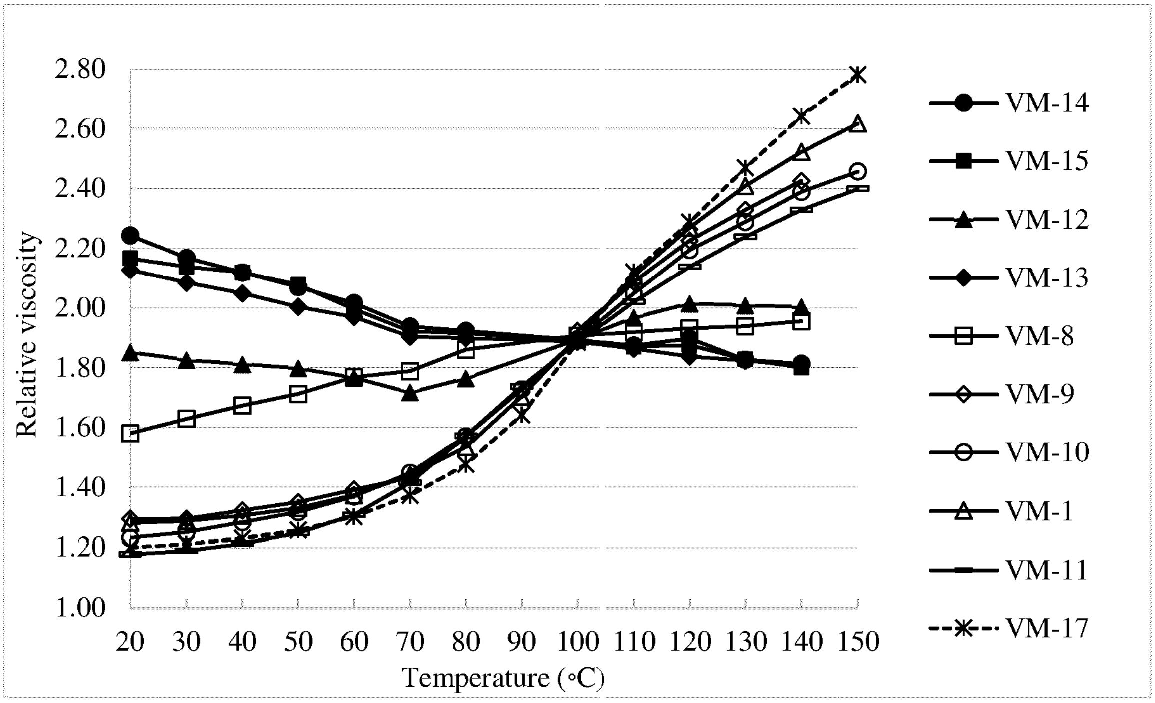


**Figure 4 (Fig. 4)**

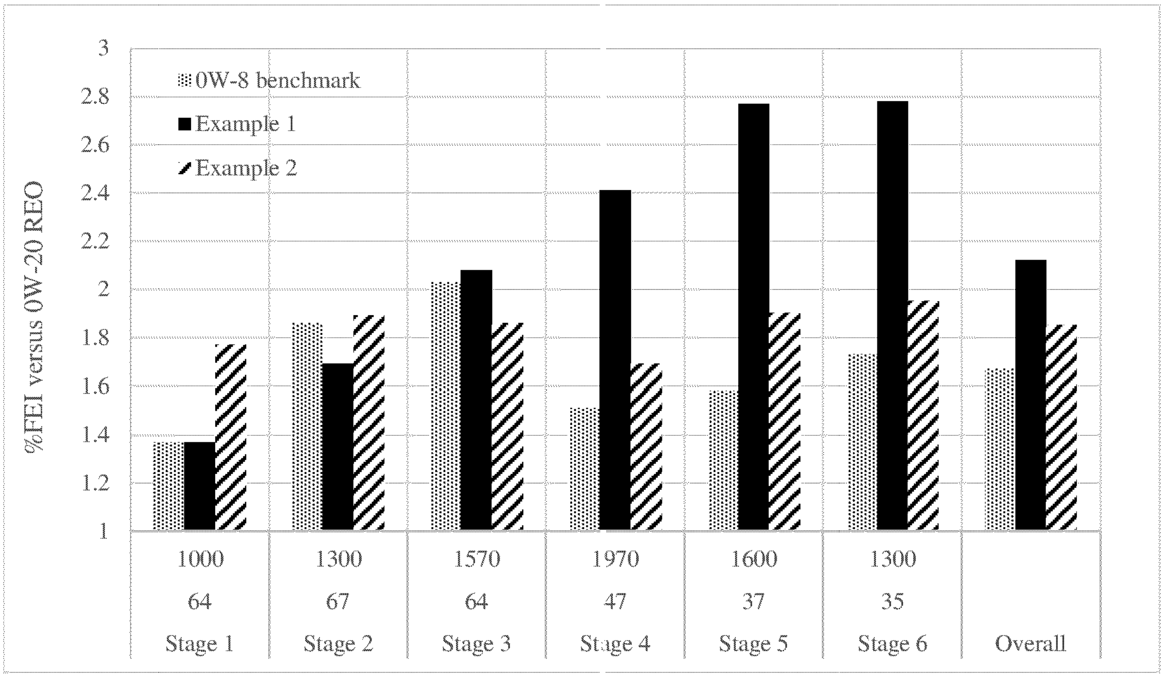

Figure 5 (Fig. 5)

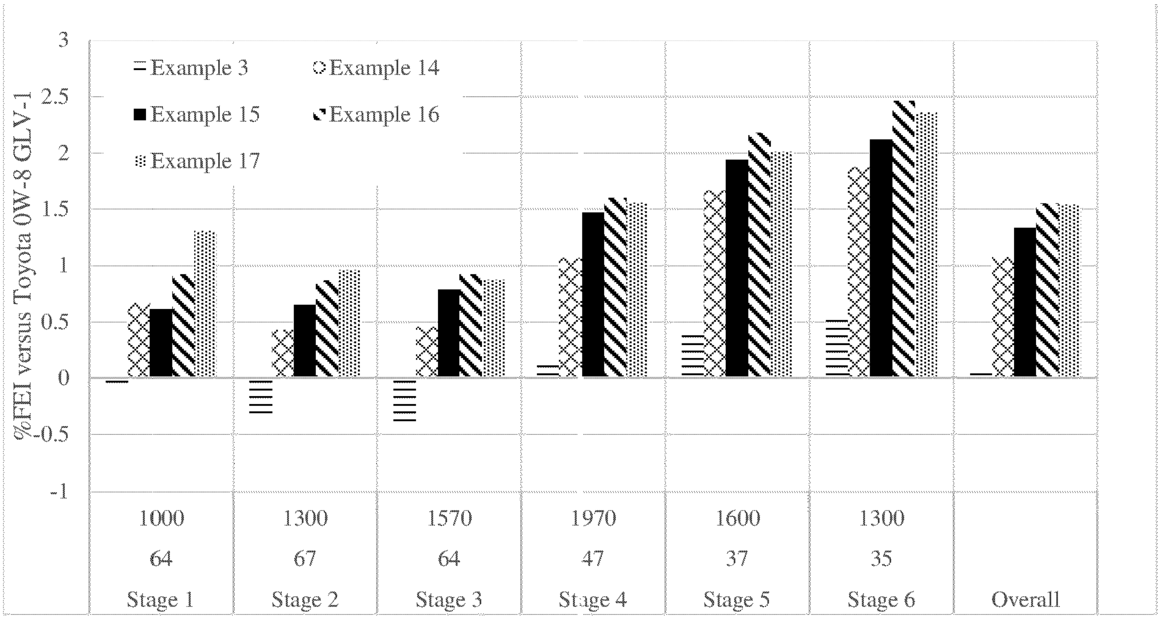

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20210189281 A
- US 20210179961 A
- US 20210179960 A
- US 11384311 B
- US 20210179965 A
- US 11365273 B
- JP 2023004932 A
- JP 2022120328 A
- JP 2022022996 A
- JP 2022022491 A
- WO 2022210065 A1
- WO 2022201845 A1
- US 20100160192 A
- US 8901050 B
- US 10407640 B
- US 3702300 A
- US 8324139 B
- US 8455568 B
- US 8927469 B
- US 10179886 B
- US 10174272 B
- US 11390825 B
- US 20180334635 A
- EP 0969077 A
- EP 0637332 A
- EP 0937769 A
- EP 0979834 A
- US 2018119048 A
- US 5171908 A
- US 5783531 A
- US 10913916 B
- US 10781397 B
- US 4115206 A
- US 4384115 A
- US 4423205 A
- US 11685874 B
- GB 2270317 A
- EP 0621293 A
- EP 0699694 A
- US 5756433 A
- EP 0744457 A
- US 6429178 B
- US 6429179 B
- US 6153565 A
- US 6281179 B
- US 2005065045
- US 7407919 B
- WO 9826030 A
- US 10829712 B
- US 4702850 A
- US 4798684 A
- US 5084197 A
- US 8048833 B
- US 10731101 B
- US 1815022 A
- US 2015748 A
- US 2191498 A
- US 2387501 A
- WO 2655479 A
- US 2666746 A
- US 2721877 A
- US 2721878 A
- US 3250715 A
- US 20210189283
- US 3172892 A
- US 32145707 B
- US 3219666 A
- US 3316177 A
- US 3341542 A
- US 3444170 A
- US 3454607 A
- US 3541012 A
- US 3630904 A
- US 3632511 A
- US 3787374 A
- US 4234435 A
- US 3036003 A
- US 3200107 A
- US 3254025 A
- US 3275554 A
- US 3438757 A
- US 3454555 A
- US 3565804 A
- US 3413347 A
- US 3697574 A
- US 3725277 A
- US 3725480 A
- US 3726882 A
- US 4454059 A
- US 3329658 A
- US 3449250 A
- US 3519565 A
- US 3666730 A
- US 3687849 A
- US 4100082 A
- US 5705458 A
- EP 0471071 A
- EP 0451380 A

- US 4873009 A
- US 3087936 A
- US 3272746 A
- US 3322670 A
- US 3652616 A
- US 3948800 A
- US 6821307 B
- CA 1094044
- US 4426305 A
- US 7485603 B
- US 4767551 A
- US 10899986 B
- US 3703536 A
- US 3704308 A
- US 3751365 A
- US 3756953 A
- US 3798165 A
- US 3803039 A
- US 4231759 A
- US 9938479 B
- US 7491248 B
- WO 0142399 A
- US 2100993 A
- US 6323164 B
- WO 2019236441 A
- US 2719125 A
- US 2719126 A
- US 3087937 A
- US 2760933 A
- US 2836564 A
- US 3663561 A
- EP 330522 A
- US 20090203559 A


**Non-patent literature cited in the description**


- **YAMAMORI, K. et al.** Research on Ultra-High Viscosity Index Engine Oil Part 1-''Flat Viscosity' Concept and Contribution to Carbon Neutrality. *SAE Technical Paper 2022-01-0525*, 2022
- **KOYAMA, T. et al.** Research on Ultra-High Viscosity Index Engine Oil: Part 2 - Influence of Engine Oil Evaporation Characteristics on Oil Consumption of Internal Combustion Engines. *SAE Technical Paper 2022-01-0524*, 2022
- **J. BARTZ**. Additive für Schmierstoffe [Additives for Lubricants. Expert-Verlag, 1994, 197-252
- *CHEMICAL AND ENGINEERING NEWS*, 1985, vol. 63 (5), 27
- Synthetic Lubricants and High-Performance Functional Fluids 1-52. Marcel Dekker, Inc., 1999
- American Petroleum Institute Publication 1509. January 2021
- Kirk-Othmer Encyclopedia of Chemical Technology, vol. 14, 477-526
- **M. BELZER**. *Journal of Tribology*, 1992, vol. 114, 675-682
- **M. BELZER** ; **S. JAHANMIR**. *Lubrication Science*, 1988, vol. 1, 3-26
- Lubricants and Related Products, Klamann. Wiley VCH, 1984
- **YAMAMORI, K. et al.** Research on Ultra-High Viscosity Index Engine Oil Part 1-'Flat Viscosity' Concept and Contribution to Carbon Neutrality. *SAE Technical Paper*, 2022